(19) Europäisches Patentamt
European Patent Office
Office européen des brevets

(11) **EP 4 579 307 A1**

(12) **EUROPEAN PATENT APPLICATION**
published in accordance with Art. 153(4) EPC

(43) Date of publication:
**02.07.2025 Bulletin 2025/27**

(21) Application number: **23910246.0**

(22) Date of filing: **18.12.2023**

(51) International Patent Classification (IPC):
***G02B 13/00*** *(2006.01)*

(52) Cooperative Patent Classification (CPC):
**G02B 13/00; G02B 13/18; G02B 13/22; G02B 13/24; G03B 30/00**

(86) International application number:
**PCT/CN2023/139655**

(87) International publication number:
**WO 2024/140316 (04.07.2024 Gazette 2024/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.12.2022 CN 202211697922**

(71) Applicant: **Huawei Technologies Co., Ltd.**
**Shenzhen, Guangdong 518129 (CN)**

(72) Inventors:
- **ZHANG, Kaiyuan**
  **Shenzhen, Guangdong 518129 (CN)**
- **ZHANG, Yi**
  **Shenzhen, Guangdong 518129 (CN)**

(74) Representative: **Grünecker Patent- und Rechtsanwälte**
**PartG mbB**
**Leopoldstraße 4**
**80802 München (DE)**

(54) **LENS ASSEMBLY, CAMERA MODULE AND ELECTRONIC DEVICE**

(57) A lens assembly (210), a camera module (20), and an electronic device (100) are provided. The lens assembly (210) includes a first lens (21), a second lens group (22), and a third lens group (23). When the lens assembly (210) is switched from an infinity state to a macro state, the second lens group (22) moves towards an object side by a preset distance (L) along an optical axis direction, to implement a macro function. A focal length f1 of the first lens (21) and a focal length EFL1 of the lens assembly (210) in the infinity state satisfy 1<|f1/EFL1|<2, so that a wide aperture design can be implemented, and a requirement of an infinity image shooting scene can be satisfied. In addition, the macro function with a high magnification and a high resolution can be implemented, to satisfy a requirement of a macro image shooting scene and improve image shooting effect and imaging quality of the camera module (20).

[FIG. 3]

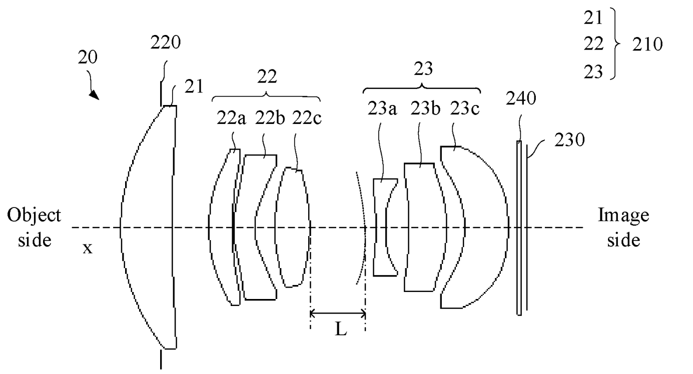


EP 4 579 307 A1

## Description

This application claims priority to Chinese Patent Application No. 202211697922.3, filed with the China National Intellectual Property Administration on December 28, 2022 and entitled "LENS ASSEMBLY, CAMERA MODULE, AND ELECTRONIC DEVICE", which is incorporated herein by reference in its entirety.

TECHNICAL FIELD

This application relates to the field of electronic device technologies, and in particular, to a lens assembly, a camera module, and an electronic device.

BACKGROUND

A camera module has become an indispensable functional assembly in an electronic product such as a mobile phone, a tablet, a notebook computer, or a wearable device. With multifunction development of the electronic device, image shooting effect and an image shooting requirement of the electronic device are increasingly aligned with those of a single-lens reflex camera. Functional effect of the camera module gradually becomes one of important features of the electronic device.

The camera module usually includes a lens assembly and an image sensor. The lens assembly is usually formed by a plurality of lenses sequentially arranged along an optical axis direction. Light is projected to the image sensor after passing through the lens assembly, to implement optical-to-electrical conversion for imaging. Therefore, performance of the lens assembly directly determines imaging performance of the camera module. Due to pursuit of image shooting effect, there is an increasingly high requirement on an aperture of the lens assembly and an image shooting scene. For example, in a dark or night image shooting environment, when shooting a distant object, for example, in an infinity image shooting scene for a distant scene, a lens needs a wide aperture, to increase an amount of incoming light, thereby achieving better image shooting effect. However, in a macro image shooting scene for a near scene, for example, when a near object such as a flower, a doll, or an insect is shot, a better magnification and resolution are pursued to implement image shooting effect of details of the object in the macro scene.

Therefore, a lens assembly is urgently needed to implement a wide aperture design, satisfy a requirement of an infinity image shooting scene, and have a high magnification and a high resolution, thereby implementing good image shooting effect in a macro scene.

SUMMARY

This application provides a lens assembly, a camera module, and an electronic device. The lens assembly implements a wide aperture design to satisfy a requirement of an infinity image shooting scene, implements a macro image shooting function with a high magnification and a high resolution, and has a small size and low costs.

A first aspect of this application provides a lens assembly, including a first lens, a second lens group, and a third lens group that are sequentially arranged from an object side to an image side along an optical axis direction. The second lens group includes a plurality of sequentially arranged second lenses. The third lens group includes a plurality of sequentially arranged third lenses.

A focal length f1 of the first lens and a focal length EFL1 of the lens assembly in the infinity state satisfy a conditional expression: $1<|f1/EFL1|<2$. The constructed lens assembly has a small f-number F#. A wide aperture design can be implemented, and a luminous flux of the lens assembly can be increased, to satisfy a requirement of an infinity image shooting scene (especially a dark or night image shooting scene) and improve image shooting effect and imaging quality.

The second lens group is movable along the optical axis direction. When the lens assembly is switched from an infinity state to a macro state, the second lens group moves towards the object side by a preset distance along the optical axis direction. A distance between the second lens group and each of the first lens and the third lens group is changed, to change the focal length of the entire lens assembly and improve a magnification of the lens assembly. In addition, due to a wide aperture design of the entire lens assembly, a resolution of the lens assembly can be effectively improved, to implement a macro function with a high magnification and a high resolution and satisfy a requirement of a macro image shooting scene, thereby further improving image shooting effect and imaging quality of a camera module.

In addition, an architecture of the entire lens assembly is formed by one first lens, one second lens group, and one third lens group. A quantity of lenses is small. This helps reduce a total track length of the entire lens assembly and helps implement a small-size design of the lens assembly and the camera module, thereby helping reduce the costs.

In a possible implementation, a focal length f2 of the second lens group and the focal length EFL1 of the lens assembly in the infinity state satisfy a conditional expression: $0.3<|f2/EFL1|<1$. The focal power of the second lens group is appropriately allocated, to further implement the wide aperture design of the lens assembly and improve the imaging quality of the lens assembly.

In a possible implementation, a focal length f3 of the third lens group and the focal length EFL1 of the lens assembly in the infinity state satisfy a conditional expression: $0.2<|f3/EFL1|<3$. The focal power of the third lens group is appropriately allocated, to help further implement the wide aperture design of the lens assembly and improve the imaging quality of the lens assembly.

In a possible implementation, the first lens has a positive focal power, the second lens group has a positive focal power, and the third lens group has a negative focal power. A focal power is further appropriately allocated, to satisfy the wide aperture design of the lens assembly and help improve the resolution of the lens assembly. In this way, a high resolution in the macro state is ensured, and imaging quality is improved.

In a possible implementation, an f-number F# of the lens assembly in the infinity state satisfies a conditional expression: $1.0 \leq F\# \leq 4.0$. In a case of a small f-number, a requirement of the wide aperture design of the lens assembly is satisfied, and imaging quality in an image shooting scene in the infinity state is ensured.

In a possible implementation, an f-number F# of the lens assembly in the macro state satisfies a conditional expression: $1.8 \leq F\# \leq 4.0$. The lens assembly has a small f-number. The resolution of the lens assembly is improved, and the imaging quality in the image shooting scene in the macro state is ensured.

In a possible implementation, a magnification Mag of the lens assembly in the macro state satisfies a conditional expression: $0.1x<Mag<1.0x$. The lens assembly has a high magnification. An image shooting requirement in the macro state is satisfied, and the imaging quality in the macro state is improved.

In a possible implementation, the focal length EFL1 of the lens assembly in the infinity state and a total track length TTL of the lens assembly in the infinity state satisfy a conditional expression: $0.7<EFL1/TTL<1$. The lens assembly has a small total track length. This helps implement the small-size design of the lens assembly and the camera module. In addition, the lens assembly has a larger focal length in the infinity state, and further implements a better long-focus function. In other words, when the total track length of the lens assembly is reduced to implement a small size, the image shooting effect in the infinity state can be further improved.

In a possible implementation, the preset distance L by which the second lens group moves and the total track length TTL1 of the lens assembly in the infinity state satisfy a conditional expression: $0.1<L/TTL<0.3$. The second lens group has a large movement distance, and the lens assembly has a small total track length. When a length size of the lens assembly is reduced, the magnification of the lens assembly in the macro state is further increased, to satisfy the macro function with a higher magnification and help implement the small-size design of the lens assembly and the camera module.

In a possible implementation, the preset distance L by which the second lens group moves and an object distance C of the lens assembly in the macro state satisfy a conditional expression: $0.4 \leq (L/C)*10<3.5$. The lens assembly has a small object distance, and the second lens group has a large movement distance. The magnification of the lens assembly can be further increased, and the macro function with the higher magnification can be implemented.

In a possible implementation, the focal length EFL1 of the lens assembly in the infinity state and a focal length EFL2 of the lens assembly in the macro state satisfy a conditional expression: $0.25<EFL2/EFL1<0.95$. The lens assembly has a large focal length in the infinity state. This helps implement a better long-focus function and implements farther image shooting, thereby improving image shooting effect in the infinity state. The lens assembly has a small focal length in the macro state. This helps further increase the magnification and implements the macro function with the higher magnification.

In a possible implementation, a refractive index Nd of the first lens satisfies a conditional expression: $1.4<Nd<1.85$. The first lens has a small refractive index. The imaging quality can be effectively improved. This helps improve the imaging quality.

In a possible implementation, in the first lens, the second lens, and the third lens, some are plastic lenses and some are glass lenses. Costs of the plastic lens are relatively low. When optical performance of the lens assembly is ensured, this helps further reduce costs of the lens assembly and can further improve the resolution of the lens and reduce a size of the lens.

In addition, a thermal refractive index coefficient of the glass lens and a thermal refractive index coefficient of the plastic lens may be used in combination. For example, the thermal refractive index coefficient of the glass lens is mostly a negative number, and the thermal refractive index coefficient of the plastic lens is mostly a positive number, so that mutual compensation can be implemented. This helps reduce a thermal difference of the lens assembly and helps implement an athermal design of the lens assembly, thereby ensuring stability and reliability of performance of the lens assembly in different temperature environment scenarios.

A second aspect of this application provides a lens assembly, including a first lens, a second lens, and a third lens that are sequentially arranged from an object side to an image side along an optical axis direction.

The second lens is movable along the optical axis direction. When the lens assembly is in a macro state, the second lens moves towards the object side by a preset distance along the optical axis direction.

A focal length f1 of the first lens and a focal length EFL1 of the lens assembly in the infinity state satisfy a conditional expression: 1<|f1/EFL1|<2.

By using the foregoing architecture, a wide aperture design of the lens assembly can be implemented, and a requirement of an infinity image shooting scene can be satisfied. In addition, a macro function with a high magnification and a high resolution can be further implemented, and a requirement of a macro image shooting scene can be satisfied, thereby efficiently improving image shooting effect and imaging quality of a camera module. In addition, a quantity of lenses is relatively small. When infinity and macro image shooting requirements are satisfied, a total track length of the lens assembly is reduced. This facilitates a small-size design of the lens assembly.

A third aspect of this application provides a lens assembly, including a first lens, a second lens, and a third lens group that are sequentially arranged from an object side to an image side along an optical axis direction. The third lens group includes a plurality of sequentially arranged third lenses.

The second lens is movable along the optical axis direction. When the lens assembly is in a macro state, the second lens moves towards the object side by a preset distance along the optical axis direction.

A focal length f1 of the first lens and a focal length EFL1 of the lens assembly in the infinity state satisfy a conditional expression: 1<|f1/EFL1|<2.

By using the foregoing architecture, a wide aperture design of the lens assembly can be implemented, and a requirement of an infinity image shooting scene can be satisfied. In addition, a macro function with a high magnification and a high resolution can be further implemented, and a requirement of a macro image shooting scene can be satisfied, thereby efficiently improving image shooting effect and imaging quality of a camera module. In addition, a quantity of lenses is relatively small. When infinity and macro image shooting requirements are satisfied, a total track length of the lens assembly is reduced. This facilitates a small-size design of the lens assembly.

A fourth aspect of this application provides a lens assembly, including a first lens, a second lens group, and a third lens that are sequentially arranged from an object side to an image side along an optical axis direction. The second lens group includes a plurality of sequentially arranged second lenses.

The second lens group is movable along the optical axis direction. When the lens assembly is in a macro state, the second lens group moves towards the object side by a preset distance along the optical axis direction.

A focal length f1 of the first lens and a focal length EFL1 of the lens assembly in an infinity state satisfy a conditional expression: 1<|f1/EFL1|<2.

By using the foregoing architecture, a wide aperture design of the lens assembly can be implemented, and a requirement of an infinity image shooting scene can be satisfied. In addition, a macro function with a high magnification and a high resolution can be further implemented, and a requirement of a macro image shooting scene can be satisfied, thereby efficiently improving image shooting effect and imaging quality of a camera module. In addition, a quantity of lenses is relatively small. When infinity and macro image shooting requirements are satisfied, a total track length of the lens assembly is reduced. This facilitates a small-size design of the lens assembly.

A fifth aspect of this application provides a camera module, including at least an image sensor and any one of the foregoing lens assemblies. The image sensor is located on a side that is of the lens assembly and that faces an image side.

The lens assembly is included. The lens assembly can implement a wide aperture design, has a large luminous flux, and can satisfy a requirement of an infinity image shooting scene. In addition, the lens assembly can further implement a macro function with a high magnification and a high resolution and satisfy a requirement of a macro image shooting scene, thereby significantly improving overall image shooting effect and imaging quality of the camera module. In addition, the lens assembly has a simple architecture and has low costs and a small total track length. This helps implement a small-size design of the camera module.

A sixth aspect of this application provides an electronic device, including at least a housing and the foregoing camera module. The camera module is disposed on the housing.

The camera module is included. The camera module can satisfy a requirement of an infinity image shooting scene, and can satisfy a requirement of a macro image shooting scene. This implements significant image shooting effect and imaging quality. In this way, image shooting and imaging functions of the electronic device can be enriched and improved. In addition, the camera module may have a relatively small size. This helps satisfy a light and thin design requirement of the electronic device.

## BRIEF DESCRIPTION OF DRAWINGS

FIG. 1 is a diagram of a structure of an electronic device according to an embodiment of this application;

FIG. 2 is a diagram of a structure of a camera module when a lens assembly is in an infinity state according to an embodiment of this application;

FIG. 3 is a diagram of a structure of a camera module when a lens assembly is in a macro state according to an embodiment of this application;
FIG. 4 is a diagram of a simulation structure of a camera module when a lens assembly is in an infinity state according to Embodiment 1 of this application;
FIG. 5 is a diagram of a simulation structure of a camera module when a lens assembly is in a macro state according to Embodiment 1 of this application;
FIG. 6 is a diagram of a curve of a modulation transfer function of a lens assembly in an infinity state according to Embodiment 1 of this application;
FIG. 7 is a diagram of a curve of a modulation transfer function of a lens assembly in a macro state according to Embodiment 1 of this application;
FIG. 8 is a diagram of a simulation structure of a camera module when a lens assembly is in an infinity state according to Embodiment 2 of this application;
FIG. 9 is a diagram of a simulation structure of a camera module when a lens assembly is in a macro state according to Embodiment 2 of this application;
FIG. 10 is a diagram of a curve of a modulation transfer function of a lens assembly in an infinity state according to Embodiment 2 of this application;
FIG. 11 is a diagram of a curve of a modulation transfer function of a lens assembly in a macro state according to Embodiment 2 of this application;
FIG. 12 is a diagram of a simulation structure of a camera module when a lens assembly is in an infinity state according to Embodiment 3 of this application;
FIG. 13 is a diagram of a simulation structure of a camera module when a lens assembly is in a macro state according to Embodiment 3 of this application;
FIG. 14 is a diagram of a curve of a modulation transfer function of a lens assembly in an infinity state according to Embodiment 3 of this application;
FIG. 15 is a diagram of a curve of a modulation transfer function of a lens assembly in a macro state according to Embodiment 3 of this application;
FIG. 16 is a diagram of a simulation structure of a camera module when a lens assembly is in an infinity state according to Embodiment 4 of this application;
FIG. 17 is a diagram of a simulation structure of a camera module when a lens assembly is in a macro state according to Embodiment 4 of this application;
FIG. 18 is a diagram of a curve of a modulation transfer function of a lens assembly in an infinity state according to Embodiment 4 of this application;
FIG. 19 is a diagram of a curve of a modulation transfer function of a lens assembly in a macro state according to Embodiment 4 of this application;
FIG. 20 is a diagram of a simulation structure of a camera module when a lens assembly is in an infinity state according to Embodiment 5 of this application;
FIG. 21 is a diagram of a simulation structure of a camera module when a lens assembly is in a macro state according to Embodiment 5 of this application;
FIG. 22 is a diagram of a curve of a modulation transfer function of a lens assembly in an infinity state according to Embodiment 5 of this application;
FIG. 23 is a diagram of a curve of a modulation transfer function of a lens assembly in a macro state according to Embodiment 5 of this application;
FIG. 24 is a diagram of a simulation structure of a camera module when a lens assembly is in an infinity state according to Embodiment 6 of this application;
FIG. 25 is a diagram of a simulation structure of a camera module when a lens assembly is in a macro state according to Embodiment 6 of this application;
FIG. 26 is a diagram of a curve of a modulation transfer function of a lens assembly in an infinity state according to Embodiment 6 of this application;
FIG. 27 is a diagram of a curve of a modulation transfer function of a lens assembly in a macro state according to Embodiment 6 of this application;
FIG. 28 is a diagram of a simulation structure of a camera module when a lens assembly is in an infinity state according to Embodiment 7 of this application;
FIG. 29 is a diagram of a simulation structure of a camera module when a lens assembly is in a macro state according to Embodiment 7 of this application;
FIG. 30 is a diagram of a curve of a modulation transfer function of a lens assembly in an infinity state according to Embodiment 7 of this application;
FIG. 31 is a diagram of a curve of a modulation transfer function of a lens assembly in a macro state according to Embodiment 7 of this application;
FIG. 32 is a diagram of a simulation structure of a camera module when a lens assembly is in an infinity state according to Embodiment 8 of this application;
FIG. 33 is a diagram of a simulation structure of a camera module when a lens assembly is in a macro state according to Embodiment 8 of this application;
FIG. 34 is a diagram of a curve of a modulation transfer function of a lens assembly in an infinity state according to Embodiment 8 of this application; and
FIG. 35 is a diagram of a curve of a modulation transfer function of a lens assembly in a macro state according to Embodiment 8 of this application.

Reference numerals:

100: electronic device;
10: housing;
20: camera module;
210: lens assembly; 21: first lens; 22: second lens group; 23: third lens group;
220: aperture stop; 230: image sensor; 240: light filter; 250: prism.

DESCRIPTION OF EMBODIMENTS

Terms used in embodiments of this application are merely used to explain specific embodiments of this application, but are not intended to limit this application.
For ease of understanding, related technical terms in embodiments of this application are first explained and described.
Object side: A lens assembly is used as a boundary, a side on which a shot object is located is the object side, and a surface that is of a lens or an optical element and that faces the object side is an object-side surface of the lens.
Image side: A side on which an image of a shot object is located is the image side, and a surface that is of a lens or an optical element and that faces the image side is an image-side surface.
An object distance means a distance between an optical center of a lens and a shot object, and is a distance between an image shooting plane and a front main surface of the lens assembly (a first lens near the object side of the lens assembly).
An optical axis means light passing through a center of each lens of the lens assembly (with reference to an x axis in FIG. 2).
Infinity means that when the object distance exceeds a specific value, the shot object can be considered as being shot by the lens from an infinitely distant light point in a form of parallel light beams. The lens assembly is in an infinity state (∞). This indicates that an infinitely distant object can be clearly imaged when focusing of the lens is "∞".
A macro mode is used for image shooting at a relatively short distance at a high magnification. In this mode, image shooting can be performed to obtain an image of a same size as or a smaller size than an actual object. In a macro state, the lens assembly has a 1x magnification or a higher magnification. A minimum object distance is relatively short. A focal length in the macro state may be greater than a focal length of the lens assembly in the infinity state. The lens assembly has a relatively high resolution, to more clearly perform image shooting on an object.
A focal power represents a refraction capability of a lens on incident parallel light beams.
A positive focal power represents that a lens has a positive focal length and has effect of converging light.
A negative focal power represents that a lens has a negative focal length and has effect of diverging light.
An Abbe number is also referred to as a dispersion coefficient, is a difference ratio of refractive indexes of an optical material at different wavelengths, and indicates a dispersion degree of the material.
A focal length is also referred to as a focal length. The focal length is usually represented by an effective focal length (Effective Focal Length, EFL for short) to be different from parameters such as a front focal length and a back focal length. The focal length or the effective focal length is a measurement manner for measuring convergence or divergence of light in an optical system, and means a vertical distance from an optical center of a lens or a lens group to a focal plane when a clear image of an infinitely distant scene is formed on the focal plane through the lens or the lens group. From a practical perspective, the focal length may be understood as a distance from a center of a lens (a lens assembly) to an imaging plane.
Field of view (Field of View, FOV for short): An included angle that uses a lens as a vertex and that is formed by using two edges of a maximum range in which an image of an object on which image shooting can be performed can pass through the lens is referred to as the field of view. A value of the field of view determines a view range of the lens. A larger field of view indicates a larger view range.
An aperture is an apparatus configured to control an amount of light passing through a lens and entering an electronic device, and is usually in the lens. A size of the aperture is represented by an F# value.
An f-number F# is a relative value (a reciprocal of a relative aperture) obtained by dividing a focal length of a lens by a clear aperture of the lens. A smaller value of the f-number F# indicates a larger amount of incoming light in a same unit time and a smaller depth of field. In this case, photographed background content is blurred, to generate effect similar to that of a long-focus lens.

A total track length (Total Track Length, TTL for short) is also referred to as a total height, and is a total track length from a vertex of a first lens (or a head of a lens assembly) that is in the lens assembly and that is disposed adjacent to an object side to an imaging plane of the lens assembly. The total track length is also referred to as a total optical track length, and is a main factor for forming a height of a camera module. In this application, the TTL may be a distance from an object-side surface of the first lens to a photosensitive surface of an image sensor on optical axes of a plurality of lenses of the lens assembly.

A half image height (Image Height, IH) is a radius of an image circle, and means a half of an image height of an image formed by a lens assembly.

An embodiment of this application provides an electronic device. The electronic device may include but is not limited to an electronic device having a camera module, such as a mobile phone, a tablet computer, a notebook computer, an ultra-mobile personal computer (ultra-mobile personal computer, UMPC), a handheld computer, an intercom, a netbook, a POS machine, a personal digital assistant (personal digital assistant, PDA), a wearable device, a virtual reality device, or a vehicle-mounted apparatus.

In this embodiment of this application, an example in which the electronic device is a mobile phone is used. The mobile phone may be a bar-type machine, or the mobile phone may be a foldable machine. Specifically, the following is described by using an example in which the electronic device is a bar-type machine.

FIG. 1 is a diagram of a structure of an electronic device according to an embodiment of this application.

As shown in FIG. 1, the electronic device 100 may include a housing 10 and a camera module 20. The camera module 20 may be disposed on the housing 10. The camera module 20 is configured to implement an image shooting function, for example, may be configured to take a picture and record a video. An image shooting scene of the camera module 20 may include various different complex and diversified image shooting application scenarios, for example, indoor, outdoor, people, and an environment.

The camera module 20 may be located on a front side (a side having a display) of the electronic device 100, and is configured to take a selfie or perform image shooting on another object. Alternatively, as shown in FIG. 1, the camera module 20 may be located on a back side (a side facing away from a display) of the electronic device 100, and is configured to perform image shooting on another object and certainly may be configured to take a selfie.

The electronic device 100 may include one or more camera modules 20, to satisfy different image shooting requirements.

The electronic device 100 may further include another mechanical part. For example, still as shown in FIG. 1, a speaker opening 30 may be further provided on the housing 10 of the electronic device 100, and the speaker opening 30 may be used to implement playback of audio and the like of the electronic device 100. A data interface 40 may be further disposed on the housing 10 of the electronic device 100. The data interface 40 may be configured to supply power to the electronic device 100, or the data interface 40 may be configured to connect the electronic device 100 to a headset, an external multimedia device, or the like (for example, an external camera or an external projection device).

Certainly, in some other examples, the electronic device 100 may further include another mechanical part to complete functions of the electronic device, for example, a sensor, a processor, a circuit board, and a drive structure. This is not limited in this embodiment of this application.

Usually, the camera module may include a lens assembly and an image sensor. Light may enter the camera module from the lens assembly. Specifically, light reflected by a shot object may enter the lens assembly. The light passes through the lens assembly, to adjust and control an optical path. In this way, a light image is generated and transmitted to a photosensitive surface of the image sensor. The image sensor can implement an optical-to-electrical conversion function. The image sensor receives the light image and converts the light image into an electrical signal for image display.

The camera module may further include an image processor, a memory, and the like. The image sensor may transmit the electrical signal to the image processor and the memory for processing, and then display, by using the display of the electronic device, an image of the shot object.

Optical performance of the lens assembly greatly affects imaging quality and effect of the camera module. For example, an f-number of the lens assembly affects functions such as image shooting for a night scene, a video, background blurring, and snapshot taking. In addition, in a shooting environment such as a dark environment or a night environment, in a scene such as image shooting of a distant object, a camera module with a wide aperture can be used to obtain a larger amount of incoming light, thereby implementing better image shooting effect. However, an f-number F# of a common lens assembly in the related technologies is usually 3.0 or greater. This is very unfriendly to a long shot scene at night.

In addition, with continuous update and development of functions of the electronic device, image shooting requirements for a close shot, detail display, and the like gradually increase. For example, for image shooting of a fine object such as a flower, an insect, a flying bird, or a fish, to fully display details and obtain a clear image, the lens assembly needs to have a high magnification and a high resolution, to satisfy a macro image shooting requirement; and has better imaging quality and imaging effect in a macro state.

On this basis, an embodiment of this application provides a lens assembly. By appropriately using an aspherical lens and a combination of focal powers of a lens and a lens group and appropriately controlling a quantity of lenses, features such as a wide aperture, a small size, low costs, and a high resolution of the lens assembly can be implemented through joint cooperation in aspects such as an aperture, a focal length, a thickness, a refractive index, an Abbe number, a thermal refractive index coefficient, and a total optical track length of a system. In this way, a wide aperture design can be implemented for the lens assembly, thereby increasing an amount of incoming light and improving effect of a long shot in an infinity state. In addition, a magnification and a resolution in a macro state can be further improved for the lens assembly, thereby improving effect of a close shot and significantly improving overall imaging quality and effect of the camera module. In addition, the lens assembly further has a relatively small size and relatively low costs.

With reference to the accompanying drawings, the following describes in detail a lens assembly and a camera module including the lens assembly provided in embodiments of this application.

FIG. 2 is a diagram of a structure of a camera module when a lens assembly is in an infinity state according to an embodiment of this application.

As shown in FIG. 2, the camera module 20 provided in this embodiment of this application includes a lens assembly 210 and an image sensor 230. The image sensor 230 is located on a side that is of the lens assembly 210 and that faces an image side. A photosensitive surface (which may also be referred to as an imaging plane) of the image sensor 230 may face the lens assembly 210. Light entering the camera module 20 from the lens assembly 210 may be transmitted to the photosensitive surface of the image sensor 230 through the lens assembly 210, to implement imaging of the light.

The image sensor 230 may be a charge-coupled device (Charge-coupled Device, CCD), or may be a complementary metal oxide semiconductor (Complementary Metal Oxide Semiconductor, CMOS). Alternatively, the image sensor 230 may be another device that can implement an optical-to-electrical conversion function.

Still as shown in FIG. 2, the camera module 20 may further include a light filter 240. The light filter 240 may be located between the lens assembly 210 and the image sensor 230. Light passes through the lens assembly 210 and then the light filter 240, and then is transmitted to the photosensitive surface of the image sensor 230. The light filter 240 has a light filtering function, and can enable light within a specific wavelength range to pass through, to filter out stray light that does not facilitate imaging and help improve imaging quality.

The lens assembly 210 may further include an aperture stop 220. The aperture stop 220 may be located on a side that is of a first lens 21 and that is close to an object side. Light entering the lens assembly 210 may first pass through the aperture stop 220, and then sequentially pass through a plurality of lenses of the lens assembly. The aperture stop 220 can limit light entering the lens assembly 210, to adjust strength of the light and help improve imaging quality.

The camera module 20 may further include a lens barrel (not shown in the figure). The lens assembly 210, the light filter 240, the image sensor 230, and the like may be disposed in the lens barrel.

It should be understood that the camera module 20 may be a periscope camera module. For example, the camera module 20 may further include a prism. An incident surface of the prism may be opposite to a light inlet of the camera module 20, and an emergent surface of the prism may be opposite to the lens assembly (for example, the first lens of the lens assembly). The prism can change a direction of an optical path and fold the optical path, thereby reducing a thickness of the camera module 20. This further helps implement a light and thin design of an electronic device.

Certainly, in some other examples, the camera module 20 may also be a non-periscope camera module. For example, the camera module 20 may alternatively be a wide-angle camera module, or the camera module 20 may be a general-purpose focusing camera module.

The lens assembly 210 may include a plurality of lenses. Each lens may have a focal power. A dashed line x in FIG. 2 is used as an optical axis of the lens assembly 210. The plurality of lenses may be sequentially arranged along an optical axis direction. The optical axis of the lens assembly 210 may coincide with a central axis of the lens barrel.

Specifically, the lens assembly 210 includes at least the first lens 21, a second lens group 22, and a third lens group 23 that are sequentially arranged from an object side to an image side along the optical axis direction. The second lens group 22 includes a plurality of second lenses. The third lens group 23 includes a plurality of third lenses. In other words, the first lens 21 is located at an end that is of the lens assembly 210 and that is close to the object side, and the third lens is located at an end that is of the lens assembly 210 and that is close to the image side.

It should be noted that a quantity of second lenses in the second lens group 22 and a quantity of third lenses in the third lens group 23 may be separately selected and set according to an actual requirement. For example, the second lens group 22 may include three second lenses, for example, a second lens 22a, a second lens 22b, and a second lens 22c in FIG. 2. Alternatively, the second lens group 22 may include only two second lenses (for example, the second lens 22a and the second lens 22b in the figure). The third lens group 23 may include three third lenses, for example, a third lens 23a, a third lens 23b, and a third lens 23c in FIG. 2. The second lens group 22 includes two or three second lenses. The third lens group 23 includes three third lenses. A quantity of lenses is relatively small. This helps reduce a total track length of the lens assembly 210 and reduce costs of the lens assembly 210 when a wide aperture requirement and a macro imaging requirement of the lens assembly 210 are satisfied.

Certainly, in some other examples, the quantity of second lenses and the quantity of third lenses may alternatively be other values. For example, the second lens group 22 may include four or five second lenses, and the third lens group 23 may include two or four third lenses.

In some other examples, the second lens group 22 may alternatively include only one second lens. In other words, the entire lens assembly 210 may include the first lens 21, the second lens, and the third lens group 23 that are sequentially arranged from the object side to the image side.

Alternatively, in some other examples, the third lens group 23 may include only one third lens. The entire lens assembly 210 may include the first lens 21, the second lens group 22, and the third lens that are sequentially arranged from the object side to the image side.

Alternatively, in some other examples, the second lens group 22 and the third lens group 23 each may include only one lens. The entire lens assembly 210 may include the first lens 21, the second lens, and the third lens that are sequentially arranged from the object side to the image side.

In this embodiment of this application, description is provided by using an example in which the second lens group 22 includes the plurality of second lenses, for example, two or three second lenses, and the third lens group 23 includes the plurality of third lenses, for example, three third lenses. When the camera module 20 is used to implement image shooting, light reflected by a shot object sequentially passes through the aperture stop 220, the first lens 21, the second lens 22a, the second lens 22b, the second lens 22c, the third lens 23a, the third lens 23b, the third lens 23c, and the light filter 240, and then is transmitted to the imaging plane of the image sensor 230.

When the lens assembly 210 is in an infinity state, for example, is used to implement image shooting of a distant scene, for example, an image shooting scene of a scenery, a night scene, a starry sky, a galaxy, or an aurora, as shown in FIG. 2, the first lens 21, the second lens group 22, and the third lens group 23 are fastened, and a preset fixed distance is maintained between the first lens 21, the second lens group 22, and the third lens group 23, to ensure implementation of a long-focus function.

An effective focal length of a system of the lens assembly 210 in the infinity state is EFL1, a focal length of the first lens 21 is f1, and the focal length f1 of the first lens 21 and the focal length EFL1 of the lens assembly 210 may satisfy a conditional expression: $1<|f1/EFL1|<2$. A focal length of the second lens group 22 that includes the plurality of second lenses is f2, and the focal length f2 of the second lens group 22 and the focal length EFL1 of the lens assembly 210 may satisfy a conditional expression: $0.3<|f2/EFL1|<1$. A focal length of the third lens group 23 that includes the plurality of third lenses is f3, and the focal length f3 of the third lens group 23 and the focal length EFL1 of the lens assembly 210 may satisfy a conditional expression: $0.2<|f3/EFL1|<3$. The lens assembly 210 constructed by using the first lens 21, the second lens group 22, and the third lens group 23 that satisfy the foregoing conditional expression has a small f-number F#. A wide aperture design can be implemented, and a luminous flux of the lens assembly 210 can be increased, to satisfy a requirement of an infinity image shooting scene (especially a dark or night image shooting scene) and improve image shooting effect and imaging quality.

FIG. 3 is a diagram of a structure of a camera module when a lens assembly is in a macro state according to an embodiment of this application.

To implement a macro function, the second lens group 22 may be disposed movably. For example, the second lens group 22 may be disposed movably on the lens barrel. As shown in FIG. 3, the second lens group 22 may be translated along the direction of the optical axis x. When the lens assembly 210 is switched from the infinity state to the macro state, the second lens group 22 moves towards the object side along the optical axis.

When the lens assembly 210 is in the macro state, in comparison with a case in which the lens assembly 210 is in the infinity state, the second lens group 22 moves towards the object side by a preset distance. A reference is made by considering an arc-shaped dashed line in FIG. 3 as an image-side surface of the second lens 22c in the second lens group 22. L in FIG. 3 is the preset distance by which the second lens group 22 moves. A distance between the second lens group 22 and each of the first lens 21 and the third lens group 23 is changed, to change the focal length of the entire lens assembly 210 and improve a magnification of the lens assembly 210. In addition, due to the wide aperture design of the entire lens assembly 210, a resolution of the lens assembly 210 can be effectively improved, to implement a macro function with a high magnification and a high resolution and satisfy a requirement of a macro image shooting scene, thereby further improving image shooting effect and imaging quality of the camera module 20.

In addition, an architecture of the entire lens assembly is formed by one first lens 21, one second lens group 22, and one third lens group 23. A quantity of lenses is small. This helps reduce a total track length of the entire lens assembly and helps implement a small-size design of the lens assembly 210 and the camera module 20, thereby helping reduce the costs.

The first lens 21 may have a positive focal power, the second lens group 22 may have a positive focal power, and the third lens group 23 may have a negative focal power. A focal power is further appropriately allocated, to help further satisfy the wide aperture design of the lens assembly 210 and help improve the resolution of the lens assembly 210. In this way, a high resolution in the macro state is ensured, and imaging quality is improved.

It should be noted that the second lens group 22 includes the plurality of second lenses, and focal powers of the plurality of second lenses may be the same. For example, the plurality of second lenses may all have positive focal powers; or a part of the plurality of second lenses may have a positive focal power, and a part of the second lenses may have a negative focal power, provided that the entire second lens group 22 formed by combining the plurality of second lenses has a positive focal power. Correspondingly, focal powers of the plurality of third lenses in the third lens group 23 may be the same. For example, the plurality of third lenses may all have negative focal powers; or a part of the plurality of third lenses may have a negative focal power, and a part of the third lenses may have a positive focal power, provided that the entire third lens group 23 formed by combining the plurality of third lenses has a negative focal power.

For example, a range of the f-number F# of the lens assembly 210 in the infinity state may be 1.0≤F#≤4.0. In a case of a small f-number, a requirement of the wide aperture design of the lens assembly 210 is satisfied, and imaging quality in an image shooting scene in the infinity state is ensured.

A range of the f-number F# of the lens assembly 210 in the macro state may be 1.8≤F#≤4.0. Similarly, the lens assembly has a small f-number. The resolution of the lens assembly 210 is improved, and the imaging quality in the image shooting scene in the macro state is ensured.

A magnification of the lens assembly 210 in the macro state is Mag. The magnification Mag is a ratio of an imaging length to a length of an object. A range of the magnification Mag may be 0.1x<Mag<1.0x. The lens assembly has a high magnification. An image shooting requirement in the macro state is satisfied, and the imaging quality in the macro state is improved.

The preset distance by which the second lens group 22 moves is L. An object distance of the lens assembly 210 in the macro state is C. In the macro state, the preset distance L by which the second lens group 22 moves and the object distance C may satisfy a conditional expression: 0.4≤(L/C)*10<3.5. The lens assembly has a small object distance, and the second lens group has a large movement distance. The magnification of the lens assembly 210 can be further increased, and a macro function with a higher magnification can be implemented.

The total track length of the lens assembly 210 in the infinity state is TTL. A ratio range of the preset distance L by which the second lens group 22 moves in the macro state, to the total track length TTL may be: 0.1<L/TTL<0.3. The second lens group has a large movement distance, and the lens assembly has a small total track length. When a length size of the lens assembly 210 is reduced, the magnification of the lens assembly 210 in the macro state is further increased, to satisfy the macro function with the higher magnification and help implement the small-size design of the lens assembly 210 and the camera module.

An effective focal length of a system of the lens assembly 210 in the macro state is EFL2. A ratio range of the focal length EFL1 of the lens assembly 210 in the infinity state to the focal length EFL2 of the lens assembly 210 in the macro state may be 0.25<EFL2/EFL1<0.95. The lens assembly 210 has a large focal length in the infinity state. This helps implement a better long-focus function and implements farther image shooting, thereby improving image shooting effect in the infinity state. The lens assembly 210 has a small focal length in the macro state. This helps further increase the magnification and implements the macro function with the higher magnification.

In addition, a telephoto ratio of the lens assembly 210 may be a ratio of the total track length TTL of the lens assembly 210 in the infinity state to the focal length EFL1. A ratio range of the focal length EFL1 of the lens assembly 210 in the infinity state to the total track length TTL of the lens assembly 210 in the infinity state may be 0.7<EFL1/TTL<1. The lens assembly 210 has a small total track length. This helps implement the small-size design of the lens assembly 210 and the camera module. In addition, the lens assembly 210 has a larger focal length in the infinity state, and further implements a better long-focus function. In other words, when the total track length of the lens assembly 210 is reduced to implement a small size, the image shooting effect in the infinity state can be further improved.

In this embodiment of this application, a refractive index of the first lens 21 is Nd, and a value range of the refractive index Nd of the first lens 21 may be 1.4<Nd<1.85. The first lens has the low refractive index. The imaging quality can be effectively improved. This helps improve the imaging quality.

It should be noted that, in this embodiment of this application, refractive indexes of the second lens and the third lens are not limited, and may be specifically selected and set based on an actual situation.

In addition, the first lens 21, the second lens, and the third lens may be aspherical lenses respectively. The aspherical lens may be used to reduce or eliminate a spherical aberration and a distorted aberration that are introduced by a spherical lens. This can further help implement wide aperture performance of the lens assembly 210, and also help reduce the total track length of the lens assembly 210.

Certainly, in some other examples, the first lens, the second lens, and the third lens may alternatively be spherical lenses; or a part of the first lens, the second lens, and the third lens may be a spherical lens, and a part of the first lens, the second lens, and the third lens may be an aspherical lens.

In this embodiment of this application, concave-convex shapes of an image-side surface and an object-side surface of the first lens 21, concave-convex shapes of an image-side surface and an object-side surface of the second lens, and concave-convex shapes of an image-side surface and an object-side surface of the third lens are not limited.

Some of the first lens 21, the second lens, and the third lens may be plastic lenses. For example, the first lens 21 may be a plastic lens, and the second lens and the third lens may be glass lenses. Alternatively, the first lens 21 may be a glass lens, and the second lens and the third lens may be plastic lenses. The plurality of second lenses may all be plastic lenses or glass lenses; or some second lenses may be plastic lenses, and some second lenses may be glass lenses. Correspondingly, the plurality of third lenses may all be plastic lenses or glass lenses; or some third lenses may be plastic lenses, and some third lenses may be glass lenses.

The lens assembly 210 uses a combination of a glass lens and a plastic lens. Costs of the plastic lens are relatively low. When optical performance of the lens assembly 210 is ensured, this helps further reduce costs of the lens assembly 210. In addition, a resolution of a lens can be further improved, and a size of the lens can be reduced.

In addition, a thermal refractive index coefficient of the glass lens and a thermal refractive index coefficient of the plastic lens may be used in combination. For example, the thermal refractive index coefficient of the glass lens is mostly a negative number, and the thermal refractive index coefficient of the plastic lens is mostly a positive number, so that mutual compensation can be implemented. This helps reduce a thermal difference of the lens assembly 210 and helps implement an athermal design of the lens assembly 210, thereby ensuring stability and reliability of performance of the lens assembly 210 in different temperature environment scenarios.

It may be understood that a common lens shape is circular. To further reduce a size of the lens assembly 210, the first lens 21, the second lens, and the third lens may be cut in a circular shape. A missing corner is formed on each of the first lens 21, the second lens, and the third lens. In this case, shapes of the first lens 21, the second lens, and the third lens may be an elongated circle, a square, or the like, thereby reducing a size of each lens in the lens assembly.

The following describes a structure and performance of the lens assembly provided in this application with reference to specific embodiments.

Embodiment 1

FIG. 4 is a diagram of a simulation structure of a camera module when a lens assembly is in an infinity state according to Embodiment 1 of this application. FIG. 5 is a diagram of a simulation structure of a camera module when a lens assembly is in a macro state according to Embodiment 1 of this application.

In this embodiment of this application, as shown in FIG. 4 and FIG. 5, the lens assembly 210 includes one first lens 21, one second lens group 22, and one third lens group 23. The second lens group 22 may include three second lenses: a second lens 22a, a second lens 22b, and a second lens 22c, respectively. The third lens group 23 may include three third lenses: a third lens 23a, a third lens 23b, and a third lens 23c, respectively. To be specific, an aperture stop 220, the first lens 21, the second lens 22a, the second lens 22b, the second lens 22c, the third lens 23a, the third lens 23b, the third lens 23c, a light filter 240, and an image sensor 230 are sequentially arranged along an optical axis direction from an object side to an image side.

A focal length f1 of the first lens 21 and a focal length EFL1 of the lens assembly 210 in the infinity state satisfy $|f1/EFL|=1.12$.

A focal length f2 of the second lens group 22 and the focal length EFL1 of the lens assembly 210 in the infinity state satisfy $|f2/EFL|=0.58$.

A focal length f3 of the third lens group 23 and the focal length EFL1 of the lens assembly 210 in the infinity state satisfy $|f3/EFL|=0.39$.

The first lens 21 may have a positive focal power. At least a part that is of an object-side surface of the first lens 21 and that corresponds to an optical axis may be a convex surface, and at least a part that is of an image-side surface of the first lens 21 and that corresponds to the optical axis may be a convex surface.

The second lens group 22 may have a positive focal power. The second lens 22a may have a positive focal power. At least a part that is of an object-side surface of the second lens 22a and that corresponds to the optical axis may be a convex surface, and at least a part that is of an image-side surface of the second lens 22a and that corresponds to the optical axis may be a convex surface.

The second lens 22b may have a negative focal power. At least a part that is of an object-side surface of the second lens 22b and that corresponds to the optical axis may be a convex surface, and at least a part that is of an image-side surface of the second lens 22b and that corresponds to the optical axis may be a convex surface.

The second lens 22c may have a positive focal power. At least a part that is of an object-side surface of the second lens 22c and that corresponds to the optical axis may be a convex surface, and at least a part that is of an image-side surface of the second lens 22c and that corresponds to the optical axis may be a concave surface.

The third lens group 23 may have a negative focal power. The third lens 23a may have a negative focal power. At least a part that is of an object-side surface of the third lens 23a and that corresponds to the optical axis may be a concave surface, and at least a part that is of an image-side surface of the third lens 23a and that corresponds to the optical axis may be a convex surface.

The third lens 23b may have a positive focal power. At least a part that is of an object-side surface of the third lens 23b and that corresponds to the optical axis may be a concave surface, and at least a part that is of an image-side surface of the third lens 23b and that corresponds to the optical axis may be a concave surface.

The third lens 23c may have a negative focal power. At least a part that is of an object-side surface of the third lens 23c and that corresponds to the optical axis may be a concave surface, and at least a part that is of an image-side surface of the third lens 23c and that corresponds to the optical axis may be a concave surface.

An f-number F# of the lens assembly 210 in the infinity state is equal to 1.56.

An f-number F# of the lens assembly 210 in the macro state is equal to 2.63.

A magnification Mag of the lens assembly 210 in the macro state is equal to 0.56x.

A ratio of the focal length EFL1 of the lens assembly 210 in the infinity state to a total track length TTL of the lens assembly 210 in the infinity state is EFL1/TTL=0.9.

A ratio of a preset distance L by which the second lens group 22 moves, to the total track length TTL of the lens assembly 210 in the infinity state is L/TTL=0.14.

The preset distance L by which the second lens group 22 moves and an object distance C of the lens assembly 210 in the macro state satisfy: (L/C)*10=0.77.

A ratio of the focal length EFL1 of the lens assembly 210 in the infinity state to a focal length EFL2 of the lens assembly 210 in the macro state is EFL2/EFL1=0.56.

Table 1 shows optical parameters of the optical elements in the camera module according to Embodiment 1 of this application.

| | Surface number | Surface profile | Curvature radius | Thickness | Material | Y semi-aperture |
|---|---|---|---|---|---|---|
| Aperture stop | S0 | - | - | -1.86 | - | 5.58 |
| L1 | S1 | Aspherical surface | 8.21 | 2.40 | 498.816 | 5.58 |
| L1 | S2 | Aspherical surface | 47.41 | 4.42 | 498.816 | 5.44 |
| L2 | S3 | Aspherical surface | 7.48 | 1.12 | 538.735 | 3.56 |
| L2 | S4 | Aspherical surface | 36.92 | 0.03 | 538.735 | 3.45 |
| L3 | S5 | Aspherical surface | 4.35 | 0.99 | 650.216 | 3.32 |
| L3 | S6 | Aspherical surface | 2.39 | 0.94 | 650.216 | 2.83 |
| L4 | S7 | Aspherical surface | 6.54 | 1.63 | 545.482 | 2.78 |
| L4 | S8 | Aspherical surface | -8.18 | 0.03 | 545.482 | 2.60 |
| L5 | S9 | Aspherical surface | -4.73 | 0.43 | 574.375 | 2.21 |
| L5 | S10 | Aspherical surface | 12.42 | 1.07 | 574.375 | 2.04 |
| L6 | S11 | Aspherical surface | -59.56 | 1.78 | 677.192 | 2.28 |
| L6 | S12 | Aspherical surface | -7.61 | 0.85 | 677.192 | 2.93 |
| L7 | S13 | Aspherical surface | -4.33 | 2.03 | 565.387 | 3.15 |
| L7 | S14 | Aspherical surface | -9.58 | 0.43 | 565.387 | 3.73 |
| IR | S15 | Spherical surface | - | 0.21 | 518.642 | 4.00 |
| IR | S16 | Spherical surface | - | 0.25 | 518.642 | 4.00 |
| Photosensitive surface | S17 | Spherical surface | - | 0.00 | - | 3.85 |

L1 is the first lens 21, L2 is the second lens 22a, L3 is the second lens 22b, L4 is the second lens 22c, L5 is the third lens 23a, L6 is the third lens 23b, L7 is the third lens 23c, and IR is the light filter 240.

S1 and S2 are respectively the object-side surface and the image-side surface of the first lens 21, S3 and S4 are respectively the object-side surface and the image-side surface of the second lens 22a, S5 and S6 are respectively the object-side surface and the image-side surface of the second lens 22b, S7 and S8 are respectively the object-side surface and the image-side surface of the second lens 22c, S9 and S10 are respectively the object-side surface and the image-side surface of the third lens 23a, S11 and S12 are respectively the object-side surface and the image-side surface of the third lens 23b, S13 and S14 are respectively the object-side surface and the image-side surface of the third lens 23c, and S15 and S16 are respectively an object-side surface and an image-side surface of the light filter 240.

The thickness is a thickness of an optical element in the optical axis direction or a thickness of an air gap between optical elements. A thickness corresponding to the aperture stop 220 is a distance from the aperture stop 220 to the object-side surface of the first lens 21 along the optical axis direction, a thickness corresponding to the object-side surface of the first lens 21 is a thickness of the first lens 21 along the optical axis direction, and a thickness corresponding to the image-side surface of the first lens 21 is a distance from the image-side surface of the first lens 21 to the object-side surface of the second lens 22a along the optical axis direction, and so on.

The material indicates a refractive index and an Abbe number of a lens.

The Y semi-aperture indicates a diameter of a lens.

Table 2 shows aspherical coefficients of the lenses in the lens assembly according to Embodiment 1 of this application.

| | | k | A4 | A6 | A8 | A10 |
|---|---|---|---|---|---|---|
| L1 | S1 | 0.14 | -1.27E-04 | -1.78E-06 | 4.56E-07 | -1.10E-07 |
| | S2 | 0.47 | -1.75E-04 | 1.06E-05 | -2.32E-06 | 2.83E-07 |
| L2 | S3 | 0.00 | 3.53E-03 | -4.65E-04 | -6.15E-05 | 1.89E-04 |
| | S4 | 0.00 | 7.67E-03 | -5.17E-03 | 6.09E-03 | -4.85E-03 |
| L3 | S5 | 0.00 | -1.26E-02 | -2.72E-03 | 4.90E-03 | -4.03E-03 |
| | S6 | -1.62 | -1.65E-02 | 2.68E-03 | -5.89E-04 | 1.77E-04 |
| L4 | S7 | 0.00 | -2.16E+03 | -8.01E-04 | 1.257E-03 | -1.44E-03 |
| | S8 | 0.00 | 8.19E-04 | -4.78E-04 | 4.25E-04 | -2.34E-04 |
| L5 | S9 | 0.00 | 5.11E-02 | -2.35E-02 | 1.00E-04 | 1.01E-04 |
| | S10 | 0.00 | 4.92E+02 | -1.88E+02 | 6.77E-02 | -1.84E-03 |
| L6 | S11 | 0.00 | -4.99E+03 | -3.55E-03 | 6.38E-03 | -5.50E-03 |
| | S12 | 0.00 | -7.91E-03 | 3.65E-03 | -4.58E-03 | 4.61E-03 |
| L7 | S13 | 0.00 | -7.79E-03 | 6.07E-03 | -6.41E-03 | 5.75E-03 |
| | S14 | 0.00 | -1.66E-03 | 4.86E-03 | -2.06E-03 | 7.62E-04 |
| | | A12 | A14 | A16 | A18 | A20 |
| L1 | S1 | 1.15E-08 | -6.54E-10 | 2.10E-11 | -3.60E-13 | 2.55E-15 |
| | S2 | -1.98E-08 | 8.34E-10 | -2.07E-11 | 2.78E-13 | -1.54E-15 |
| L2 | S3 | -1.39E-04 | 6.07E-05 | -1.79E-05 | 3.69E-06 | -5.39E-07 |
| | S4 | 2.60E-03 | -9.74E-04 | 2.60E-04 | -5.01E-05 | 6.95E-06 |
| L3 | S5 | 2.18E-03 | -8.25E-04 | 2.24E-04 | -4.38E-05 | 6.21E-06 |
| | S6 | -5.51E-05 | 1.19E-05 | -1.47E-06 | 9.64E-08 | -2.66E-09 |
| L4 | S7 | 1.08E-03 | -5.50E-04 | 1.98E-04 | -5.08E-05 | 9.40E-06 |
| | S8 | 8.02E-05 | -1.72E-05 | 2.27E-06 | -1.68E-07 | 5.34E-09 |
| L5 | S9 | -7.74E-03 | 1.02E-02 | -7.64E-03 | 3.83E-03 | -1.33E-03 |
| | S10 | 3.83E-04 | -5.91E-05 | 6.66E-06 | -5.12E-07 | 2.03E-08 |
| L6 | S11 | 8.75E-04 | 2.98E-03 | -3.42E-03 | 1.98E-03 | -7.26E-04 |
| | S12 | -3.12E-03 | 1.45E-03 | -4.71E-04 | 1.08E-04 | -1.72E-05 |
| L7 | S13 | -3.53E-03 | 1.49E-03 | -4.45E-04 | 9.44E-05 | -1.43E-05 |
| | S14 | -2.02E-04 | 3.38E-05 | -2.67E-06 | -1.80E-07 | 7.73E-08 |
| | | A22 | A24 | A26 | A28 | A30 |
| L1 | S1 | 0.00E+00 | 0.00E+00 | 0.00E+00 | 0.00E+00 | 0.00E+00 |
| | S2 | 0.00E+00 | 0.00E+00 | 0.00E+00 | 0.00E+00 | 0.00E+00 |

(continued)

| | | A22 | A24 | A26 | A28 | A30 |
|---|---|---|---|---|---|---|
| L2 | S3 | 5.57E-08 | -3.96E-09 | 1.85E-10 | -5.07E-12 | 6.20E-14 |
| | S4 | -6.87E-07 | 4.71E-08 | -2.12E-09 | 5.66E-11 | -6.76E-13 |
| L3 | S5 | -6.28E-07 | 4.42E-08 | -2.05E-09 | 5.61E-11 | -6.87E-13 |
| | S6 | 0.00E+00 | 0.00E+00 | 0.00E+00 | 0.00E+00 | 0.00E+00 |
| L4 | S7 | -1.24E-06 | 1.14E-07 | -6.93E-09 | 2.50E-10 | -4.06E-12 |
| | S8 | 0.00E+00 | 0.00E+00 | 0.00E+00 | 0.00E+00 | 0.00E+00 |
| L5 | S9 | 3.21E-04 | -5.31E-05 | 5.75E-06 | -3.67E-07 | 1.05E-08 |
| | S10 | 0.00E+00 | 0.00E+00 | 0.00E+00 | 0.00E+00 | 0.00E+00 |
| L6 | S11 | 1.78E-04 | -2.90E-05 | 3.05E-06 | -1.86E-07 | 5.06E-09 |
| | S12 | 1.88E-06 | -1.35E-07 | 5.82E-09 | -1.23E-10 | 6.09E-13 |
| L7 | S13 | 1.52E-06 | -1.11E-07 | 5.30E-09 | -1.47E-10 | 1.81E-12 |
| | S14 | -1.02E-08 | 7.77E-10 | -3.58E-11 | 9.32E-13 | -1.06E-14 |

It can be learned from Table 2 that all the lenses in the lens assembly 210 are aspherical lenses. In other words, the lens assembly 210 includes 14 aspherical surfaces. An aspherical surface profile Z of each lens in the lens assembly 210 may be calculated by using the following aspherical formula:

$$Z = \frac{cr^2}{1+\sqrt{1-(1+k)c^2r^2}} + \sum_{i=1}^{n} A_I E_I(x,y) .$$

A parameter c=1/R, R is a curvature radius, r is a distance from a point on an optical surface to the optical axis, Z is an aspherical sag of the point along the optical axis direction, k is a quadric coefficient of the surface, i is an aspherical coefficient term, and Ai is an aspherical coefficient. In this embodiment, i is 30. The lenses may be simulated based on the obtained aspherical surface profiles and the like, to finally obtain the camera modules shown in FIG. 4 and FIG. 5.

In conclusion, an optical system design with a wide aperture, a small size, and a high resolution of the lens assembly 210 can be implemented by appropriately selecting a material of each lens, combining focal powers of the lenses and focal powers of groups, and optimizing parameters such as a curvature radius, an aspherical coefficient, and a center thickness of each lens.

For optical parameters of the lens assembly including the foregoing lenses, refer to Table 3 below.

Table 3 shows optical parameters of the lens assembly according to Embodiment 1 of this application.

| | |
|---|---|
| F-number F# in the infinity state | 1.56 |
| F-number F# in the macro state | 2.63 |
| Focal length in the infinity state/mm | 17.5 |
| Focal length in the macro state/mm | 9.82 |
| Half image height/mm | 3.75 |
| Magnification in the macro state | 0.56x |
| Object distance in the macro state/mm | 34.8 |
| Preset movement distance/mm | 2.68 |
| Total track length of the lens assembly/mm | 19 |

It can be learned from Table 3 that the lens assembly 210 provided in Embodiment 1 of this application has a wide aperture feature, can satisfy image shooting effect in the infinity state, has a high magnification and a high resolution in the macro state, and has a relatively small total track length.

FIG. 6 is a diagram of a curve of a modulation transfer function of a lens assembly in an infinity state according to Embodiment 1 of this application. FIG. 7 is a diagram of a curve of a modulation transfer function of a lens assembly in a macro state according to Embodiment 1 of this application.

A solid line and a dashed line in FIG. 6 and FIG. 7 respectively represent a sagittal field of view and a tangential field of view. It can be learned from FIG. 6 and FIG. 7 that the lens assembly 210 has a good resolution and contrast, thereby ensuring high imaging quality.

Embodiment 2

FIG. 8 is a diagram of a simulation structure of a camera module when a lens assembly is in an infinity state according to Embodiment 2 of this application. FIG. 9 is a diagram of a simulation structure of a camera module when a lens assembly is in a macro state according to Embodiment 2 of this application.

In this embodiment of this application, as shown in FIG. 8 and FIG. 9, the lens assembly 210 includes one first lens 21, one second lens group 22, and one third lens group 23. The second lens group 22 may include three second lenses: a second lens 22a, a second lens 22b, and a second lens 22c, respectively. The third lens group 23 may include three third lenses: a third lens 23a, a third lens 23b, and a third lens 23c, respectively. To be specific, an aperture stop 220, the first lens 21, the second lens 22a, the second lens 22b, the second lens 22c, the third lens 23a, the third lens 23b, the third lens 23c, a light filter 240, and an image sensor 230 are sequentially arranged along an optical axis direction from an object side to an image side.

A focal length f1 of the first lens 21 and a focal length EFL1 of the lens assembly 210 in the infinity state satisfy $|f1/EFL|=1.32$.

A focal length f2 of the second lens group 22 and the focal length EFL1 of the lens assembly 210 in the infinity state satisfy $|f2/EFL|=0.70$.

A focal length f3 of the third lens group 23 and the focal length EFL1 of the lens assembly 210 in the infinity state satisfy $|f3/EFL|=0.63$.

The first lens 21 may have a positive focal power. At least a part that is of an object-side surface of the first lens 21 and that corresponds to an optical axis may be a convex surface, and at least a part that is of an image-side surface of the first lens 21 and that corresponds to the optical axis may be a convex surface.

The second lens group 22 may have a positive focal power. The second lens 22a may have a positive focal power. At least a part that is of an object-side surface of the second lens 22a and that corresponds to the optical axis may be a convex surface, and at least a part that is of an image-side surface of the second lens 22a and that corresponds to the optical axis may be a convex surface.

The second lens 22b may have a negative focal power. At least a part that is of an object-side surface of the second lens 22b and that corresponds to the optical axis may be a convex surface, and at least a part that is of an image-side surface of the second lens 22b and that corresponds to the optical axis may be a convex surface.

The second lens 22c may have a positive focal power. At least a part that is of an object-side surface of the second lens 22c and that corresponds to the optical axis may be a convex surface, and at least a part that is of an image-side surface of the second lens 22c and that corresponds to the optical axis may be a concave surface.

The third lens group 23 may have a negative focal power. The third lens 23a may have a negative focal power. At least a part that is of an object-side surface of the third lens 23a and that corresponds to the optical axis may be a concave surface, and at least a part that is of an image-side surface of the third lens 23a and that corresponds to the optical axis may be a convex surface.

The third lens 23b may have a positive focal power. At least a part that is of an object-side surface of the third lens 23b and that corresponds to the optical axis may be a concave surface, and at least a part that is of an image-side surface of the third lens 23b and that corresponds to the optical axis may be a concave surface.

The third lens 23c may have a negative focal power. At least a part that is of an object-side surface of the third lens 23c and that corresponds to the optical axis may be a concave surface, and at least a part that is of an image-side surface of the third lens 23c and that corresponds to the optical axis may be a concave surface.

An f-number F# of the lens assembly 210 in the infinity state is equal to 1.43.

An f-number F# of the lens assembly 210 in the macro state is equal to 2.22.

A magnification Mag of the lens assembly 210 in the macro state is equal to 0.42x.

A ratio of the focal length EFL1 of the lens assembly 210 in the infinity state to a total track length TTL of the lens assembly 210 in the infinity state is $EFL1/TTL=0.85$.

A ratio of a preset distance L by which the second lens group 22 moves, to the total track length TTL of the lens assembly 210 in the infinity state is $L/TTL=0.15$.

The preset distance L by which the second lens group 22 moves and an object distance C of the lens assembly 210 in the macro state satisfy: $(L/C)*10=0.76$.

A ratio of the focal length EFL1 of the lens assembly 210 in the infinity state to a focal length EFL2 of the lens assembly 210 in the macro state is $EFL2/EFL1=0.65$.

Table 4 shows optical parameters of the optical elements in the camera module according to Embodiment 2 of this application.

| | Surface number | Surface profile | Curvature radius | Thickness | Material | Y semi-aperture |
|---|---|---|---|---|---|---|
| Aperture stop | S0 | - | - | -1.86 | - | 4.97 |
| L1 | S1 | Aspherical surface | 7.29 | 2.15 | 498.816 | 4.97 |
| | S2 | Aspherical surface | 30.10 | 3.33 | | 4.81 |
| L2 | S3 | Aspherical surface | 8.37 | 1.18 | 543.559 | 3.49 |
| | S4 | Aspherical surface | 220.36 | 0.05 | | 3.34 |
| L3 | S5 | Aspherical surface | 4.40 | 1.01 | 677.192 | 3.22 |
| | S6 | Aspherical surface | 2.38 | 1.14 | | 2.69 |
| L4 | S7 | Aspherical surface | 7.34 | 1.52 | 549.453 | 2.61 |
| | S8 | Aspherical surface | -7.19 | 0.06 | | 2.44 |
| L5 | S9 | Aspherical surface | -5.80 | 0.37 | 542.559 | 2.01 |
| | S10 | Aspherical surface | 24.47 | 0.77 | | 2.02 |
| L6 | S11 | Aspherical surface | -21.72 | 1.89 | 677.192 | 2.08 |
| | S12 | Aspherical surface | -24.03 | 0.95 | | 2.95 |
| L7 | S13 | Aspherical surface | -9.57 | 1.12 | 537.556 | 3.28 |
| | S14 | Aspherical surface | -10.15 | 0.38 | | 3.57 |
| IR | S15 | Spherical surface | - | 0.21 | 518.642 | 4.00 |
| | S16 | Spherical surface | - | 0.19 | | 4.00 |
| Photosensitive surface | S17 | Spherical surface | - | 0.00 | - | 3.77 |

L1 is the first lens 21, L2 is the second lens 22a, L3 is the second lens 22b, L4 is the second lens 22c, L5 is the third lens 23a, L6 is the third lens 23b, L7 is the third lens 23c, and IR is the light filter 240.

S is an object-side surface and an image-side surface of each optical element. For specific meanings of S0 to S16, refer to Embodiment 1. Details are not described in this embodiment again.

For meanings of parameters such as a curvature radius, a thickness, a material, and a Y semi-aperture, refer to Embodiment 1. Details are not described in this embodiment.

Table 5 shows aspherical coefficients of the lenses in the lens assembly according to Embodiment 2 of this application.

| | | k | A4 | A6 | A8 | A10 |
|---|---|---|---|---|---|---|
| L1 | S1 | 1.68E-01 | -1.21E-04 | -1.56E-05 | 4.42E-06 | -8.22E-07 |
| | S2 | 1.91E+00 | -1.61E-04 | 7.60E-06 | -2.94E-06 | 4.18E-07 |
| L2 | S3 | 0.00E+00 | 3.54E-03 | -3.12E-04 | -1.62E-04 | 2.00E-04 |
| | S4 | 0.00E+00 | 8.12E-03 | -2.83E-03 | 2.20E-03 | -1.89E-03 |
| L3 | S5 | 0.00E+00 | -1.28E-02 | -4.39E-04 | 1.05E-03 | -9.37E-04 |
| | S6 | -1.63E+00 | -1.72E-02 | 2.87E-03 | -6.82E-04 | 2.66E-04 |
| L4 | S7 | 0.00E+00 | -1.85E-03 | -1.37E-03 | 3.18E-03 | -4.97E-03 |
| | S8 | 0.00E+00 | 8.46E-04 | -5.41E-04 | 4.90E-04 | -2.92E-04 |
| L5 | S9 | 0.00E+00 | 5.39E-02 | -2.66E-02 | 1.98E-02 | -2.20E-02 |
| | S10 | 0.00E+00 | 5.60E-02 | -2.25E-02 | 8.87E-03 | -2.76E-03 |

(continued)

| | | k | A4 | A6 | A8 | A10 |
|---|---|---|---|---|---|---|
| L6 | S11 | 0.00E+00 | -5.29E-03 | -1.89E-03 | 6.10E-03 | -1.47E-02 |
| | S12 | 0.00E+00 | -7.97E-03 | -1.72E-03 | 8.75E-04 | 4.33E-04 |
| L7 | S13 | 0.00E+00 | -5.67E-03 | 1.71E-02 | -4.88E-02 | 5.58E-02 |
| | S14 | 0.00E+00 | 2.82E-02 | -2.31E-02 | 7.33E-03 | 6.39E-04 |
| | | A12 | A14 | A16 | A18 | A20 |
| L1 | S1 | 8.64E-08 | -5.44E-09 | 2.04E-10 | -4.22E-12 | 3.72E-14 |
| | S2 | -3.22E-08 | 1.47E-09 | -3.80E-11 | 4.66E-13 | -1.22E-15 |
| L2 | S3 | -1.30E-04 | 5.80E-05 | -1.83E-05 | 4.09E-06 | -6.50E-07 |
| | S4 | 1.25E-03 | -5.70E-04 | 1.80E-04 | -3.98E-05 | 6.21E-06 |
| L3 | S5 | 6.78E-04 | -3.41E-04 | 1.17E-04 | -2.77E-05 | 4.59E-06 |
| | S6 | -9.84E-05 | 2.22E-05 | -2.78E-06 | 1.79E-07 | -4.65E-09 |
| L4 | S7 | 5.03E-03 | -3.44E-03 | 1.65E-03 | -5.60E-04 | 1.36E-04 |
| | S8 | 1. 13E-04 | -2.85E-05 | 4.56E-06 | -4.10E-07 | 1.57E-08 |
| L5 | S9 | 2.30E-02 | -1.77E-02 | 9.49E-03 | -3.50E-03 | 8.57E-04 |
| | S10 | 7.48E-04 | -1.90E-04 | 4.03E-05 | -5.45E-06 | 3.23E-07 |
| L6 | S11 | 2.21E-02 | -2.22E-02 | 1.56E-02 | -7.86E-03 | 2.85E-03 |
| | S12 | -8.77E-04 | 6.24E-04 | -2.65E-04 | 7.43E-05 | -1.43E-05 |
| L7 | S13 | -3.77E-02 | 1.67E-02 | -5.08E-03 | 1.09E-03 | -1.67E-04 |
| | S14 | -1.89E-03 | 9.74E-04 | -2.89E-04 | 5.68E-05 | -7.76E-06 |
| | | A22 | A24 | A26 | A28 | A30 |
| L1 | S1 | 0.00E+00 | 0.00E+00 | 0.00E+00 | 0.00E+00 | 0.00E+00 |
| | S2 | 0.00E+00 | 0.00E+00 | 0.00E+00 | 0.00E+00 | 0.00E+00 |
| L2 | S3 | 7.27E-08 | -5.58E-09 | 2.78E-10 | -8.14E-12 | 1.06E-13 |
| | S4 | -6.79E-07 | 5.07E-08 | -2.46E-09 | 7.02E-11 | -8.88E-13 |
| L3 | S5 | -5.29E-07 | 4.15E-08 | -2.10E-09 | 6.17E-11 | -7.96E-13 |
| | S6 | 0.00E+00 | 0.00E+00 | 0.00E+00 | 0.00E+00 | 0.00E+00 |
| L4 | S7 | -2.35E-05 | 2.81E-06 | -2.22E-07 | 1.04E-08 | -2.18E-10 |
| | S8 | 0.00E+00 | 0.00E+00 | 0.00E+00 | 0.00E+00 | 0.00E+00 |
| L5 | S9 | -1.25E-04 | 6.75E-06 | 9.37E-07 | -1.81E-07 | 9.16E-09 |
| | S10 | 0.00E+00 | 0.00E+00 | 0.00E+00 | 0.00E+00 | 0.00E+00 |
| L6 | S11 | -7.38E-04 | 1.33E-04 | -1.58E-05 | 1.11E-06 | -3.52E-08 |
| | S12 | 1.89E-06 | -1.70E-07 | 9.86E-09 | -3.34E-10 | 5.00E-12 |
| L7 | S13 | 1.80E-05 | -1.35E-06 | 6.62E-08 | -1.92E-09 | 2.50E-11 |
| | S14 | 7.42E-07 | -4.87E-08 | 2.10E-09 | -5.35E-11 | 6.10E-13 |

It can be learned from Table 5 that all the lenses in the lens assembly 210 are aspherical lenses. In other words, the lens assembly 210 includes 14 aspherical surfaces. An aspherical surface profile Z of each lens in the lens assembly 210 may be calculated by using the following aspherical formula:

$$Z = \frac{cr^2}{1+\sqrt{1-(1+k)c^2r^2}} + \sum_{i=1}^{n} A_I E_I(x,y)$$

A parameter c=1/R, R is a curvature radius, r is a distance from a point on an optical surface to the optical axis, Z is an aspherical sag of the point along the optical axis direction, k is a quadric coefficient of the surface, i is an aspherical coefficient term, and Ai is an aspherical coefficient. In this embodiment, i is 30. The lenses may be simulated based on the obtained aspherical surface profiles and the like, to finally obtain the camera modules shown in FIG. 8 and FIG. 9.

In conclusion, an optical system design with a wide aperture, a small size, and a high resolution of the lens assembly 210 can be implemented by appropriately selecting a material of each lens, combining focal powers of the lenses and focal powers of groups, and optimizing parameters such as a curvature radius, an aspherical coefficient, and a center thickness of each lens.

For optical parameters of the lens assembly including the foregoing lenses, refer to Table 6 below.

Table 6 shows optical parameters of the lens assembly according to Embodiment 2 of this application.

| | |
|---|---|
| F-number F# in the infinity state | 1.43 |
| F-number F# in the macro state | 2.22 |
| Focal length in the infinity state/mm | 14.2 |
| Focal length in the macro state/mm | 9.23 |
| Half image height/mm | 3.75 |
| Magnification in the macro state | 0.42x |
| Object distance in the macro state/mm | 33.8 |
| Preset movement distance/mm | 2.56 |
| Total track length of the lens assembly/mm | 16.8 |

It can be learned from Table 6 that the lens assembly 210 provided in Embodiment 2 of this application has a wide aperture feature, can satisfy image shooting effect in the infinity state, has a high magnification and a high resolution in the macro state, and has a relatively small total track length.

FIG. 10 is a diagram of a curve of a modulation transfer function of a lens assembly in an infinity state according to Embodiment 2 of this application. FIG. 11 is a diagram of a curve of a modulation transfer function of a lens assembly in a macro state according to Embodiment 2 of this application.

A solid line and a dashed line in FIG. 10 and FIG. 11 respectively represent a sagittal field of view and a tangential field of view. It can be learned from FIG. 10 and FIG. 11 that the lens assembly 210 has a good resolution and contrast, thereby ensuring high imaging quality.

Embodiment 3

FIG. 12 is a diagram of a simulation structure of a camera module when a lens assembly is in an infinity state according to Embodiment 3 of this application. FIG. 13 is a diagram of a simulation structure of a camera module when a lens assembly is in a macro state according to Embodiment 3 of this application.

In this embodiment of this application, as shown in FIG. 12 and FIG. 13, the lens assembly 210 includes one first lens 21, one second lens group 22, and one third lens group 23. The second lens group 22 may include two second lenses: a second lens 22a and a second lens 22b, respectively. The third lens group 23 may include three third lenses: a third lens 23a, a third lens 23b, and a third lens 23c, respectively.

The camera module 20 may further include a prism 250. To be specific, the prism 250, an aperture stop (not shown in the figure), the first lens 21, the second lens 22a, the second lens 22b, the third lens 23a, the third lens 23b, the third lens 23c, a light filter 240, and an image sensor 230 are sequentially arranged along an optical axis direction from an object side to an image side.

A focal length f1 of the first lens 21 and a focal length EFL1 of the lens assembly 210 in the infinity state satisfy |f1/EFL|=1.41.

A focal length f2 of the second lens group 22 and the focal length EFL1 of the lens assembly 210 in the infinity state satisfy |f2/EFL|=0.75.

A focal length f3 of the third lens group 23 and the focal length EFL1 of the lens assembly 210 in the infinity state satisfy |f3/EFL|=0.67.

The first lens 21 may have a positive focal power. At least a part that is of an object-side surface of the first lens 21 and that corresponds to an optical axis may be a convex surface, and at least a part that is of an image-side surface of the first lens 21 and that corresponds to the optical axis may be a convex surface.

The second lens group 22 may have a positive focal power. The second lens 22a may have a positive focal power. At least a part that is of an object-side surface of the second lens 22a and that corresponds to the optical axis may be a convex surface, and at least a part that is of an image-side surface of the second lens 22a and that corresponds to the optical axis may be a concave surface.

The second lens 22b may have a negative focal power. At least a part that is of an object-side surface of the second lens 22b and that corresponds to the optical axis may be a concave surface, and at least a part that is of an image-side surface of the second lens 22b and that corresponds to the optical axis may be a convex surface.

The third lens group 23 may have a negative focal power. The third lens 23a may have a negative focal power. At least a part that is of an object-side surface of the third lens 23a and that corresponds to the optical axis may be a concave surface, and at least a part that is of an image-side surface of the third lens 23a and that corresponds to the optical axis may be a convex surface.

The third lens 23b may have a positive focal power. At least a part that is of an object-side surface of the third lens 23b and that corresponds to the optical axis may be a convex surface, and at least a part that is of an image-side surface of the third lens 23b and that corresponds to the optical axis may be a convex surface.

The third lens 23c may have a negative focal power. At least a part that is of an object-side surface of the third lens 23c and that corresponds to the optical axis may be a concave surface, and at least a part that is of an image-side surface of the third lens 23c and that corresponds to the optical axis may be a concave surface.

An f-number F# of the lens assembly 210 in the infinity state is equal to 1.54.

An f-number F# of the lens assembly 210 in the macro state is equal to 2.05.

A magnification Mag of the lens assembly 210 in the macro state is equal to 0.3x.

A ratio of the focal length EFL1 of the lens assembly 210 in the infinity state to a total track length TTL of the lens assembly 210 in the infinity state is EFL1/TTL=0.83.

A ratio of a preset distance L by which the second lens group 22 moves, to the total track length TTL of the lens assembly 210 in the infinity state is L/TTL=0.15.

The preset distance L by which the second lens group 22 moves and an object distance C of the lens assembly 210 in the macro state satisfy: (L/C)*10=0.52.

A ratio of the focal length EFL1 of the lens assembly 210 in the infinity state to a focal length EFL2 of the lens assembly 210 in the macro state is EFL2/EFL1=0.78.

Table 7 shows optical parameters of the optical elements in the camera module according to Embodiment 3 of this application.

| | Surface number | Surface profile | Curvature radius | Thickness | Material | Y semi-aperture |
|---|---|---|---|---|---|---|
| Prism | S0 | Aspherical surface | - | 5.60 | 518.641 | 4.30 |
| | S01 | Aspherical surface | - | 1.25 | | 4.30 |
| L1 | S1 | Aspherical surface | 11.32 | 1.17 | 545.561 | 4.30 |
| | S2 | Aspherical surface | 59.14 | 2.90 | | 4.21 |
| L2 | S3 | Aspherical surface | 4.85 | 2.33 | 545.561 | 3.67 |
| | S4 | Aspherical surface | -38.32 | 0.24 | | 3.46 |
| L3 | S5 | Aspherical surface | -10.89 | 1.27 | 677.192 | 3.28 |
| | S6 | Aspherical surface | 72.16 | 0.44 | | 2.53 |
| L4 | S7 | Aspherical surface | -11.63 | 0.50 | 599.3 | 2.30 |
| | S8 | Aspherical surface | 6.10 | 0.23 | | 2.03 |
| L5 | S9 | Aspherical surface | 3.44 | 1.58 | 677.192 | 2.04 |
| | S10 | Aspherical surface | 5.85 | 1.94 | | 2.31 |
| L6 | S11 | Aspherical surface | -18.20 | 2.00 | 673.194 | 2.90 |
| | S12 | Aspherical surface | -51.52 | 0.24 | | 3.40 |

(continued)

| | Surface number | Surface profile | Curvature radius | Thickness | Material | Y semi-aperture |
|---|---|---|---|---|---|---|
| IR | S13 | Spherical surface | - | 0.30 | 518.641 | 4.00 |
| | S14 | Spherical surface | - | 0.84 | | 4.00 |
| Photosensitive surface | S15 | Spherical surface | - | 0.00 | - | 3.75 |

L1 is the first lens 21, L2 is the second lens 22a, L3 is the second lens 22b, L4 is the second lens 22c, L5 is the third lens 23a, L6 is the third lens 23b, L7 is the third lens 23c, and IR is the light filter 240.

In this embodiment, S0 and S01 are respectively a surface facing an object side and a surface facing an image side that are of the prism 250, S1 and S2 are respectively the object-side surface and the image-side surface of the first lens 21, S3 and S4 are respectively the object-side surface and the image-side surface of the second lens 22a, S5 and S6 are respectively the object-side surface and the image-side surface of the second lens 22b, S7 and S8 are respectively the object-side surface and the image-side surface of the third lens 23a, S9 and S10 are respectively the object-side surface and the image-side surface of the third lens 23b, S11 and S12 are respectively the object-side surface and the image-side surface of the third lens 23c, and S13 and S14 are respectively an object-side surface and an image-side surface of the light filter 240.

For meanings of parameters such as a curvature radius, a thickness, a material, and a Y semi-aperture, refer to Embodiment 1. Details are not described in this embodiment.

Table 8 shows aspherical coefficients of the lenses in the lens assembly according to Embodiment 3 of this application.

| | | k | A4 | A6 | A8 | A10 |
|---|---|---|---|---|---|---|
| L1 | S1 | 6.20E-01 | -4.28E-05 | 5.73E-05 | -4.60E-05 | 2.64E-05 |
| | S2 | -1.11E+01 | 2.82E-04 | 7.97E-05 | -8.26E-05 | 5.67E-05 |
| L2 | S3 | -3.01E-03 | 2.84E-04 | -1.99E-04 | 2.66E-04 | -1.98E-04 |
| | S4 | -1.81E+00 | -1.41E-03 | 4.78E-03 | -5.58E-03 | 4.52E-03 |
| L3 | S5 | 1.38E-01 | 3.37E-03 | 4.40E-03 | -5.61E-03 | 4.84E-03 |
| | S6 | 9.90E+01 | 6.86E-03 | -5.39E-04 | 1.90E-03 | -3.27E-03 |
| L4 | S7 | -8.01E-02 | 3.33E-02 | -1.01E-02 | 7.41E-03 | -8.61E-03 |
| | S8 | 7.03E-01 | -2.84E-04 | 6.07E-03 | 6.58E-03 | -2.09E-02 |
| L5 | S9 | -3.96E-02 | -3.52E-02 | 3.74E-03 | 1.93E-02 | -4.23E-02 |
| | S10 | -6.46E-01 | -1.23E-02 | 8.66E-04 | 7.10E-04 | -1.68E-03 |
| L6 | S11 | 2.65E+00 | -7.56E-03 | -4.73E-04 | 3.14E-03 | -4.32E-03 |
| | S12 | 9.79E+01 | -1.15E-02 | 7.72E-03 | -8.78E-03 | 6.71E-03 |
| | | A12 | A14 | A16 | A18 | A20 |
| L1 | S1 | -9.44E-06 | 2.25E-06 | -3.75E-07 | 4.46E-08 | -3.81E-09 |
| | S2 | -2.32E-05 | 6.19E-06 | -1.13E-06 | 1.46E-07 | -1.34E-08 |
| L2 | S3 | 9.67E-05 | -3.22E-05 | 7.46E-06 | -1.22E-06 | 1.42E-07 |
| | S4 | -2.42E-03 | 8.75E-04 | -2.21E-04 | 3.95E-05 | -5.04E-06 |
| L3 | S5 | -2.77E-03 | 1.08E-03 | -2.92E-04 | 5.59E-05 | -7.66E-06 |
| | S6 | 3.61E-03 | -2.66E-03 | 1.35E-03 | -4.76E-04 | 1.19E-04 |
| L4 | S7 | 8.61E-03 | -6.25E-03 | 3.25E-03 | -1.21E-03 | 3.25E-04 |
| | S8 | 2.68E-02 | -2.17E-02 | 1.22E-02 | -4.90E-03 | 1.42E-03 |
| L5 | S9 | 5.21E-02 | -4.38E-02 | 2.63E-02 | -1.16E-02 | 3.72E-03 |
| | S10 | 2.33E-03 | -2.21E-03 | 1.47E-03 | -7.00E-04 | 2.37E-04 |

(continued)

| | | A12 | A14 | A16 | A18 | A20 |
|---|---|---|---|---|---|---|
| L6 | S11 | 3.45E-03 | -1.82E-03 | 6.74E-04 | -1.78E-04 | 3.39E-05 |
| | S12 | -3.45E-03 | 1.23E-03 | -3.14E-04 | 5.79E-05 | -7.70E-06 |
| | | A22 | A24 | A26 | A28 | A30 |
| L1 | S1 | 2.32E-10 | -9.85E-12 | 2.76E-13 | -4.60E-15 | 3.44E-17 |
| | S2 | 8.72E-10 | -3.92E-11 | 1.16E-12 | -2.03E-14 | 1.60E-16 |
| L2 | S3 | -1.16E-08 | 6.52E-10 | -2.41E-11 | 5.25E-13 | -5.13E-15 |
| | S4 | 4.56E-07 | -2.86E-08 | 1.18E-09 | -2.88E-11 | 3.16E-13 |
| L3 | S5 | 7.43E-07 | -4.99E-08 | 2.21E-09 | -5.78E-11 | 6.79E-13 |
| | S6 | -2.08E-05 | 2.50E-06 | -1.96E-07 | 9.10E-09 | -1.88E-10 |
| L4 | S7 | -6.24E-05 | 8.32E-06 | -7.35E-07 | 3.87E-08 | -9.17E-10 |
| | S8 | -2.94E-04 | 4.31E-05 | -4.23E-06 | 2.52E-07 | -6.90E-09 |
| L5 | S9 | -8.69E-04 | 1.43E-04 | -1.58E-05 | 1.04E-06 | -3.12E-08 |
| | S10 | -5.66E-05 | 9.31E-06 | -1.00E-06 | 6.35E-08 | -1.79E-09 |
| L6 | S11 | -4.59E-06 | 4.32E-07 | -2.68E-08 | 9.90E-10 | -1.64E-11 |
| | S12 | 7.35E-07 | -4.89E-08 | 2.16E-09 | -5.67E-11 | 6.70E-13 |

It can be learned from Table 8 that all the lenses in the lens assembly 210 are aspherical lenses. In other words, the lens assembly 210 includes 12 aspherical surfaces. An aspherical surface profile Z of each lens in the lens assembly 210 may be calculated by using the following aspherical formula:

$$Z = \frac{cr^2}{1+\sqrt{1-(1+k)c^2r^2}} + \sum_{i=1}^{n} A_I E_I(x, y) .$$

A parameter c=1/R, R is a curvature radius, r is a distance from a point on an optical surface to the optical axis, Z is an aspherical sag of the point along the optical axis direction, k is a quadric coefficient of the surface, i is an aspherical coefficient term, and Ai is an aspherical coefficient. In this embodiment, i is 30. The lenses may be simulated based on the obtained aspherical surface profiles and the like, to finally obtain the camera modules shown in FIG. 12 and FIG. 13.

In conclusion, an optical system design with a wide aperture, a small size, and a high resolution of the lens assembly 210 can be implemented by appropriately selecting a material of each lens, combining focal powers of the lenses and focal powers of groups, and optimizing parameters such as a curvature radius, an aspherical coefficient, and a center thickness of each lens.

For optical parameters of the lens assembly including the foregoing lenses, refer to Table 9 below.

Table 9 shows optical parameters of the lens assembly according to Embodiment 3 of this application.

| | |
|---|---|
| F-number F# in the infinity state | 1.54 |
| F-number F# in the macro state | 2.05 |
| Focal length in the infinity state/mm | 13.3 |
| Focal length in the macro state/mm | 10.1 |
| Half image height/mm | 3.75 |
| Magnification in the macro state | 0.3x |
| Object distance in the macro state/mm | 46.3 |
| Preset movement distance/mm | 2.4 |
| Total track length of the lens assembly/mm | 16 |

It can be learned from Table 9 that the lens assembly 210 provided in Embodiment 3 of this application has a wide aperture feature, can satisfy image shooting effect in the infinity state, has a high magnification and a high resolution in the macro state, and has a relatively small total track length.

FIG. 14 is a diagram of a curve of a modulation transfer function of a lens assembly in an infinity state according to Embodiment 3 of this application. FIG. 15 is a diagram of a curve of a modulation transfer function of a lens assembly in a macro state according to Embodiment 3 of this application.

A solid line and a dashed line in FIG. 14 and FIG. 15 respectively represent a sagittal field of view and a tangential field of view. It can be learned from FIG. 14 and FIG. 15 that the lens assembly 210 has a good resolution and contrast, thereby ensuring high imaging quality.

Embodiment 4

FIG. 16 is a diagram of a simulation structure of a camera module when a lens assembly is in an infinity state according to Embodiment 4 of this application. FIG. 17 is a diagram of a simulation structure of a camera module when a lens assembly is in a macro state according to Embodiment 4 of this application.

In this embodiment of this application, as shown in FIG. 16 and FIG. 17, the lens assembly 210 includes one first lens 21, one second lens group 22, and one third lens group 23. The second lens group 22 may include three second lenses: a second lens 22a, a second lens 22b, and a second lens 22c, respectively. The third lens group 23 may include three third lenses: a third lens 23a, a third lens 23b, and a third lens 23c, respectively. To be specific, an aperture stop 220, the first lens 21, the second lens 22a, the second lens 22b, the second lens 22c, the third lens 23a, the third lens 23b, the third lens 23c, a light filter 240, and an image sensor 230 are sequentially arranged along an optical axis direction from an object side to an image side.

A focal length f1 of the first lens 21 and a focal length EFL1 of the lens assembly 210 in the infinity state satisfy $|f1/EFL|=1.25$.

A focal length f2 of the second lens group 22 and the focal length EFL1 of the lens assembly 210 in the infinity state satisfy $|f2/EFL|=0.85$.

A focal length f3 of the third lens group 23 and the focal length EFL1 of the lens assembly 210 in the infinity state satisfy $|f3/EFL|=2.46$.

The first lens 21 may have a positive focal power. At least a part that is of an object-side surface of the first lens 21 and that corresponds to an optical axis may be a convex surface, and at least a part that is of an image-side surface of the first lens 21 and that corresponds to the optical axis may be a concave surface.

The second lens group 22 may have a positive focal power. The second lens 22a may have a positive focal power. At least a part that is of an object-side surface of the second lens 22a and that corresponds to the optical axis may be a convex surface, and at least a part that is of an image-side surface of the second lens 22a and that corresponds to the optical axis may be a convex surface.

The second lens 22b may have a negative focal power. At least a part that is of an object-side surface of the second lens 22b and that corresponds to the optical axis may be a convex surface, and at least a part that is of an image-side surface of the second lens 22b and that corresponds to the optical axis may be a convex surface.

The second lens 22c may have a positive focal power. At least a part that is of an object-side surface of the second lens 22c and that corresponds to the optical axis may be a convex surface, and at least a part that is of an image-side surface of the second lens 22c and that corresponds to the optical axis may be a concave surface.

The third lens group 23 may have a negative focal power. The third lens 23a may have a negative focal power. At least a part that is of an object-side surface of the third lens 23a and that corresponds to the optical axis may be a concave surface, and at least a part that is of an image-side surface of the third lens 23a and that corresponds to the optical axis may be a concave surface.

The third lens 23b may have a negative focal power. At least a part that is of an object-side surface of the third lens 23b and that corresponds to the optical axis may be a concave surface, and at least a part that is of an image-side surface of the third lens 23b and that corresponds to the optical axis may be a concave surface.

The third lens 23c may have a positive focal power. At least a part that is of an object-side surface of the third lens 23c and that corresponds to the optical axis may be a concave surface, and at least a part that is of an image-side surface of the third lens 23c and that corresponds to the optical axis may be a concave surface.

An f-number F# of the lens assembly 210 in the infinity state is equal to 1.29.

An f-number F# of the lens assembly 210 in the macro state is equal to 1.92.

A magnification Mag of the lens assembly 210 in the macro state is equal to 0.31x.

A ratio of the focal length EFL1 of the lens assembly 210 in the infinity state to a total track length TTL of the lens assembly 210 in the infinity state is $EFL1/TTL=0.79$.

A ratio of a preset distance L by which the second lens group 22 moves, to the total track length TTL of the lens assembly 210 in the infinity state is $L/TTL=0.13$.

The preset distance L by which the second lens group 22 moves and an object distance C of the lens assembly 210 in the macro state satisfy: (L/C)*10=0.52.
A ratio of the focal length EFL1 of the lens assembly 210 in the infinity state to a focal length EFL2 of the lens assembly 210 in the macro state is EFL2/EFL1=0.84.

Table 10 shows optical parameters of the optical elements in the camera module according to Embodiment 4 of this application.

| | Surface number | Surface profile | Curvature radius | Thickness | Material | Y semi-aperture |
|---|---|---|---|---|---|---|
| Aperture stop | S0 | - | - | -1.62 | - | 5.50 |
| L1 | S1 | Aspherical surface | 9.07 | 2.53 | 498.816 | 5.50 |
| | S2 | Aspherical surface | -295.56 | 4.10 | | 5.40 |
| L2 | S3 | Aspherical surface | 6.65 | 1.22 | 537.556 | 3.56 |
| | S4 | Aspherical surface | 13.75 | 0.04 | | 3.44 |
| L3 | S5 | Aspherical surface | 4.23 | 0.89 | 677.192 | 3.32 |
| | S6 | Aspherical surface | 2.51 | 0.75 | | 2.79 |
| L4 | S7 | Aspherical surface | 6.69 | 1.67 | 548.46 | 2.75 |
| | S8 | Aspherical surface | -10.22 | 0.03 | | 2.52 |
| L5 | S9 | Aspherical surface | -5.51 | 0.53 | 544.499 | 2.16 |
| | S10 | Aspherical surface | -18.85 | 0.60 | | 1.93 |
| L6 | S11 | Aspherical surface | -14.47 | 2.74 | 677.192 | 1.96 |
| | S12 | Aspherical surface | -21.88 | 0.86 | | 3.00 |
| L7 | S13 | Aspherical surface | -6.39 | 1.26 | 543.559 | 3.12 |
| | S14 | Aspherical surface | -4.92 | 0.05 | | 3.65 |
| IR | S15 | Spherical surface | - | 0.21 | 518.641 | 4.00 |
| | S16 | Spherical surface | - | 0.05 | | 4.00 |
| Photosensitive surface | S17 | Spherical surface | - | 0.00 | - | - |

L1 is the first lens 21, L2 is the second lens 22a, L3 is the second lens 22b, L4 is the second lens 22c, L5 is the third lens 23a, L6 is the third lens 23b, L7 is the third lens 23c, and IR is the light filter 240.
S is an object-side surface and an image-side surface of each optical element. For specific meanings of S0 to S16, refer to Embodiment 1. Details are not described in this embodiment again.
For meanings of parameters such as a curvature radius, a thickness, a material, and a Y semi-aperture, refer to Embodiment 1. Details are not described in this embodiment.

Table 11 shows aspherical coefficients of the lenses in the lens assembly according to Embodiment 4 of this application.

| | | k | A4 | A6 | A8 | A10 |
|---|---|---|---|---|---|---|
| L1 | S1 | 1.87E-01 | -8.41E-05 | -1.40E-05 | 2.84E-06 | -4.19E-07 |
| | S2 | -9.73E+01 | -1.05E-05 | -9.72E-06 | 1.03E-06 | -1.47E-07 |
| L2 | S3 | 0.00E+00 | 3.70E-03 | -3.79E-03 | 5.64E-03 | -5.03E-03 |
| | S4 | 0.00E+00 | 4.09E-03 | -2.11E-03 | 2.37E-03 | -2.23E-03 |
| L3 | S5 | 0.00E+00 | -1.33E-02 | -2.04E-04 | 9.70E-04 | -8.87E-04 |
| | S6 | -1.55E+00 | -1.36E-02 | 1.50E-03 | -3.96E-04 | 3.20E-04 |
| L4 | S7 | 0.00E+00 | -1.29E-03 | -9.96E-04 | 1.94E-03 | -2.89E-03 |
| | S8 | 0.00E+00 | 9.12E-04 | -5.04E-04 | 3.49E-04 | -1.41E-04 |

(continued)

| | | k | A4 | A6 | A8 | A10 |
|---|---|---|---|---|---|---|
| L5 | S9 | 0.00E+00 | 4.60E-02 | -1.72E-02 | 2.09E-02 | -3.20E-02 |
| | S10 | 0.00E+00 | 5.11E-02 | -1.48E-02 | 9.46E-03 | -7.12E-03 |
| L6 | S11 | 0.00E+00 | 1.74E-03 | -1.14E-02 | 2.71E-02 | -4.81E-02 |
| | S12 | 0.00E+00 | -7.33E-03 | -3.92E-03 | 7.27E-03 | -7.61E-03 |
| L7 | S13 | 0.00E+00 | -1.77E-02 | 5.86E-03 | -3.33E-03 | 3.27E-04 |
| | S14 | 0.00E+00 | 8.37E-02 | -8.37E-02 | 6.61E-02 | -3.78E-02 |
| | | A12 | A14 | A16 | A18 | A20 |
| L1 | S1 | 3.54E-08 | -1.77E-09 | 5.19E-11 | -8.17E-13 | 5.27E-15 |
| | S2 | 1.52E-08 | -9.44E-10 | 3.33E-11 | -6.21E-13 | 4.73E-15 |
| L2 | S3 | 2.82E-03 | -1.05E-03 | 2.73E-04 | -5.00E-05 | 6.52E-06 |
| | S4 | 1.49E-03 | -6.83E-04 | 2.17E-04 | -4.85E-05 | 7.65E-06 |
| L3 | S5 | 6.42E-04 | -3.21E-04 | 1.09E-04 | -2.57E-05 | 4.23E-06 |
| | S6 | -1.50E-04 | 3.65E-05 | -4.82E-06 | 3.35E-07 | -9.67E-09 |
| L4 | S7 | 2.75E-03 | -1.74E-03 | 7.59E-04 | -2.35E-04 | 5.22E-05 |
| | S8 | 3.70E-05 | -6.51E-06 | 7.71E-07 | -5.49E-08 | 1.75E-09 |
| L5 | S9 | 3.57E-02 | -2.78E-02 | 1.54E-02 | -6.18E-03 | 1.79E-03 |
| | S10 | 4.02E-03 | -1.49E-03 | 3.41E-04 | -4.38E-05 | 2.42E-06 |
| L6 | S11 | 5.85E-02 | -4.97E-02 | 3.00E-02 | -1.31E-02 | 4.10E-03 |
| | S12 | 5.02E-03 | -2.24E-03 | 6.99E-04 | -1.57E-04 | 2.53E-05 |
| L7 | S13 | 6.84E-04 | -4.68E-04 | 1.67E-04 | -3.96E-05 | 6.51E-06 |
| | S14 | 1.48E-02 | -4.00E-03 | 7.70E-04 | -1.07E-04 | 1.08E-05 |
| | | A22 | A24 | A26 | A28 | A30 |
| L1 | S1 | 0.00E+00 | 0.00E+00 | 0.00E+00 | 0.00E+00 | 0.00E+00 |
| | S2 | 0.00E+00 | 0.00E+00 | 0.00E+00 | 0.00E+00 | 0.00E+00 |
| L2 | S3 | -6.03E-07 | 3.85E-08 | -1.62E-09 | 4.02E-11 | -4.48E-13 |
| | S4 | -8.48E-07 | 6.44E-08 | -3.19E-09 | 9.25E-11 | -1.19E-12 |
| L3 | S5 | -4.85E-07 | 3.79E-08 | -1.91E-09 | 5.65E-11 | -7.36E-13 |
| | S6 | 0.00E+00 | 0.00E+00 | 0.00E+00 | 0.00E+00 | 0.00E+00 |
| L4 | S7 | -8.22E-06 | 8.97E-07 | -6.45E-08 | 2.74E-09 | -5.23E-11 |
| | S8 | 0.00E+00 | 0.00E+00 | 0.00E+00 | 0.00E+00 | 0.00E+00 |
| L5 | S9 | -3.75E-04 | 5.52E-05 | -5.42E-06 | 3.20E-07 | -8.58E-09 |
| | S10 | 0.00E+00 | 0.00E+00 | 0.00E+00 | 0.00E+00 | 0.00E+00 |
| L6 | S11 | -9.15E-04 | 1.41E-04 | -1.44E-05 | 8.61E-07 | -2.31E-08 |
| | S12 | -2.91E-06 | 2.34E-07 | -1.24E-08 | 3.90E-10 | -5.51E-12 |
| L7 | S13 | -7.51E-07 | 5.94E-08 | -3.07E-09 | 9.33E-11 | -1.26E-12 |
| | S14 | -7.77E-07 | 3.93E-08 | -1.32E-09 | 2.65E-11 | -2.39E-13 |

It can be learned from Table 11 that all the lenses in the lens assembly 210 are aspherical lenses. In other words, the lens assembly 210 includes 14 aspherical surfaces. An aspherical surface profile Z of each lens in the lens assembly 210 may be calculated by using the following aspherical formula:

$$Z = \frac{cr^2}{1+\sqrt{1-(1+k)c^2r^2}} + \sum_{i=1}^{n} A_I E_I(x,y)$$

A parameter c=1/R, R is a curvature radius, r is a distance from a point on an optical surface to the optical axis, Z is an aspherical sag of the point along the optical axis direction, k is a quadric coefficient of the surface, i is an aspherical coefficient term, and Ai is an aspherical coefficient. In this embodiment, i is 30. The lenses may be simulated based on the obtained aspherical surface profiles and the like, to finally obtain the camera modules shown in FIG. 16 and FIG. 17.

In conclusion, an optical system design with a wide aperture, a small size, and a high resolution of the lens assembly 210 can be implemented by appropriately selecting a material of each lens, combining focal powers of the lenses and focal powers of groups, and optimizing parameters such as a curvature radius, an aspherical coefficient, and a center thickness of each lens.

For optical parameters of the lens assembly including the foregoing lenses, refer to Table 12 below.

Table 12 shows optical parameters of the lens assembly according to Embodiment 4 of this application.

| | |
|---|---|
| F-number F# in the infinity state | 1.29 |
| F-number F# in the macro state | 1.92 |
| Focal length in the infinity state/mm | 14.2 |
| Focal length in the macro state/mm | 11.9 |
| Half image height/mm | 3.75 |
| Magnification in the macro state | 0.31x |
| Object distance in the macro state/mm | 45.8 |
| Preset movement distance/mm | 2.36 |
| Total track length of the lens assembly/mm | 17.8 |

It can be learned from Table 12 that the lens assembly 210 provided in Embodiment 4 of this application has a wide aperture feature, can satisfy image shooting effect in the infinity state, has a high magnification and a high resolution in the macro state, and has a relatively small total track length.

FIG. 18 is a diagram of a curve of a modulation transfer function of a lens assembly in an infinity state according to Embodiment 4 of this application. FIG. 19 is a diagram of a curve of a modulation transfer function of a lens assembly in a macro state according to Embodiment 4 of this application.

A solid line and a dashed line in FIG. 18 and FIG. 19 respectively represent a sagittal field of view and a tangential field of view. It can be learned from FIG. 18 and FIG. 19 that the lens assembly 210 has a good resolution and contrast, thereby ensuring high imaging quality.

Embodiment 5

FIG. 20 is a diagram of a simulation structure of a camera module when a lens assembly is in an infinity state according to Embodiment 5 of this application. FIG. 21 is a diagram of a simulation structure of a camera module when a lens assembly is in a macro state according to Embodiment 5 of this application.

In this embodiment of this application, as shown in FIG. 20 and FIG. 21, the lens assembly 210 includes one first lens 21, one second lens group 22, and one third lens group 23. The second lens group 22 may include three second lenses: a second lens 22a, a second lens 22b, and a second lens 22c, respectively. The third lens group 23 may include three third lenses: a third lens 23a, a third lens 23b, and a third lens 23c, respectively. To be specific, an aperture stop 220, the first lens 21, the second lens 22a, the second lens 22b, the second lens 22c, the third lens 23a, the third lens 23b, the third lens 23c, a light filter 240, and an image sensor 230 are sequentially arranged along an optical axis direction from an object side to an image side.

A focal length f1 of the first lens 21 and a focal length EFL1 of the lens assembly 210 in the infinity state satisfy |f1/EFL|=1.36.

A focal length f2 of the second lens group 22 and the focal length EFL1 of the lens assembly 210 in the infinity state satisfy |f2/EFL|=0.68.

A focal length f3 of the third lens group 23 and the focal length EFL1 of the lens assembly 210 in the infinity state satisfy |f3/EFL|=0.45.

The first lens 21 may have a positive focal power. At least a part that is of an object-side surface of the first lens 21 and that corresponds to an optical axis may be a convex surface, and at least a part that is of an image-side surface of the first lens 21 and that corresponds to the optical axis may be a convex surface.

The second lens group 22 may have a positive focal power. The second lens 22a may have a positive focal power. At least a part that is of an object-side surface of the second lens 22a and that corresponds to the optical axis may be a convex surface, and at least a part that is of an image-side surface of the second lens 22a and that corresponds to the optical axis may be a concave surface.

The second lens 22b may have a negative focal power. At least a part that is of an object-side surface of the second lens 22b and that corresponds to the optical axis may be a convex surface, and at least a part that is of an image-side surface of the second lens 22b and that corresponds to the optical axis may be a convex surface.

The second lens 22c may have a positive focal power. At least a part that is of an object-side surface of the second lens 22c and that corresponds to the optical axis may be a convex surface, and at least a part that is of an image-side surface of the second lens 22c and that corresponds to the optical axis may be a concave surface.

The third lens group 23 may have a negative focal power. The third lens 23a may have a negative focal power. At least a part that is of an object-side surface of the third lens 23a and that corresponds to the optical axis may be a concave surface, and at least a part that is of an image-side surface of the third lens 23a and that corresponds to the optical axis may be a convex surface.

The third lens 23b may have a negative focal power. At least a part that is of an object-side surface of the third lens 23b and that corresponds to the optical axis may be a concave surface, and at least a part that is of an image-side surface of the third lens 23b and that corresponds to the optical axis may be a concave surface.

The third lens 23c may have a negative focal power. At least a part that is of an object-side surface of the third lens 23c and that corresponds to the optical axis may be a concave surface, and at least a part that is of an image-side surface of the third lens 23c and that corresponds to the optical axis may be a concave surface.

An f-number F# of the lens assembly 210 in the infinity state is equal to 1.48.

An f-number F# of the lens assembly 210 in the macro state is equal to 2.21.

A magnification Mag of the lens assembly 210 in the macro state is equal to 0.436x.

A ratio of the focal length EFL1 of the lens assembly 210 in the infinity state to a total track length TTL of the lens assembly 210 in the infinity state is EFL1/TTL=0.85.

A ratio of a preset distance L by which the second lens group 22 moves, to the total track length TTL of the lens assembly 210 in the infinity state is L/TTL=0.15.

The preset distance L by which the second lens group 22 moves and an object distance C of the lens assembly 210 in the macro state satisfy: (L/C)*10=0.78.

A ratio of the focal length EFL1 of the lens assembly 210 in the infinity state to a focal length EFL2 of the lens assembly 210 in the macro state is EFL2/EFL1=0.58.

Table 13 shows optical parameters of the optical elements in the camera module according to Embodiment 5 of this application.

| | Surface number | Surface profile | Curvature radius | Thickness | Material | Y semi-aperture |
|---|---|---|---|---|---|---|
| Aperture stop | S0 | - | - | -1.69 | - | 4.78 |
| L1 | S1 | Aspherical surface | 7.39 | 2.05 | 498.816 | 4.78 |
| | S2 | Aspherical surface | 28.51 | 3.36 | | 4.61 |
| L2 | S3 | Aspherical surface | 8.78 | 1.11 | 543.559 | 3.39 |
| | S4 | Aspherical surface | -530.38 | 0.05 | | 3.27 |
| L3 | S5 | Aspherical surface | 4.39 | 1.01 | 676.192 | 3.16 |
| | S6 | Aspherical surface | 2.39 | 1.14 | | 2.72 |
| L4 | S7 | Aspherical surface | 7.50 | 1.61 | 547.463 | 2.68 |
| | S8 | Aspherical surface | -6.89 | 0.07 | | 2.53 |
| L5 | S9 | Aspherical surface | -5.70 | 0.41 | 544.557 | 2.15 |
| | S10 | Aspherical surface | 62.75 | 0.76 | | 2.10 |
| L6 | S11 | Aspherical surface | -18.25 | 1.69 | 677.192 | 2.12 |
| | S12 | Aspherical surface | -20.75 | 0.93 | | 2.88 |

(continued)

| | Surface number | Surface profile | Curvature radius | Thickness | Material | Y semi-aperture |
|---|---|---|---|---|---|---|
| L7 | S13 | Aspherical surface | -9.39 | 1.16 | 544.56 | 3.19 |
| | S14 | Aspherical surface | -30.37 | 0.46 | | 3.51 |
| IR | S15 | Spherical surface | - | 0.21 | 518.641 | 4.00 |
| | S16 | Spherical surface | - | 0.28 | | 4.00 |
| Photosensitive surface | S17 | Spherical surface | - | 0.00 | - | 3.77 |

L1 is the first lens 21, L2 is the second lens 22a, L3 is the second lens 22b, L4 is the second lens 22c, L5 is the third lens 23a, L6 is the third lens 23b, L7 is the third lens 23c, and IR is the light filter 240.

S is an object-side surface and an image-side surface of each optical element. For specific meanings of S0 to S16, refer to Embodiment 1. Details are not described in this embodiment again.

For meanings of parameters such as a curvature radius, a thickness, a material, and a Y semi-aperture, refer to Embodiment 1. Details are not described in this embodiment.

Table 14 shows aspherical coefficients of the lenses in the lens assembly according to Embodiment 5 of this application.

| | | k | A4 | A6 | A8 | A10 |
|---|---|---|---|---|---|---|
| L1 | S1 | 1.86E-01 | -1.17E-04 | -1.74E-05 | 4.79E-06 | -9.10E-07 |
| | S2 | 2.49E+00 | -1.71E-04 | -1.33E-06 | -6.63E-07 | 9.62E-08 |
| L2 | S3 | 0.00E+00 | 3.69E-03 | -2.12E-04 | -3.45E-04 | 3.53E-04 |
| | S4 | 0.00E+00 | 8.34E-03 | -2.87E-03 | 2.19E-03 | -1.85E-03 |
| L3 | S5 | 0.00E+00 | -1.28E-02 | -4.52E-04 | 1.05E-03 | -9.30E-04 |
| | S6 | -1.64E+00 | -1.72E-02 | 2.85E-03 | -7.13E-04 | 2.98E-04 |
| L4 | S7 | 0.00E+00 | -2.11E-03 | -6.48E-04 | 1.62E-03 | -3.02E-03 |
| | S8 | 0.00E+00 | 1.03E-03 | -8.32E-04 | 7.20E-04 | -3.94E-04 |
| L5 | S9 | 0.00E+00 | 5.21E-02 | -2.39E-02 | 1.91E-02 | -2.57E-02 |
| | S10 | 0.00E+00 | 5.48E-02 | -1.99E-02 | 7.77E-03 | -2.83E-03 |
| L6 | S11 | 0.00E+00 | -4.02E-03 | -2.51E-03 | 5.40E-03 | -9.70E-03 |
| | S12 | 0.00E+00 | -1.02E-02 | -3.33E-04 | 4.57E-04 | 6.17E-04 |
| L7 | S13 | 0.00E+00 | -1.51E-02 | 1.59E-03 | -4.84E-03 | 6.50E-03 |
| | S14 | 0.00E+00 | -6.72E-03 | -3.27E-03 | 4.46E-04 | 1.16E-03 |
| | | A12 | A14 | A16 | A18 | A20 |
| L1 | S1 | 1.00E-07 | -6.67E-09 | 2.66E-10 | -5.88E-12 | 5.56E-14 |
| | S2 | -2.99E-09 | -2.33E-10 | 2.43E-11 | -8.59E-13 | 1.17E-14 |
| L2 | S3 | -2.13E-04 | 8.98E-05 | -2.71E-05 | 5.89E-06 | -9.21E-07 |
| | S4 | 1.22E-03 | -5.54E-04 | 1.75E-04 | -3.86E-05 | 6.01E-06 |
| L3 | S5 | 6.73E-04 | -3.39E-04 | 1.16E-04 | -2.74E-05 | 4.51E-06 |
| | S6 | -1.12E-04 | 2.57E-05 | -3.34E-06 | 2.30E-07 | -6.62E-09 |
| L4 | S7 | 3.44E-03 | -2.54E-03 | 1.28E-03 | -4.47E-04 | 1.10E-04 |
| | S8 | 1.36E-04 | -3.05E-05 | 4.29E-06 | -3.41E-07 | 1.17E-08 |
| L5 | S9 | 3.28E-02 | -3.10E-02 | 2.09E-02 | -1.02E-02 | 3.56E-03 |
| | S10 | 9.85E-04 | -2.85E-04 | 5.79E-05 | -6.91E-06 | 3.57E-07 |

(continued)

| | | A12 | A14 | A16 | A18 | A20 |
|---|---|---|---|---|---|---|
| L6 | S11 | 1.18E-02 | -9.88E-03 | 5.96E-03 | -2.64E-03 | 8.63E-04 |
| | S12 | -1.11E-03 | 8.44E-04 | -3.87E-04 | 1.18E-04 | -2.48E-05 |
| L7 | S13 | -4.73E-03 | 2.23E-03 | -7.23E-04 | 1.65E-04 | -2.67E-05 |
| | S14 | -1.01E-03 | 4.53E-04 | -1.31E-04 | 2.62E-05 | -3.70E-06 |
| | | A22 | A24 | A26 | A28 | A30 |
| L1 | S1 | 0.00E+00 | 0.00E+00 | 0.00E+00 | 0.00E+00 | 0.00E+00 |
| | S2 | 0.00E+00 | 0.00E+00 | 0.00E+00 | 0.00E+00 | 0.00E+00 |
| L2 | S3 | 1.02E-07 | -7.84E-09 | 3.94E-10 | -1.16E-11 | 1.53E-13 |
| | S4 | -6.54E-07 | 4.86E-08 | -2.35E-09 | 6.64E-11 | -8.31E-13 |
| L3 | S5 | -5.15E-07 | 3.97E-08 | -1.97E-09 | 5.60E-11 | -6.90E-13 |
| | S6 | 0.00E+00 | 0.00E+00 | 0.00E+00 | 0.00E+00 | 0.00E+00 |
| L4 | S7 | -1.91E-05 | 2.28E-06 | -1.78E-07 | 8.22E-09 | -1.69E-10 |
| | S8 | 0.00E+00 | 0.00E+00 | 0.00E+00 | 0.00E+00 | 0.00E+00 |
| L5 | S9 | 0.00E+00 | 1.54E-04 | -1.75E-05 | 1.19E-06 | -3.61E-08 |
| | S10 | 0.00E+00 | 0.00E+00 | 0.00E+00 | 0.00E+00 | 0.00E+00 |
| L6 | S11 | -2.05E-04 | 3.44E-05 | -3.85E-06 | 2.58E-07 | -7.75E-09 |
| | S12 | 3.60E-06 | -3.57E-07 | 2.30E-08 | -8.75E-10 | 1.48E-11 |
| L7 | S13 | 3.06E-06 | -2.41E-07 | 1.25E-08 | -3.81E-10 | 5.22E-12 |
| | S14 | 3.68E-07 | -2.53E-08 | 1.14E-09 | -3.04E-11 | 3.63E-13 |

It can be learned from Table 14 that all the lenses in the lens assembly 210 are aspherical lenses. In other words, the lens assembly 210 includes 14 aspherical surfaces. An aspherical surface profile Z of each lens in the lens assembly 210 may be calculated by using the following aspherical formula:

$$Z = \frac{cr^2}{1+\sqrt{1-(1+k)c^2r^2}} + \sum_{i=1}^{n} A_I E_I(x,y) .$$

A parameter c=1/R, R is a curvature radius, r is a distance from a point on an optical surface to the optical axis, Z is an aspherical sag of the point along the optical axis direction, k is a quadric coefficient of the surface, i is an aspherical coefficient term, and Ai is an aspherical coefficient. In this embodiment, i is 30. The lenses may be simulated based on the obtained aspherical surface profiles and the like, to finally obtain the camera modules shown in FIG. 20 and FIG. 21.

In conclusion, an optical system design with a wide aperture, a small size, and a high resolution of the lens assembly 210 can be implemented by appropriately selecting a material of each lens, combining focal powers of the lenses and focal powers of groups, and optimizing parameters such as a curvature radius, an aspherical coefficient, and a center thickness of each lens.

For optical parameters of the lens assembly including the foregoing lenses, refer to Table 15 below.

Table 15 shows optical parameters of the lens assembly according to Embodiment 5 of this application.

| | |
|---|---|
| F-number F# in the infinity state | 1.48 |
| F-number F# in the macro state | 2.21 |
| Focal length in the infinity state/mm | 14.2 |
| Focal length in the macro state/mm | 8.28 |
| Half image height/mm | 3.75 |

(continued)

| | |
|---|---|
| Magnification in the macro state | 0.436x |
| Object distance in the macro state/mm | 32.8 |
| Preset movement distance/mm | 2.55 |
| Total track length of the lens assembly/mm | 16.8 |

It can be learned from Table 15 that the lens assembly 210 provided in Embodiment 5 of this application has a wide aperture feature, can satisfy image shooting effect in the infinity state, has a high magnification and a high resolution in the macro state, and has a relatively small total track length.

FIG. 22 is a diagram of a curve of a modulation transfer function of a lens assembly in an infinity state according to Embodiment 5 of this application. FIG. 23 is a diagram of a curve of a modulation transfer function of a lens assembly in a macro state according to Embodiment 5 of this application.

A solid line and a dashed line in FIG. 22 and FIG. 23 respectively represent a sagittal field of view and a tangential field of view. It can be learned from FIG. 22 and FIG. 23 that the lens assembly 210 has a good resolution and contrast, thereby ensuring high imaging quality.

Embodiment 6

FIG. 24 is a diagram of a simulation structure of a camera module when a lens assembly is in an infinity state according to Embodiment 6 of this application. FIG. 25 is a diagram of a simulation structure of a camera module when a lens assembly is in a macro state according to Embodiment 6 of this application.

In this embodiment of this application, as shown in FIG. 24 and FIG. 25, the lens assembly 210 includes one first lens 21, one second lens group 22, and one third lens group 23. The second lens group 22 may include three second lenses: a second lens 22a, a second lens 22b, and a second lens 22c, respectively. The third lens group 23 may include three third lenses: a third lens 23a, a third lens 23b, and a third lens 23c, respectively. To be specific, an aperture stop 220, the first lens 21, the second lens 22a, the second lens 22b, the second lens 22c, the third lens 23a, the third lens 23b, the third lens 23c, a light filter 240, and an image sensor 230 are sequentially arranged along an optical axis direction from an object side to an image side.

A focal length f1 of the first lens 21 and a focal length EFL1 of the lens assembly 210 in the infinity state satisfy $|f1/EFL|=1.27$.

A focal length f2 of the second lens group 22 and the focal length EFL1 of the lens assembly 210 in the infinity state satisfy $|f2/EFL|=0.83$.

A focal length f3 of the third lens group 23 and the focal length EFL1 of the lens assembly 210 in the infinity state satisfy $|f3/EFL|=0.83$.

The first lens 21 may have a positive focal power. At least a part that is of an object-side surface of the first lens 21 and that corresponds to an optical axis may be a convex surface, and at least a part that is of an image-side surface of the first lens 21 and that corresponds to the optical axis may be a concave surface.

The second lens group 22 may have a positive focal power. The second lens 22a may have a positive focal power. At least a part that is of an object-side surface of the second lens 22a and that corresponds to the optical axis may be a convex surface, and at least a part that is of an image-side surface of the second lens 22a and that corresponds to the optical axis may be a convex surface.

The second lens 22b may have a negative focal power. At least a part that is of an object-side surface of the second lens 22b and that corresponds to the optical axis may be a convex surface, and at least a part that is of an image-side surface of the second lens 22b and that corresponds to the optical axis may be a convex surface.

The second lens 22c may have a positive focal power. At least a part that is of an object-side surface of the second lens 22c and that corresponds to the optical axis may be a convex surface, and at least a part that is of an image-side surface of the second lens 22c and that corresponds to the optical axis may be a concave surface.

The third lens group 23 may have a negative focal power. The third lens 23a may have a negative focal power. At least a part that is of an object-side surface of the third lens 23a and that corresponds to the optical axis may be a concave surface, and at least a part that is of an image-side surface of the third lens 23a and that corresponds to the optical axis may be a concave surface.

The third lens 23b may have a negative focal power. At least a part that is of an object-side surface of the third lens 23b and that corresponds to the optical axis may be a concave surface, and at least a part that is of an image-side surface of the third lens 23b and that corresponds to the optical axis may be a concave surface.

The third lens 23c may have a negative focal power. At least a part that is of an object-side surface of the third lens 23c and that corresponds to the optical axis may be a concave surface, and at least a part that is of an image-side surface of the third lens 23c and that corresponds to the optical axis may be a concave surface.

An f-number F# of the lens assembly 210 in the infinity state is equal to 1.38.

An f-number F# of the lens assembly 210 in the macro state is equal to 2.06.

A magnification Mag of the lens assembly 210 in the macro state is equal to 0.338x.

A ratio of the focal length EFL1 of the lens assembly 210 in the infinity state to a total track length TTL of the lens assembly 210 in the infinity state is EFL1/TTL=0.81.

A ratio of a preset distance L by which the second lens group 22 moves, to the total track length TTL of the lens assembly 210 in the infinity state is L/TTL=0.14.

The preset distance L by which the second lens group 22 moves and an object distance C of the lens assembly 210 in the macro state satisfy: (L/C)*10=0.56.

A ratio of the focal length EFL1 of the lens assembly 210 in the infinity state to a focal length EFL2 of the lens assembly 210 in the macro state is EFL2/EFL1=0.73.

Table 16 shows optical parameters of the optical elements in the camera module according to Embodiment 6 of this application.

| | Surface number | Surface profile | Curvature radius | Thickness | Material | Y semi-aperture |
|---|---|---|---|---|---|---|
| Aperture stop | S0 | - | - | -1.23 | - | 5.14 |
| L1 | S1 | Aspherical surface | 9.68 | 2.20 | 498.816 | 5.14 |
| | S2 | Aspherical surface | -115.18 | 3.77 | | 5.05 |
| L2 | S3 | Aspherical surface | 7.02 | 1.16 | 536.556 | 3.52 |
| | S4 | Aspherical surface | 15.03 | 0.03 | | 3.36 |
| L3 | S5 | Aspherical surface | 4.23 | 0.95 | 674.193 | 3.27 |
| | S6 | Aspherical surface | 2.49 | 0.81 | | 2.78 |
| L4 | S7 | Aspherical surface | 6.59 | 1.72 | 548.46 | 2.72 |
| | S8 | Aspherical surface | -9.65 | 0.03 | | 2.48 |
| L5 | S9 | Aspherical surface | -5.57 | 0.52 | 544.56 | 2.04 |
| | S10 | Aspherical surface | -38.50 | 0.62 | | 1.82 |
| L6 | S11 | Aspherical surface | -29.52 | 2.71 | 674.193 | 1.91 |
| | S12 | Aspherical surface | -134.62 | 0.94 | | 3.03 |
| L7 | S13 | Aspherical surface | -7.26 | 1.25 | 555.47 | 3.19 |
| | S14 | Aspherical surface | -7.01 | 0.13 | | 3.57 |
| IR | S15 | Spherical surface | - | 0.21 | 518.641 | 4.00 |
| | S16 | Spherical surface | - | 0.03 | | 4.00 |
| Photosensitive surface | S17 | Spherical surface | - | 0.00 | - | 3.78 |

L1 is the first lens 21, L2 is the second lens 22a, L3 is the second lens 22b, L4 is the second lens 22c, L5 is the third lens 23a, L6 is the third lens 23b, L7 is the third lens 23c, and IR is the light filter 240.

S is an object-side surface and an image-side surface of each optical element. For specific meanings of S0 to S16, refer to Embodiment 1. Details are not described in this embodiment again.

For meanings of parameters such as a curvature radius, a thickness, a material, and a Y semi-aperture, refer to Embodiment 1. Details are not described in this embodiment.

Table 17 shows aspherical coefficients of the lenses in the lens assembly according to Embodiment 6 of this application.

| | | k | A4 | A6 | A8 | A10 |
|---|---|---|---|---|---|---|
| L1 | S1 | 1.50E-01 | -9.15E-05 | -1.33E-05 | 2.89E-06 | -4.43E-07 |
| | S2 | -9.39E+01 | -4.04E-05 | -1.06E-05 | 1.50E-06 | -2.19E-07 |

(continued)

| | | k | A4 | A6 | A8 | A10 |
|---|---|---|---|---|---|---|
| L2 | S3 | 0.00E+00 | 3.14E-03 | -5.52E-04 | 1.87E-04 | -5.75E-05 |
| | S4 | 0.00E+00 | 3.58E-03 | -1.93E-03 | 2.26E-03 | -2.12E-03 |
| L3 | S5 | 0.00E+00 | -1.35E-02 | -2.02E-04 | 9.68E-04 | -8.86E-04 |
| | S6 | -1.56E+00 | -1.35E-02 | 1.37E-03 | -4.54E-04 | 3.95E-04 |
| L4 | S7 | 0.00E+00 | -1.57E-03 | -1.20E-03 | 2.52E-03 | -3.88E-03 |
| | S8 | 0.00E+00 | 9.53E-04 | -6.15E-04 | 4.83E-04 | -2.28E-04 |
| L5 | S9 | 0.00E+00 | 4.78E-02 | -1.40E-02 | 3.48E-03 | 1.01E-03 |
| | S10 | 0.00E+00 | 5.28E-02 | -1.77E-02 | 9.31E-03 | -5.22E-03 |
| L6 | S11 | 0.00E+00 | 7.85E-04 | -1.11E-02 | 1.95E-02 | -2.66E-02 |
| | S12 | 0.00E+00 | -9.35E-03 | 3.44E-03 | -3.52E-03 | 2.14E-03 |
| L7 | S13 | 0.00E+00 | -8.75E-03 | -3.60E-03 | 6.79E-03 | -7.12E-03 |
| | S14 | 0.00E+00 | 4.83E-02 | -5.37E-02 | 4.32E-02 | -2.45E-02 |
| | | A12 | A14 | A16 | A18 | A20 |
| L1 | S1 | 3.87E-08 | -2.02E-09 | 6.20E-11 | -1.04E-12 | 7.19E-15 |
| | S2 | 2.15E-08 | -1.27E-09 | 4.34E-11 | -8.00E-13 | 6.10E-15 |
| L2 | S3 | 3.38E-07 | 9.91E-06 | -5.17E-06 | 1.46E-06 | -2.64E-07 |
| | S4 | 1.41E-03 | -6.46E-04 | 2.05E-04 | -4.58E-05 | 7.23E-06 |
| L3 | S5 | 6.46E-04 | -3.26E-04 | 1.12E-04 | -2.65E-05 | 4.39E-06 |
| | S6 | -1.85E-04 | 4.58E-05 | -6.21E-06 | 4.46E-07 | -1.33E-08 |
| L4 | S7 | 3.82E-03 | -2.52E-03 | 1.16E-03 | -3.79E-04 | 8.86E-05 |
| | S8 | 6.84E-05 | -1.33E-05 | 1.67E-06 | -1.21E-07 | 3.86E-09 |
| L5 | S9 | -3.10E-03 | 3.85E-03 | -3.34E-03 | 2.06E-03 | -8.94E-04 |
| | S10 | 2.44E-03 | -8.03E-04 | 1.70E-04 | -2.07E-05 | 1.11E-06 |
| L6 | S11 | 2.56E-02 | -1.76E-02 | 8.96E-03 | -3.43E-03 | 1.00E-03 |
| | S12 | -7.98E-04 | 1.62E-04 | 9.60E-07 | -1.14E-05 | 3.67E-06 |
| L7 | S13 | 4.49E-03 | -1.88E-03 | 5.60E-04 | -1.22E-04 | 1.94E-05 |
| | S14 | 9.31E-03 | -2.42E-03 | 4.44E-04 | -5.83E-05 | 5.51E-06 |
| | | A22 | A24 | A26 | A28 | A30 |
| L1 | S1 | 0.00E+00 | 0.00E+00 | 0.00E+00 | 0.00E+00 | 0.00E+00 |
| | S2 | 0.00E+00 | 0.00E+00 | 0.00E+00 | 0.00E+00 | 0.00E+00 |
| L2 | S3 | 3.19E-08 | -2.57E-09 | 1.32E-10 | -3.93E-12 | 5.15E-14 |
| | S4 | -7.99E-07 | 6.05E-08 | -2.99E-09 | 8.65E-11 | -1.11E-12 |
| L3 | S5 | -5.06E-07 | 3.97E-08 | -2.02E-09 | 5.97E-11 | -7.79E-13 |
| | S6 | 0.00E+00 | 0.00E+00 | 0.00E+00 | 0.00E+00 | 0.00E+00 |
| L4 | S7 | -1.47E-05 | 1.69E-06 | -1.28E-07 | 5.72E-09 | -1.15E-10 |
| | S8 | 0.00E+00 | 0.00E+00 | 0.00E+00 | 0.00E+00 | 0.00E+00 |
| L5 | S9 | 2.70E-04 | -5.52E-05 | 7.31E-06 | -5.65E-07 | 1.93E-08 |
| | S10 | 0.00E+00 | 0.00E+00 | 0.00E+00 | 0.00E+00 | 0.00E+00 |

(continued)

| | | A22 | A24 | A26 | A28 | A30 |
|---|---|---|---|---|---|---|
| L6 | S11 | -2.20E-04 | 3.55E-05 | -3.94E-06 | 2.65E-07 | -8.14E-09 |
| | S12 | -6.43E-07 | 6.98E-08 | -4.69E-09 | 1.79E-10 | -2.97E-12 |
| L7 | S13 | -2.22E-06 | 1.78E-07 | -9.41E-09 | 2.95E-10 | -4.14E-12 |
| | S14 | -3.71E-07 | 1.72E-08 | -5.22E-10 | 9.17E-12 | -6.94E-14 |

It can be learned from Table 17 that all the lenses in the lens assembly 210 are aspherical lenses. In other words, the lens assembly 210 includes 14 aspherical surfaces. An aspherical surface profile Z of each lens in the lens assembly 210 may be calculated by using the following aspherical formula:

$$Z = \frac{cr^2}{1+\sqrt{1-(1+k)c^2r^2}} + \sum_{i=1}^{n} A_I E_I(x, y) \quad .$$

A parameter c=1/R, R is a curvature radius, r is a distance from a point on an optical surface to the optical axis, Z is an aspherical sag of the point along the optical axis direction, k is a quadric coefficient of the surface, i is an aspherical coefficient term, and Ai is an aspherical coefficient. In this embodiment, i is 30. The lenses may be simulated based on the obtained aspherical surface profiles and the like, to finally obtain the camera modules shown in FIG. 24 and FIG. 25.

In conclusion, an optical system design with a wide aperture, a small size, and a high resolution of the lens assembly 210 can be implemented by appropriately selecting a material of each lens, combining focal powers of the lenses and focal powers of groups, and optimizing parameters such as a curvature radius, an aspherical coefficient, and a center thickness of each lens.

For optical parameters of the lens assembly including the foregoing lenses, refer to Table 18 below.

Table 18 shows optical parameters of the lens assembly according to Embodiment 6 of this application.

| | |
|---|---|
| F-number F# in the infinity state | 1.38 |
| F-number F# in the macro state | 2.06 |
| Focal length in the infinity state/mm | 14.2 |
| Focal length in the macro state/mm | 10.39 |
| Half image height/mm | 3.75 |
| Magnification in the macro state | 0.338x |
| Object distance in the macro state/mm | 42.3 |
| Preset movement distance/mm | 2.37 |
| Total track length of the lens assembly/mm | 17.5 |

It can be learned from Table 18 that the lens assembly 210 provided in Embodiment 6 of this application has a wide aperture feature, can satisfy image shooting effect in the infinity state, has a high magnification and a high resolution in the macro state, and has a relatively small total track length.

FIG. 26 is a diagram of a curve of a modulation transfer function of a lens assembly in an infinity state according to Embodiment 6 of this application. FIG. 27 is a diagram of a curve of a modulation transfer function of a lens assembly in a macro state according to Embodiment 6 of this application.

A solid line and a dashed line in FIG. 26 and FIG. 27 respectively represent a sagittal field of view and a tangential field of view. It can be learned from FIG. 26 and FIG. 27 that the lens assembly 210 has a good resolution and contrast, thereby ensuring high imaging quality.

Embodiment 7

FIG. 28 is a diagram of a simulation structure of a camera module when a lens assembly is in an infinity state according to Embodiment 7 of this application. FIG. 29 is a diagram of a simulation structure of a camera module when a lens assembly is in a macro state according to Embodiment 7 of this application.

In this embodiment of this application, as shown in FIG. 28 and FIG. 29, the lens assembly 210 includes one first lens 21, one second lens group 22, and one third lens group 23. The second lens group 22 may include three second lenses: a second lens 22a, a second lens 22b, and a second lens 22c, respectively. The third lens group 23 may include three third lenses: a third lens 23a, a third lens 23b, and a third lens 23c, respectively. To be specific, an aperture stop 220, the first lens 21, the second lens 22a, the second lens 22b, the second lens 22c, the third lens 23a, the third lens 23b, the third lens 23c, a light filter 240, and an image sensor 230 are sequentially arranged along an optical axis direction from an object side to an image side.

A focal length f1 of the first lens 21 and a focal length EFL1 of the lens assembly 210 in the infinity state satisfy |f1/EFL|=1.31.

A focal length f2 of the second lens group 22 and the focal length EFL1 of the lens assembly 210 in the infinity state satisfy |f2/EFL|=0.7.

A focal length f3 of the third lens group 23 and the focal length EFL1 of the lens assembly 210 in the infinity state satisfy |f3/EFL|=0.69.

The first lens 21 may have a positive focal power. At least a part that is of an object-side surface of the first lens 21 and that corresponds to an optical axis may be a convex surface, and at least a part that is of an image-side surface of the first lens 21 and that corresponds to the optical axis may be a convex surface.

The second lens group 22 may have a positive focal power. The second lens 22a may have a positive focal power. At least a part that is of an object-side surface of the second lens 22a and that corresponds to the optical axis may be a convex surface, and at least a part that is of an image-side surface of the second lens 22a and that corresponds to the optical axis may be a convex surface.

The second lens 22b may have a negative focal power. At least a part that is of an object-side surface of the second lens 22b and that corresponds to the optical axis may be a convex surface, and at least a part that is of an image-side surface of the second lens 22b and that corresponds to the optical axis may be a convex surface.

The second lens 22c may have a positive focal power. At least a part that is of an object-side surface of the second lens 22c and that corresponds to the optical axis may be a convex surface, and at least a part that is of an image-side surface of the second lens 22c and that corresponds to the optical axis may be a concave surface.

The third lens group 23 may have a negative focal power. The third lens 23a may have a negative focal power. At least a part that is of an object-side surface of the third lens 23a and that corresponds to the optical axis may be a concave surface, and at least a part that is of an image-side surface of the third lens 23a and that corresponds to the optical axis may be a convex surface.

The third lens 23b may have a negative focal power. At least a part that is of an object-side surface of the third lens 23b and that corresponds to the optical axis may be a concave surface, and at least a part that is of an image-side surface of the third lens 23b and that corresponds to the optical axis may be a concave surface.

The third lens 23c may have a negative focal power. At least a part that is of an object-side surface of the third lens 23c and that corresponds to the optical axis may be a concave surface, and at least a part that is of an image-side surface of the third lens 23c and that corresponds to the optical axis may be a concave surface.

An f-number F# of the lens assembly 210 in the infinity state is equal to 1.39.

An f-number F# of the lens assembly 210 in the macro state is equal to 2.21.

A magnification Mag of the lens assembly 210 in the macro state is equal to 0.425x.

A ratio of the focal length EFL1 of the lens assembly 210 in the infinity state to a total track length TTL of the lens assembly 210 in the infinity state is EFL1/TTL=0.84.

A ratio of a preset distance L by which the second lens group 22 moves, to the total track length TTL of the lens assembly 210 in the infinity state is L/TTL=0.15.

The preset distance L by which the second lens group 22 moves and an object distance C of the lens assembly 210 in the macro state satisfy: (L/C)*10=0.77.

A ratio of the focal length EFL1 of the lens assembly 210 in the infinity state to a focal length EFL2 of the lens assembly 210 in the macro state is EFL2/EFL1=0.66.

Table 19 shows optical parameters of the optical elements in the camera module according to Embodiment 7 of this application.

| | Surface number | Surface profile | Curvature radius | Thickness | Material | Y semi-aperture |
|---|---|---|---|---|---|---|
| Aperture stop | S0 | - | - | -2.01 | - | 5.11 |
| L1 | S1 | Aspherical surface | 7.23 | 2.26 | 498.816 | 5.11 |
| | S2 | Aspherical surface | 29.53 | 3.42 | | 4.94 |

(continued)

| | Surface number | Surface profile | Curvature radius | Thickness | Material | Y semi-aperture |
|---|---|---|---|---|---|---|
| L2 | S3 | Aspherical surface | 8.28 | 1.19 | 544.56 | 3.52 |
| | S4 | Aspherical surface | 195.27 | 0.04 | | 3.40 |
| L3 | S5 | Aspherical surface | 4.41 | 1.01 | 677.192 | 3.30 |
| | S6 | Aspherical surface | 2.38 | 1.14 | | 2.70 |
| L4 | S7 | Aspherical surface | 7.28 | 1.51 | 550.447 | 2.59 |
| | S8 | Aspherical surface | -7.26 | 0.05 | | 2.42 |
| L5 | S9 | Aspherical surface | -5.91 | 0.37 | 542.559 | 2.06 |
| | S10 | Aspherical surface | 27.42 | 0.76 | | 2.05 |
| L6 | S11 | Aspherical surface | -19.39 | 1.93 | 677.192 | 2.07 |
| | S12 | Aspherical surface | -28.96 | 0.94 | | 3.00 |
| L7 | S13 | Aspherical surface | -10.71 | 1.12 | 543.559 | 3.30 |
| | S14 | Aspherical surface | -9.22 | 0.33 | | 3.58 |
| IR | S15 | Spherical surface | - | 0.21 | 518.641 | 4.00 |
| | S16 | Spherical surface | - | 0.15 | | 4.00 |
| Photosensitive surface | S17 | Spherical surface | - | 0.00 | - | 3.77 |

L1 is the first lens 21, L2 is the second lens 22a, L3 is the second lens 22b, L4 is the second lens 22c, L5 is the third lens 23a, L6 is the third lens 23b, L7 is the third lens 23c, and IR is the light filter 240.

S is an object-side surface and an image-side surface of each optical element. For specific meanings of S0 to S16, refer to Embodiment 1. Details are not described in this embodiment again.

For meanings of parameters such as a curvature radius, a thickness, a material, and a Y semi-aperture, refer to Embodiment 1. Details are not described in this embodiment.

Table 20 shows aspherical coefficients of the lenses in the lens assembly according to Embodiment 7 of this application.

| | | k | A4 | A6 | A8 | A10 |
|---|---|---|---|---|---|---|
| L1 | S1 | 1.60E-01 | -1.19E-04 | -1.56E-05 | 4.24E-06 | -7.64E-07 |
| | S2 | 2.47E+00 | -1.57E-04 | 8.63E-06 | -3.26E-06 | 4.81E-07 |
| L2 | S3 | 0.00E+00 | 3.48E-03 | -2.99E-04 | -1.63E-04 | 1.99E-04 |
| | S4 | 0.00E+00 | 8.21E-03 | -2.87E-03 | 2.23E-03 | -1.91E-03 |
| L3 | S5 | 0.00E+00 | -1.28E-02 | -4.38E-04 | 1.05E-03 | -9.38E-04 |
| | S6 | -1.62E+00 | -1.73E-02 | 3.16E-03 | -9.55E-04 | 4.22E-04 |
| L4 | S7 | 0.00E+00 | -1.73E-03 | -1.50E-03 | 3.57E-03 | -5.51E-03 |
| | S8 | 0.00E+00 | 8.35E-04 | -5.04E-04 | 4.72E-04 | -2.93E-04 |
| L5 | S9 | 0.00E+00 | 5.26E-02 | -2.16E-02 | 8.23E-03 | -1.75E-03 |
| | S10 | 0.00E+00 | 5.53E-02 | -1.98E-02 | 5.87E-03 | -5.83E-04 |
| L6 | S11 | 0.00E+00 | -5.34E-03 | -2.90E-03 | 1.13E-02 | -2.57E-02 |
| | S12 | 0.00E+00 | -8.80E-03 | -1.50E-03 | 9.70E-04 | 1.78E-04 |
| L7 | S13 | 0.00E+00 | -1.02E-02 | 2.94E-02 | -6.81E-02 | 7.33E-02 |
| | S14 | 0.00E+00 | 3.59E-02 | -2.65E-02 | 8.33E-03 | 2.53E-06 |

(continued)

| | | A12 | A14 | A16 | A18 | A20 |
|---|---|---|---|---|---|---|
| L1 | S1 | 7.79E-08 | -4.76E-09 | 1.73E-10 | -3.45E-12 | 2.93E-14 |
| | S2 | -3.95E-08 | 1.96E-09 | -5.77E-11 | 9.02E-13 | -5.43E-15 |
| L2 | S3 | -1.29E-04 | 5.72E-05 | -1.79E-05 | 3.98E-06 | -6.29E-07 |
| | S4 | 1.26E-03 | -5.74E-04 | 1.81E-04 | -4.01E-05 | 6.25E-06 |
| L3 | S5 | 6.79E-04 | -3.42E-04 | 1.17E-04 | -2.79E-05 | 4.63E-06 |
| | S6 | -1.54E-04 | 3.44E-05 | -4.39E-06 | 2.97E-07 | -8.33E-09 |
| L4 | S7 | 5.50E-03 | -3.72E-03 | 1.77E-03 | -5.98E-04 | 1.45E-04 |
| | S8 | 1. 17E-04 | -3.03E-05 | 4.94E-06 | -4.49E-07 | 1.74E-08 |
| L5 | S9 | -2.88E-03 | 6.10E-03 | -6.21E-03 | 3.96E-03 | -1.69E-03 |
| | S10 | -2.94E-04 | 1.34E-04 | -2.24E-05 | 1.35E-06 | 8.11E-09 |
| L6 | S11 | 3.59E-02 | -3.37E-02 | 2.24E-02 | -1.07E-02 | 3.73E-03 |
| | S12 | -6.82E-04 | 5.40E-04 | -2.42E-04 | 7.03E-05 | -1.39E-05 |
| L7 | S13 | -4.79E-02 | 2.07E-02 | -6.21E-03 | 1.32E-03 | -1.99E-04 |
| | S14 | -1.45E-03 | 7.83E-04 | -2.36E-04 | 4.71E-05 | -6.52E-06 |
| | | A22 | A24 | A26 | A28 | A30 |
| L1 | S1 | 0.00E+00 | 0.00E+00 | 0.00E+00 | 0.00E+00 | 0.00E+00 |
| | S2 | 0.00E+00 | 0.00E+00 | 0.00E+00 | 0.00E+00 | 0.00E+00 |
| L2 | S3 | 6.99E-08 | -5.32E-09 | 2.64E-10 | -7.66E-12 | 9.88E-14 |
| | S4 | -6.82E-07 | 5.10E-08 | -2.48E-09 | 7.07E-11 | -8.95E-13 |
| L3 | S5 | -5.35E-07 | 4.21E-08 | -2.14E-09 | 6.34E-11 | -8.27E-13 |
| | S6 | 0.00E+00 | 0.00E+00 | 0.00E+00 | 0.00E+00 | 0.00E+00 |
| L4 | S7 | -2.50E-05 | 3.00E-06 | -2.37E-07 | 1.11E-08 | -2.34E-10 |
| | S8 | 0.00E+00 | 0.00E+00 | 0.00E+00 | 0.00E+00 | 0.00E+00 |
| L5 | S9 | 4.88E-04 | -9.53E-05 | 1.20E-05 | -8.85E-07 | 2.89E-08 |
| | S10 | 0.00E+00 | 0.00E+00 | 0.00E+00 | 0.00E+00 | 0.00E+00 |
| L6 | S11 | -9.32E-04 | 1.63E-04 | -1.89E-05 | 1.31E-06 | -4.09E-08 |
| | S12 | 1.88E-06 | -1.72E-07 | 1.01E-08 | -3.50E-10 | 5.34E-12 |
| L7 | S13 | 2.13E-05 | -1.58E-06 | 7.71E-08 | -2.22E-09 | 2.88E-11 |
| | S14 | 6.30E-07 | -4.19E-08 | 1.82E-09 | -4.69E-11 | 5.39E-13 |

It can be learned from Table 20 that all the lenses in the lens assembly 210 are aspherical lenses. In other words, the lens assembly 210 includes 14 aspherical surfaces. An aspherical surface profile Z of each lens in the lens assembly 210 may be calculated by using the following aspherical formula:

$$Z = \frac{cr^2}{1+\sqrt{1-(1+k)c^2r^2}} + \sum_{i=1}^{n} A_I E_I(x,y) .$$

A parameter c=1/R, R is a curvature radius, r is a distance from a point on an optical surface to the optical axis, Z is an aspherical sag of the point along the optical axis direction, k is a quadric coefficient of the surface, i is an aspherical coefficient term, and Ai is an aspherical coefficient. In this embodiment, i is 30. The lenses may be simulated based on the obtained aspherical surface profiles and the like, to finally obtain the camera modules shown in FIG. 28 and FIG. 29.

For optical parameters of the lens assembly including the foregoing lenses, refer to Table 21 below.

Table 21 shows optical parameters of the lens assembly according to Embodiment 7 of this application.

| | |
|---|---|
| F-number F# in the infinity state | 1.39 |
| F-number F# in the macro state | 2.21 |
| Focal length in the infinity state/mm | 14.2 |
| Focal length in the macro state/mm | 9.42 |
| Half image height/mm | 3.75 |
| Magnification in the macro state | 0.425x |
| Object distance in the macro state/mm | 33.9 |
| Preset movement distance/mm | 2.61 |
| Total track length of the lens assembly/mm | 16.88 |

It can be learned from Table 21 that the lens assembly 210 provided in Embodiment 7 of this application has a wide aperture feature, can satisfy image shooting effect in the infinity state, has a high magnification and a high resolution in the macro state, and has a relatively small total track length.

FIG. 30 is a diagram of a curve of a modulation transfer function of a lens assembly in an infinity state according to Embodiment 7 of this application. FIG. 31 is a diagram of a curve of a modulation transfer function of a lens assembly in a macro state according to Embodiment 7 of this application.

A solid line and a dashed line in FIG. 30 and FIG. 31 respectively represent a sagittal field of view and a tangential field of view. It can be learned from FIG. 30 and FIG. 31 that the lens assembly 210 has a good resolution and contrast, thereby ensuring high imaging quality.

Embodiment 8

FIG. 32 is a diagram of a simulation structure of a camera module when a lens assembly is in an infinity state according to Embodiment 8 of this application. FIG. 33 is a diagram of a simulation structure of a camera module when a lens assembly is in a macro state according to Embodiment 8 of this application.

**In** this embodiment of this application, as shown in FIG. 32 and FIG. 33, the lens assembly 210 includes one first lens 21, one second lens group 22, and one third lens group 23. The second lens group 22 may include three second lenses: a second lens 22a, a second lens 22b, and a second lens 22c, respectively. The third lens group 23 may include three third lenses: a third lens 23a, a third lens 23b, and a third lens 23c, respectively. To be specific, an aperture stop 220, the first lens 21, the second lens 22a, the second lens 22b, the second lens 22c, the third lens 23a, the third lens 23b, the third lens 23c, a light filter 240, and an image sensor 230 are sequentially arranged along an optical axis direction from an object side to an image side.

A focal length f1 of the first lens 21 and a focal length EFL1 of the lens assembly 210 in the infinity state satisfy $|f1/EFL|=1.84$.

A focal length f2 of the second lens group 22 and the focal length EFL1 of the lens assembly 210 in the infinity state satisfy $|f2/EFL|=0.46$.

A focal length f3 of the third lens group 23 and the focal length EFL1 of the lens assembly 210 in the infinity state satisfy $|f3/EFL|=0.31$.

The first lens 21 may have a positive focal power. At least a part that is of an object-side surface of the first lens 21 and that corresponds to an optical axis may be a convex surface, and at least a part that is of an image-side surface of the first lens 21 and that corresponds to the optical axis may be a convex surface.

The second lens group 22 may have a positive focal power. The second lens 22a may have a positive focal power. At least a part that is of an object-side surface of the second lens 22a and that corresponds to the optical axis may be a convex surface, and at least a part that is of an image-side surface of the second lens 22a and that corresponds to the optical axis may be a convex surface.

The second lens 22b may have a negative focal power. At least a part that is of an object-side surface of the second lens 22b and that corresponds to the optical axis may be a convex surface, and at least a part that is of an image-side surface of the second lens 22b and that corresponds to the optical axis may be a convex surface.

The second lens 22c may have a positive focal power. At least a part that is of an object-side surface of the second lens 22c and that corresponds to the optical axis may be a convex surface, and at least a part that is of an image-side surface of the second lens 22c and that corresponds to the optical axis may be a concave surface.

The third lens group 23 may have a negative focal power. The third lens 23a may have a negative focal power. At least a part that is of an object-side surface of the third lens 23a and that corresponds to the optical axis may be a concave surface, and at least a part that is of an image-side surface of the third lens 23a and that corresponds to the optical axis may be a convex surface.

The third lens 23b may have a positive focal power. At least a part that is of an object-side surface of the third lens 23b and that corresponds to the optical axis may be a concave surface, and at least a part that is of an image-side surface of the third lens 23b and that corresponds to the optical axis may be a concave surface.

The third lens 23c may have a negative focal power. At least a part that is of an object-side surface of the third lens 23c and that corresponds to the optical axis may be a concave surface, and at least a part that is of an image-side surface of the third lens 23c and that corresponds to the optical axis may be a concave surface.

An f-number F# of the lens assembly 210 in the infinity state is equal to 1.56.

An f-number F# of the lens assembly 210 in the macro state is equal to 3.6.

A magnification Mag of the lens assembly 210 in the macro state is equal to 0.945x.

A ratio of the focal length EFL1 of the lens assembly 210 in the infinity state to a total track length TTL of the lens assembly 210 in the infinity state is EFL1/TTL=0.85.

A ratio of a preset distance L by which the second lens group 22 moves, to the total track length TTL of the lens assembly 210 in the infinity state is L/TTL=0.19.

The preset distance L by which the second lens group 22 moves and an object distance C of the lens assembly 210 in the macro state satisfy: (L/C)*10=3.06.

A ratio of the focal length EFL1 of the lens assembly 210 in the infinity state to a focal length EFL2 of the lens assembly 210 in the macro state is EFL2/EFL1=0.38.

Table 22 shows optical parameters of the optical elements in the camera module according to Embodiment 8 of this application.

| | Surface number | Surface profile | Curvature radius | Thickness | Material | Y semi-aperture |
|---|---|---|---|---|---|---|
| Aperture stop | S0 | - | - | -1.78 | - | 4.49 |
| L1 | S1 | Aspherical surface | 5.78 | 1.55 | 544.56 | 4.49 |
| | S2 | Aspherical surface | 8.87 | 3.75 | | 4.32 |
| L2 | S3 | Aspherical surface | 5.07 | 1.50 | 544.56 | 3.30 |
| | S4 | Aspherical surface | 47.50 | 0.08 | | 3.25 |
| L3 | S5 | Aspherical surface | 8.78 | 0.55 | 677.192 | 3.11 |
| | S6 | Aspherical surface | 3.74 | 1.00 | | 2.96 |
| L4 | S7 | Aspherical surface | 6.59 | 1.57 | 544.56 | 2.78 |
| | S8 | Aspherical surface | -5.58 | 0.15 | | 2.60 |
| L5 | S9 | Aspherical surface | -3.60 | 0.50 | 544.56 | 2.09 |
| | S10 | Aspherical surface | 42.85 | 1.26 | | 1.99 |
| L6 | S11 | Aspherical surface | -8.55 | 1.49 | 677.192 | 2.03 |
| | S12 | Aspherical surface | -5.03 | 0.08 | | 2.59 |
| L7 | S13 | Aspherical surface | -4.68 | 1.27 | 569.374 | 2.99 |
| | S14 | Aspherical surface | -44.18 | 0.65 | | 3.54 |
| IR | S15 | Spherical surface | - | 0.21 | 518.641 | 4.05 |
| | S16 | Spherical surface | - | 0.46 | | 4.05 |
| Photosensitive surface | S17 | Spherical surface | - | 0.00 | - | 3.75 |

L1 is the first lens 21, L2 is the second lens 22a, L3 is the second lens 22b, L4 is the second lens 22c, L5 is the third lens 23a, L6 is the third lens 23b, L7 is the third lens 23c, and IR is the light filter 240.

S is an object-side surface and an image-side surface of each optical element. For specific meanings of S0 to S16, refer to Embodiment 1. Details are not described in this embodiment again.

For meanings of parameters such as a curvature radius, a thickness, a material, and a Y semi-aperture, refer to Embodiment 1. Details are not described in this embodiment.

Table 23 shows aspherical coefficients of the lenses in the lens assembly according to Embodiment 8 of this application.

| | | k | A4 | A6 | A8 | A10 |
|---|---|---|---|---|---|---|
| L1 | S1 | 0 | -7.21E-04 | 3.77E-05 | -2.93E-05 | 1.52E-05 |
| | S2 | 0 | -1.35E-03 | 2.93E-05 | 2.44E-05 | -2.05E-05 |
| L2 | S3 | 0 | -1.06E-03 | -4.39E-04 | 4.35E-04 | -3.96E-04 |
| | S4 | 0 | -3.63E-03 | 4.16E-03 | -5.67E-03 | 4.97E-03 |
| L3 | S5 | 0 | -2.13E-02 | 5.92E-03 | -5.56E-03 | 5.22E-03 |
| | S6 | 0 | -2.55E-02 | 4.52E-03 | -4.13E-03 | 4.63E-03 |
| L4 | S7 | 0 | -4.06E-03 | -2.09E-03 | 2.51E-03 | -2.63E-03 |
| | S8 | 0 | 1.30E-03 | -3.51E-04 | 1.59E-03 | -3.61E-03 |
| L5 | S9 | 0 | 8.87E-02 | -5.84E-02 | 7.05E-02 | -1.00E-01 |
| | S10 | 0 | 8.32E-02 | -9.05E-03 | -7.17E-02 | 1.74E-01 |
| L6 | S11 | 0 | 4.94E-03 | -4.37E-02 | 1.45E-01 | -3.17E-01 |
| | S12 | 0 | -5.77E-02 | 5.48E-02 | -2.57E-02 | -1.01E-02 |
| L7 | S13 | 0 | -8.39E-02 | 9.39E-02 | -6.08E-02 | 2.02E-02 |
| | S14 | 0 | -2.75E-02 | 1.78E-02 | -8.03E-03 | 2.13E-03 |
| | | A12 | A14 | A16 | A18 | A20 |
| L1 | S1 | -5.43E-06 | 1.29E-06 | -2.09E-07 | 2.37E-08 | -1.92E-09 |
| | S2 | 7.06E-06 | -1.45E-06 | 1.93E-07 | -1.73E-08 | 1.02E-09 |
| L2 | S3 | 2.22E-04 | -8.50E-05 | 2.31E-05 | -4.53E-06 | 6.44E-07 |
| | S4 | -2.80E-03 | 1.08E-03 | -2.99E-04 | 6.04E-05 | -8.91E-06 |
| L3 | S5 | -3.03E-03 | 1.16E-03 | -3.08E-04 | 5.86E-05 | -7.99E-06 |
| | S6 | -3.23E-03 | 1.48E-03 | -4.76E-04 | 1.10E-04 | -1.82E-05 |
| L4 | S7 | 2.01E-03 | -1.09E-03 | 4.22E-04 | -1.19E-04 | 2.46E-05 |
| | S8 | 4.32E-03 | -3.23E-03 | 1.63E-03 | -5.75E-04 | 1.43E-04 |
| L5 | S9 | 1.12E-01 | -9.22E-02 | 5.51E-02 | -2.41E-02 | 7.74E-03 |
| | S10 | -2.54E-01 | 2.55E-01 | -1.81E-01 | 9.31E-02 | -3.46E-02 |
| L6 | S11 | 4.52E-01 | -4.46E-01 | 3.14E-01 | -1.60E-01 | 5.94E-02 |
| | S12 | 2.45E-02 | -1.91E-02 | 9.21E-03 | -3.09E-03 | 7.41E-04 |
| L7 | S13 | 9.06E-04 | -4.11E-03 | 2.02E-03 | -5.64E-04 | 1.03E-04 |
| | S14 | -1.15E-04 | -1.40E-04 | 5.99E-05 | -1.33E-05 | 1.89E-06 |
| | | A22 | A24 | A26 | A28 | A30 |
| L1 | S1 | 1.09E-10 | -4.32E-12 | 1.12E-13 | -1.72E-15 | 1.19E-17 |
| | S2 | -3.65E-11 | 5.65E-13 | 8.95E-15 | -5.21E-16 | 6.42E-18 |
| L2 | S3 | -6.55E-08 | 4.63E-09 | -2.15E-10 | 5.88E-12 | -7.13E-14 |
| | S4 | 9.46E-07 | -7.00E-08 | 3.43E-09 | -9.95E-11 | 1.29E-12 |
| L3 | S5 | 7.67E-07 | -4.99E-08 | 2.04E-09 | -4.53E-11 | 3.73E-13 |
| | S6 | 2.16E-06 | -1.78E-07 | 9.71E-09 | -3.12E-10 | 4.49E-12 |
| L4 | S7 | -3.65E-06 | 3.80E-07 | -2.63E-08 | 1.09E-09 | -2.02E-11 |
| | S8 | -2.50E-05 | 3.02E-06 | -2.39E-07 | 1.12E-08 | -2.34E-10 |

(continued)

| | | A22 | A24 | A26 | A28 | A30 |
|---|---|---|---|---|---|---|
| L5 | S9 | -1.79E-03 | 2.92E-04 | -3.17E-05 | 2.05E-06 | -6.03E-08 |
| | S10 | 9.20E-03 | -1.71E-03 | 2.10E-04 | -1.54E-05 | 5.07E-07 |
| L6 | S11 | -1.58E-02 | 2.95E-03 | -3.66E-04 | 2.70E-05 | -9.02E-07 |
| | S12 | -1.27E-04 | 1.53E-05 | -1.22E-06 | 5.76E-08 | -1.23E-09 |
| L7 | S13 | -1.29E-05 | 1.10E-06 | -6.07E-08 | 1.98E-09 | -2.87E-11 |
| | S14 | -1.83E-07 | 1.19E-08 | -5.02E-10 | 1.24E-11 | -1.37E-13 |

It can be learned from Table 23 that all the lenses in the lens assembly 210 are aspherical lenses. In other words, the lens assembly 210 includes 14 aspherical surfaces. An aspherical surface profile Z of each lens in the lens assembly 210 may be calculated by using the following aspherical formula:

$$Z = \frac{cr^2}{1+\sqrt{1-(1+k)c^2r^2}} + \sum_{i=1}^{n} A_I E_I(x,y) .$$

A parameter c=1/R, R is a curvature radius, r is a distance from a point on an optical surface to the optical axis, Z is an aspherical sag of the point along the optical axis direction, k is a quadric coefficient of the surface, i is an aspherical coefficient term, and Ai is an aspherical coefficient. In this embodiment, i is 30. The lenses may be simulated based on the obtained aspherical surface profiles and the like, to finally obtain the camera modules shown in FIG. 32 and FIG. 33.

In conclusion, an optical system design with a wide aperture, a small size, and a high resolution of the lens assembly 210 can be implemented by appropriately selecting a material of each lens, combining focal powers of the lenses and focal powers of groups, and optimizing parameters such as a curvature radius, an aspherical coefficient, and a center thickness of each lens.

For optical parameters of the lens assembly including the foregoing lenses, refer to Table 24 below.

Table 24 shows optical parameters of the lens assembly according to Embodiment 8 of this application.

| | |
|---|---|
| F-number F# in the infinity state | 1.56 |
| F-number F# in the macro state | 3.6 |
| Focal length in the infinity state/mm | 14.0 |
| Focal length in the macro state/mm | 5.38 |
| Half image height/mm | 3.75 |
| Magnification in the macro state | 0.945x |
| Object distance in the macro state/mm | 10.27 |
| Preset movement distance/mm | 3.15 |
| Total track length of the lens assembly/mm | 16.46 |

It can be learned from Table 24 that the lens assembly 210 provided in Embodiment 8 of this application has a wide aperture feature, can satisfy image shooting effect in the infinity state, has a high magnification and a high resolution in the macro state, and has a relatively small total track length.

FIG. 34 is a diagram of a curve of a modulation transfer function of a lens assembly in an infinity state according to Embodiment 8 of this application. FIG. 35 is a diagram of a curve of a modulation transfer function of a lens assembly in a macro state according to Embodiment 8 of this application.

A solid line and a dashed line in FIG. 34 and FIG. 35 respectively represent a sagittal field of view and a tangential field of view. It can be learned from FIG. 34 and FIG. 35 that the lens assembly 210 has a good resolution and contrast, thereby ensuring high imaging quality.

In the description of embodiments of this application, it should be noted that, unless otherwise explicitly stipulated and restricted, terms "installation", "joint connection", and "connection" should be understood broadly, which, for example, may be a fixed connection, or may be an indirect connection by using a medium, or may be an internal communication between two components, or may be an interactive relationship between two components. A person of ordinary skill in the art may understand specific meanings of the foregoing terms in embodiments of this application based on specific situations. The terms such as "first", "second", "third", "fourth", and the like (if existent) are intended to distinguish between similar objects but do not necessarily indicate a specific order or sequence.

Finally, it should be noted that the foregoing embodiments are merely used to describe the technical solutions in embodiments of this application, but not to limit the technical solutions. Although embodiments of this application are described in detail with reference to the foregoing embodiments, a person of ordinary skill in the art should understand that the technical solutions recorded in the foregoing embodiments may still be modified, or some or all of technical features thereof may be equivalently replaced. However, these modifications or replacements do not depart from the scope of the technical solutions in embodiments of this application.

## Claims

1. A lens assembly, comprising a first lens, a second lens group, and a third lens group that are sequentially arranged from an object side to an image side along an optical axis direction, wherein the second lens group comprises a plurality of sequentially arranged second lenses, and the third lens group comprises a plurality of sequentially arranged third lenses;

   the second lens group is movable along the optical axis direction, and when the lens assembly is switched from an infinity state to a macro state, the second lens group moves towards the object side by a preset distance along the optical axis direction; and
   a focal length f1 of the first lens and a focal length EFL1 of the lens assembly in the infinity state satisfy a conditional expression: $1<|f1/EFL1|<2$.

2. The lens assembly according to claim 1, wherein a focal length f2 of the second lens group and the focal length EFL1 of the lens assembly in the infinity state satisfy a conditional expression: $0.3<|f2/EFL1|<1$.

3. The lens assembly according to claim 1 or 2, wherein a focal length f3 of the third lens group and the focal length EFL1 of the lens assembly in the infinity state satisfy a conditional expression: $0.2<|f3/EFL1|<3$.

4. The lens assembly according to any one of claims 1 to 3, wherein the first lens has a positive focal power, the second lens group has a positive focal power, and the third lens group has a negative focal power.

5. The lens assembly according to any one of claims 1 to 4, wherein an f-number F# of the lens assembly in the infinity state satisfies a conditional expression: $1.0\leq F\#\leq 4.0$.

6. The lens assembly according to any one of claims 1 to 5, wherein an f-number F# of the lens assembly in the macro state satisfies a conditional expression: $1.8\leq F\#\leq 4.0$.

7. The lens assembly according to any one of claims 1 to 6, wherein a magnification Mag of the lens assembly in the macro state satisfies a conditional expression: $0.1x<Mag<1.0x$.

8. The lens assembly according to any one of claims 1 to 7, wherein the focal length EFL1 of the lens assembly in the infinity state and a total track length TTL of the lens assembly in the infinity state satisfy a conditional expression: $0.7<EFL1/TTL<1$.

9. The lens assembly according to any one of claims 1 to 8, wherein the preset distance L by which the second lens group moves and the total track length TTL1 of the lens assembly in the infinity state satisfy a conditional expression: $0.1<L/TTL<0.3$.

10. The lens assembly according to any one of claims 1 to 9, wherein the preset distance L by which the second lens group moves and an object distance C of the lens assembly in the macro state satisfy a conditional expression: $0.4\leq(L/C)*10<3.5$.

11. The lens assembly according to any one of claims 1 to 10, wherein the focal length EFL1 of the lens assembly in the infinity state and a focal length EFL2 of the lens assembly in the macro state satisfy a conditional expression: $0.25<EFL2/EFL1<0.95$.

**12.** The lens assembly according to any one of claims 1 to 11, wherein a refractive index Nd of the first lens satisfies a conditional expression: $1.4<Nd<1.85$.

**13.** The lens assembly according to any one of claims 1 to 12, wherein in the first lens, the second lens, and the third lens, some are plastic lenses and some are glass lenses.

**14.** The lens assembly according to any one of claims 1 to 13, wherein the first lens, the second lens, and the third lens are all aspherical lenses.

**15.** A camera module, comprising at least an image sensor and the lens assembly according to any one of claims 1 to 14, wherein the image sensor is located on a side that is of the lens assembly and that faces the image side.

**16.** An electronic device, comprising at least a housing and the camera module according to claim 15, wherein the camera module is disposed on the housing.

[FIG. 1]

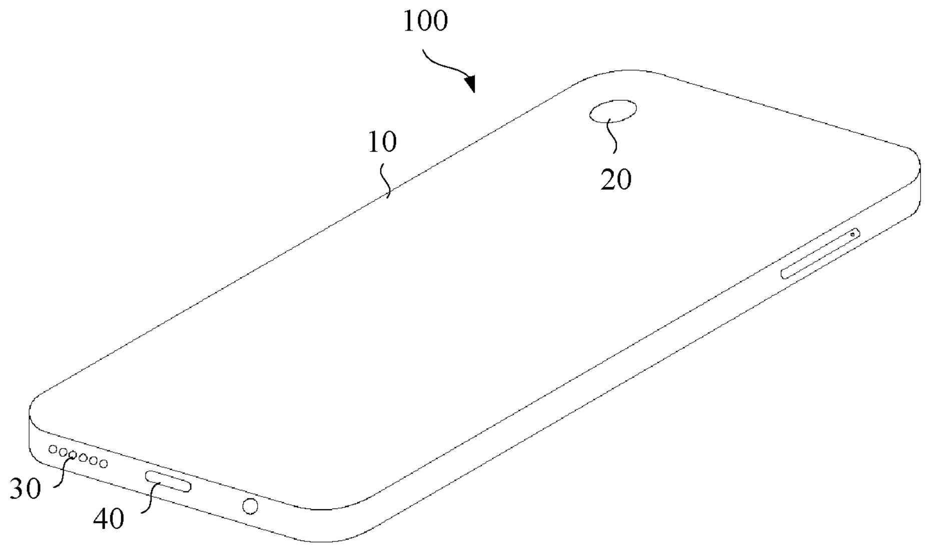
100
10
20
30
40

[FIG. 2]

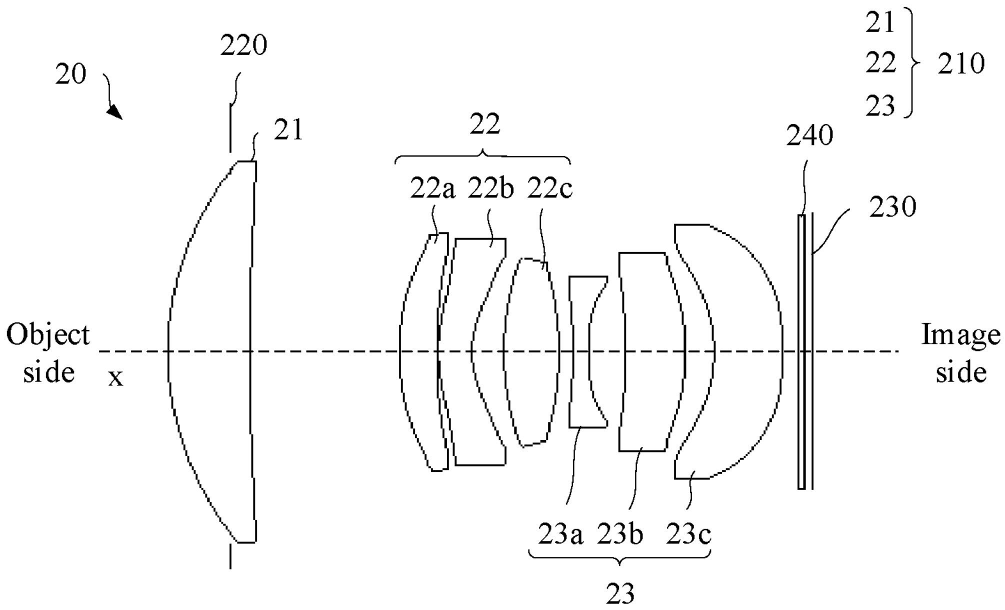
20
220
21
22
22a 22b 22c
21
22
23
210
240
230
Object side
x
Image side
23a 23b 23c
23

[FIG. 3]

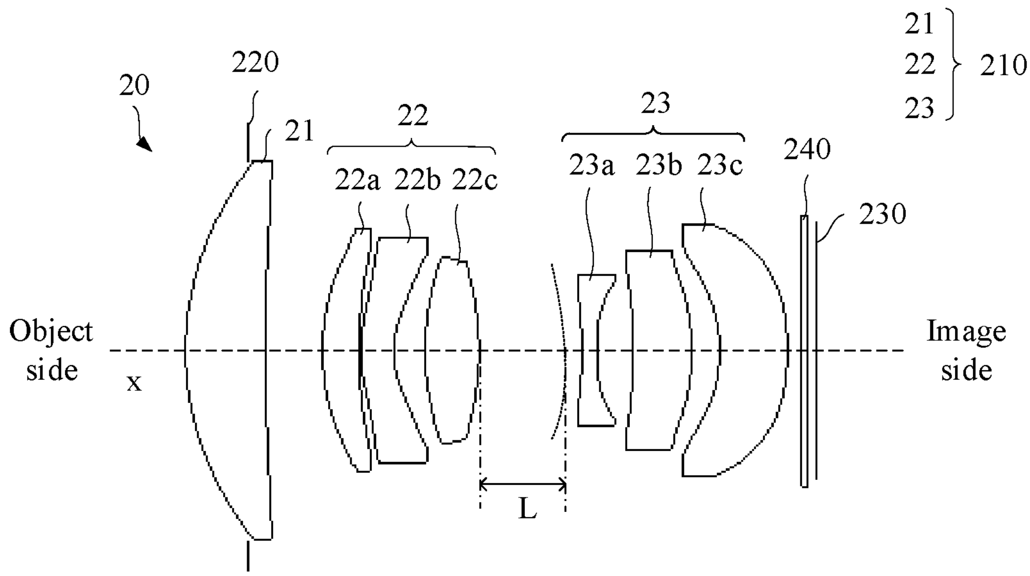
20
220
21
22
22a 22b 22c
23
23a 23b 23c
240
230
21
22
23
210
Object side
x
Image side
L

[FIG. 4]

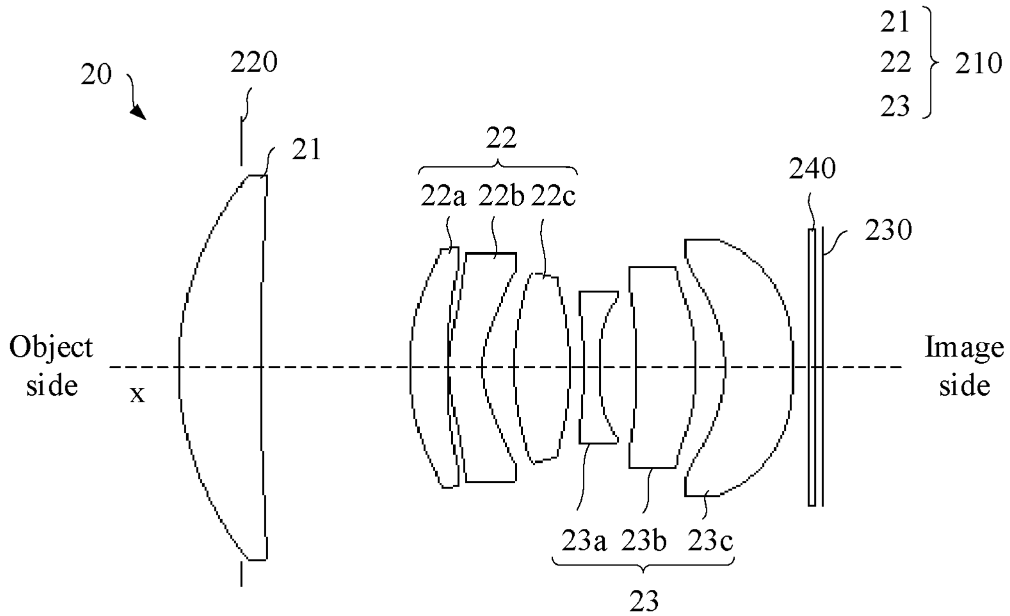
20
220
21
22
22a 22b 22c
240
230
21
22
23
210
Object side
x
Image side
23a 23b 23c
23

[FIG. 5]

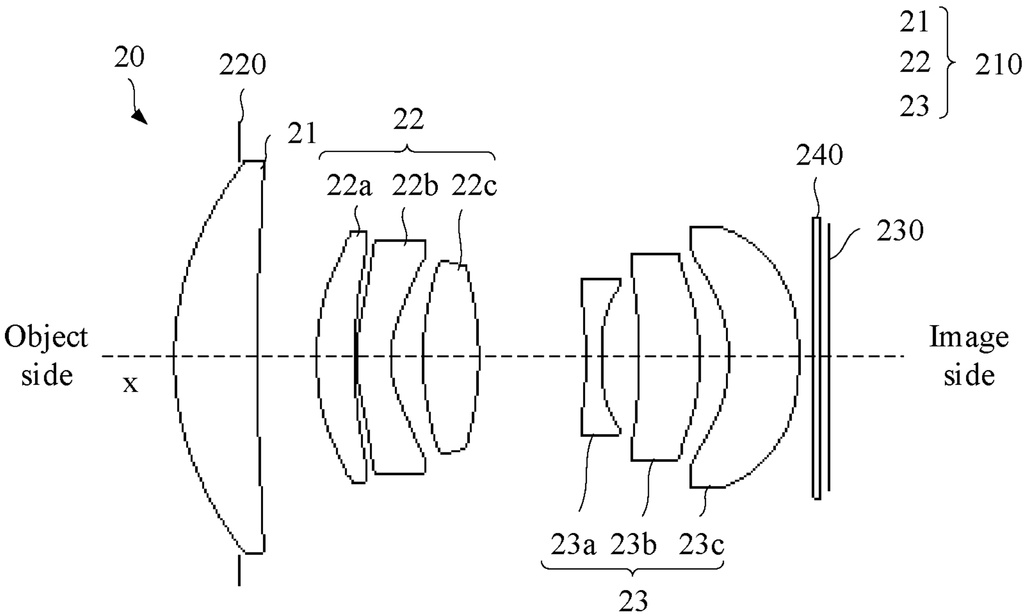
20
220
21
22
22a
22b
22c
21
22
23
210
240
230
Object side
x
Image side
23a
23b
23c
23

[FIG. 6]

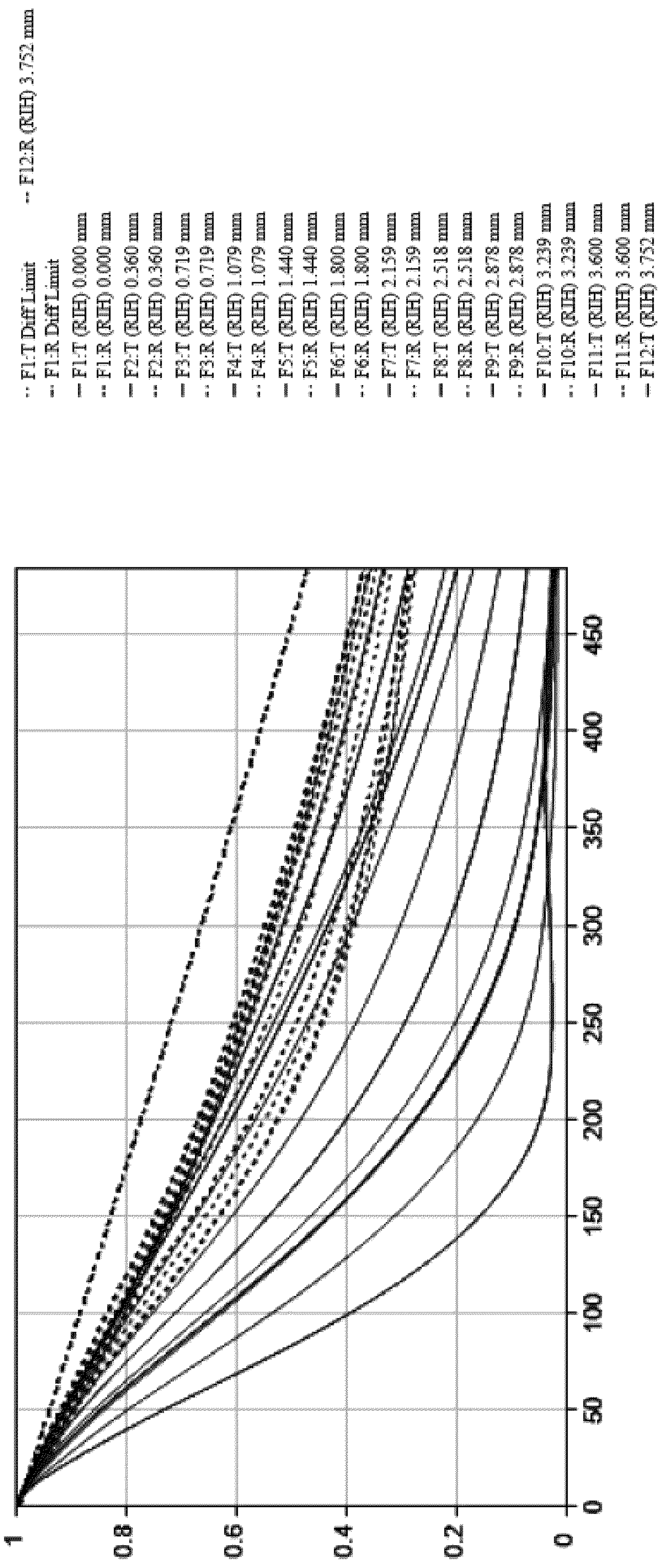

1
0.8
0.6
0.4
0.2
0
0
50
100
150
200
250
300
350
400
450
-- F1:T Diff Limit
-- F1:R Diff Limit
— F1:T (RIH) 0.000 mm
-- F1:R (RIH) 0.000 mm
— F2:T (RIH) 0.360 mm
-- F2:R (RIH) 0.360 mm
— F3:T (RIH) 0.719 mm
-- F3:R (RIH) 0.719 mm
— F4:T (RIH) 1.079 mm
-- F4:R (RIH) 1.079 mm
— F5:T (RIH) 1.440 mm
-- F5:R (RIH) 1.440 mm
— F6:T (RIH) 1.800 mm
-- F6:R (RIH) 1.800 mm
— F7:T (RIH) 2.159 mm
-- F7:R (RIH) 2.159 mm
— F8:T (RIH) 2.518 mm
-- F8:R (RIH) 2.518 mm
— F9:T (RIH) 2.878 mm
-- F9:R (RIH) 2.878 mm
— F10:T (RIH) 3.239 mm
-- F10:R (RIH) 3.239 mm
— F11:T (RIH) 3.600 mm
-- F11:R (RIH) 3.600 mm
— F12:T (RIH) 3.752 mm
-- F12:R (RIH) 3.752 mm

[FIG. 7]

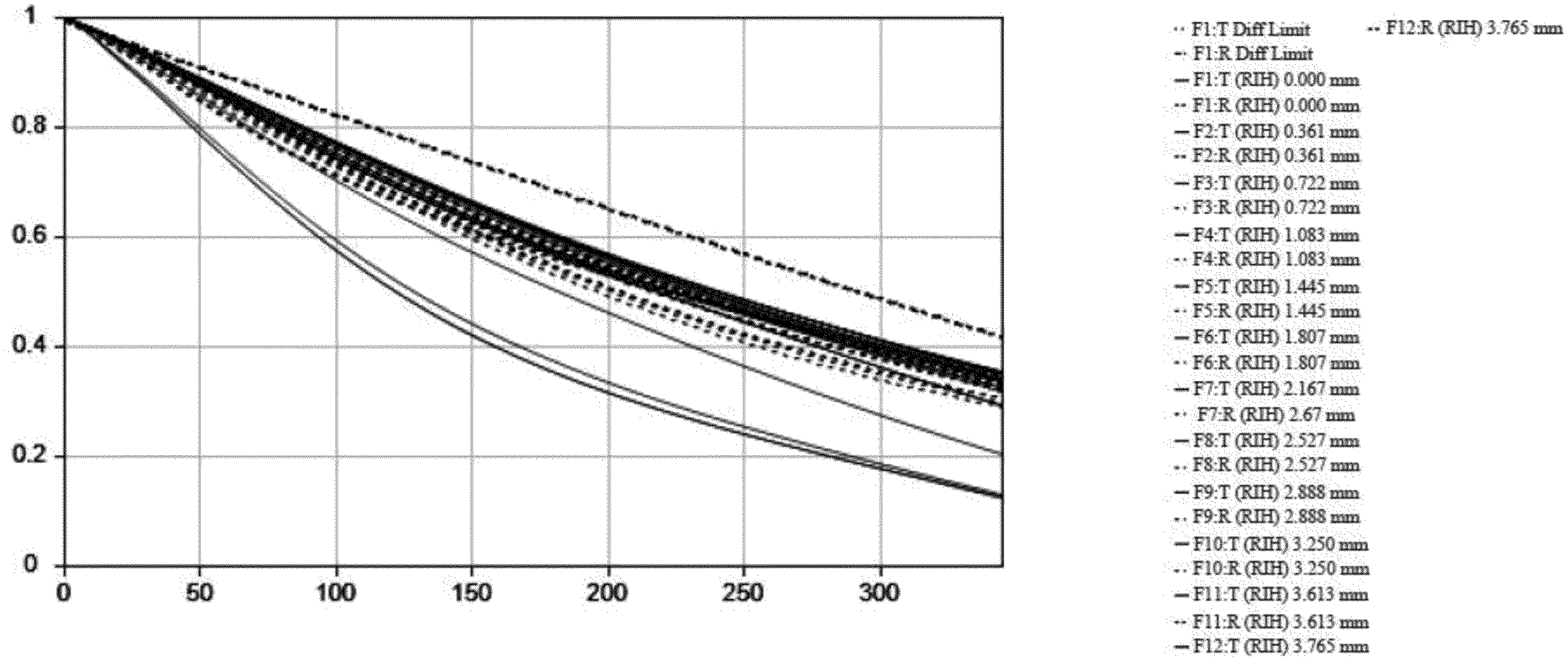
1
0.8
0.6
0.4
0.2
0
0
50
100
150
200
250
300
F1:T Diff Limit
F1:R Diff Limit
F1:T (RIH) 0.000 mm
F1:R (RIH) 0.000 mm
F2:T (RIH) 0.361 mm
F2:R (RIH) 0.361 mm
F3:T (RIH) 0.722 mm
F3:R (RIH) 0.722 mm
F4:T (RIH) 1.083 mm
F4:R (RIH) 1.083 mm
F5:T (RIH) 1.445 mm
F5:R (RIH) 1.445 mm
F6:T (RIH) 1.807 mm
F6:R (RIH) 1.807 mm
F7:T (RIH) 2.167 mm
F7:R (RIH) 2.67 mm
F8:T (RIH) 2.527 mm
F8:R (RIH) 2.527 mm
F9:T (RIH) 2.888 mm
F9:R (RIH) 2.888 mm
F10:T (RIH) 3.250 mm
F10:R (RIH) 3.250 mm
F11:T (RIH) 3.613 mm
F11:R (RIH) 3.613 mm
F12:T (RIH) 3.765 mm
F12:R (RIH) 3.765 mm

[FIG. 8]

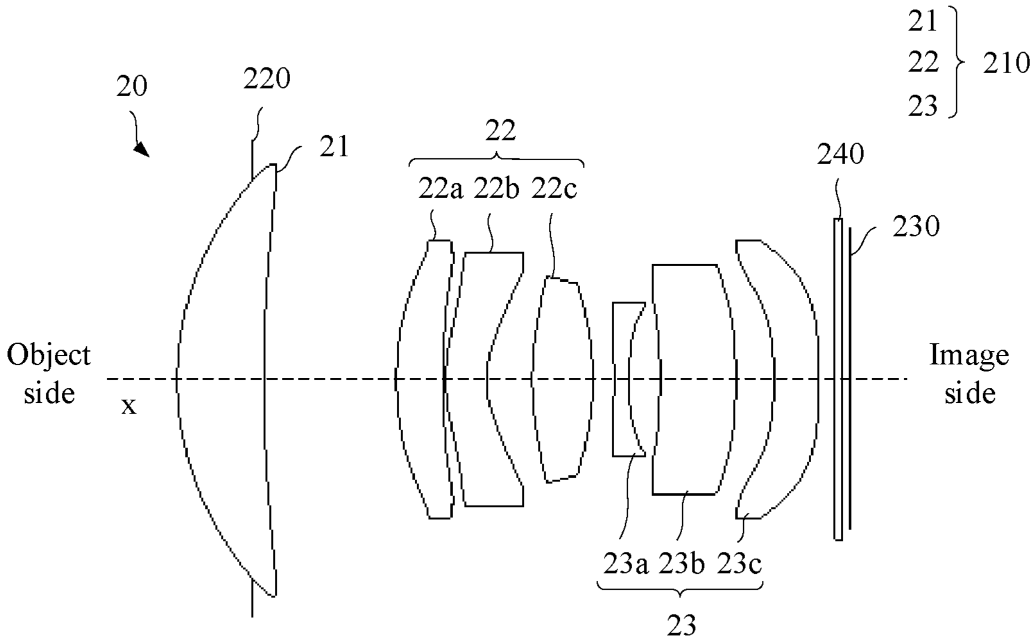
21
22
23
210
20
220
21
22
22a 22b 22c
240
230
Object side
x
Image side
23a 23b 23c
23

[FIG. 9]

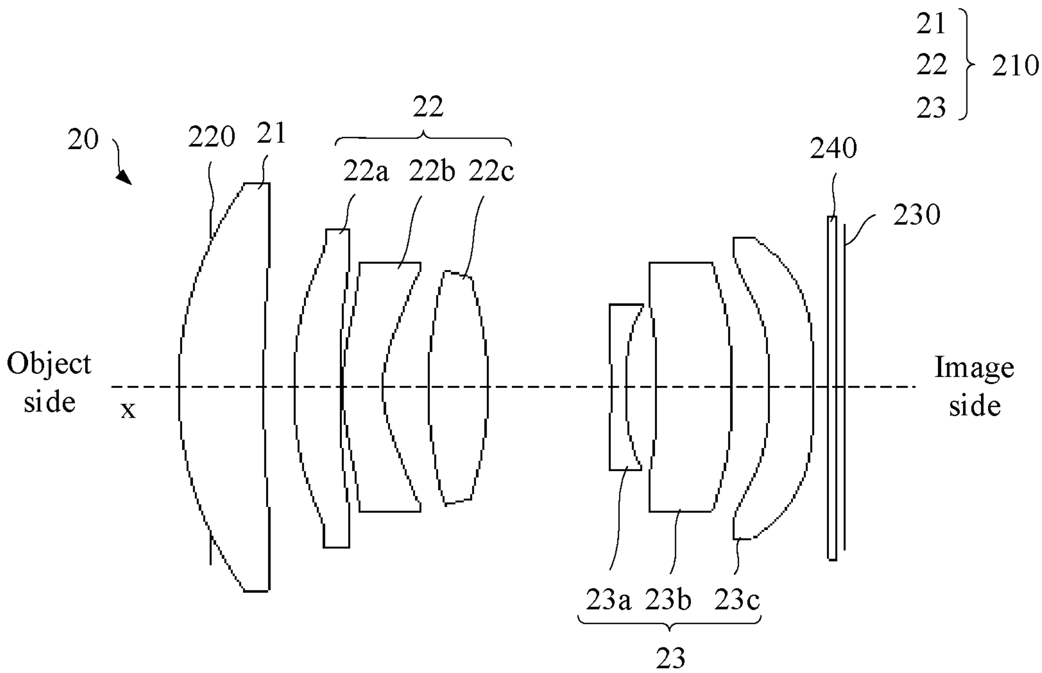
21
22
23
210
22
20
220
21
22a 22b 22c
240
230
Object side
x
Image side
23a 23b 23c
23

[FIG. 10]

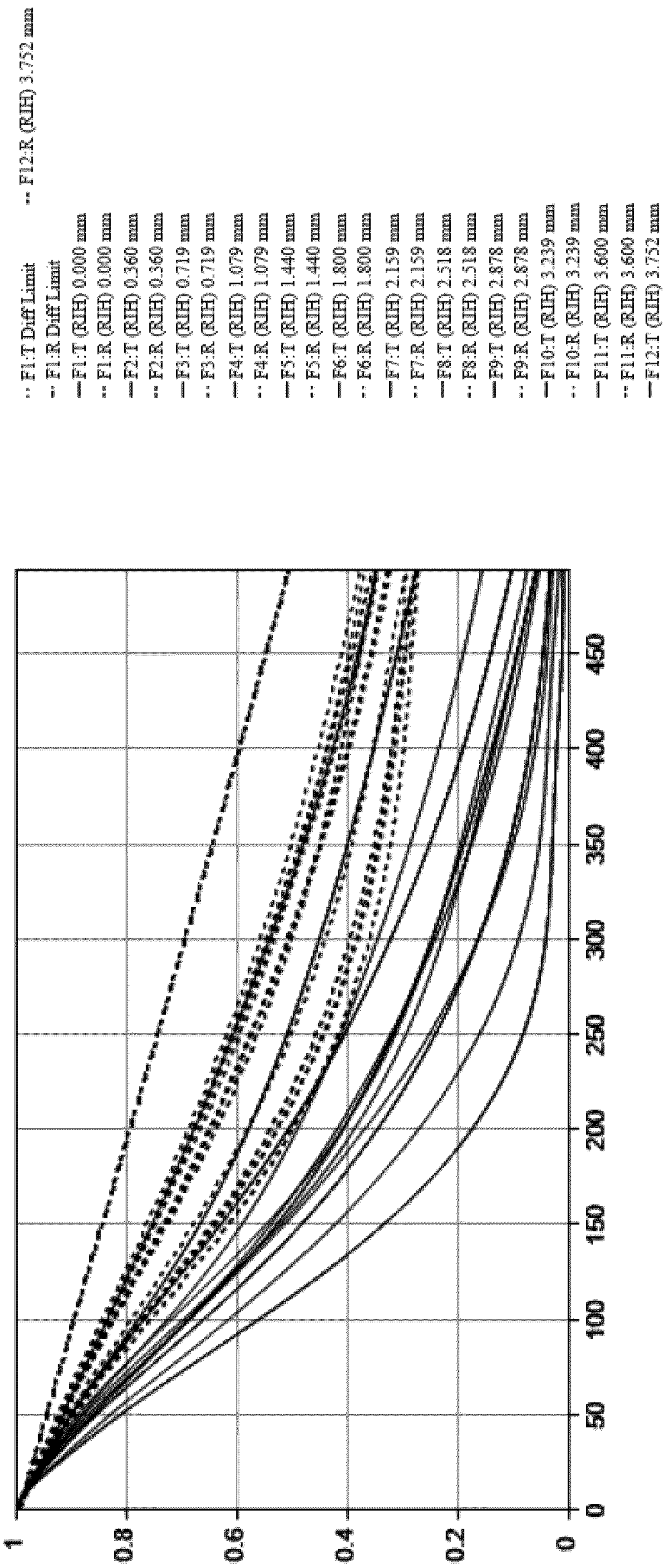

1
0.8
0.6
0.4
0.2
0
0
50
100
150
200
250
300
350
400
450
F1:T Diff Limit
F1:R Diff Limit
F1:T (RIH) 0.000 mm
F1:R (RIH) 0.000 mm
F2:T (RIH) 0.360 mm
F2:R (RIH) 0.360 mm
F3:T (RIH) 0.719 mm
F3:R (RIH) 0.719 mm
F4:T (RIH) 1.079 mm
F4:R (RIH) 1.079 mm
F5:T (RIH) 1.440 mm
F5:R (RIH) 1.440 mm
F6:T (RIH) 1.800 mm
F6:R (RIH) 1.800 mm
F7:T (RIH) 2.159 mm
F7:R (RIH) 2.159 mm
F8:T (RIH) 2.518 mm
F8:R (RIH) 2.518 mm
F9:T (RIH) 2.878 mm
F9:R (RIH) 2.878 mm
F10:T (RIH) 3.239 mm
F10:R (RIH) 3.239 mm
F11:T (RIH) 3.600 mm
F11:R (RIH) 3.600 mm
F12:T (RIH) 3.752 mm
F12:R (RIH) 3.752 mm

[FIG. 11]

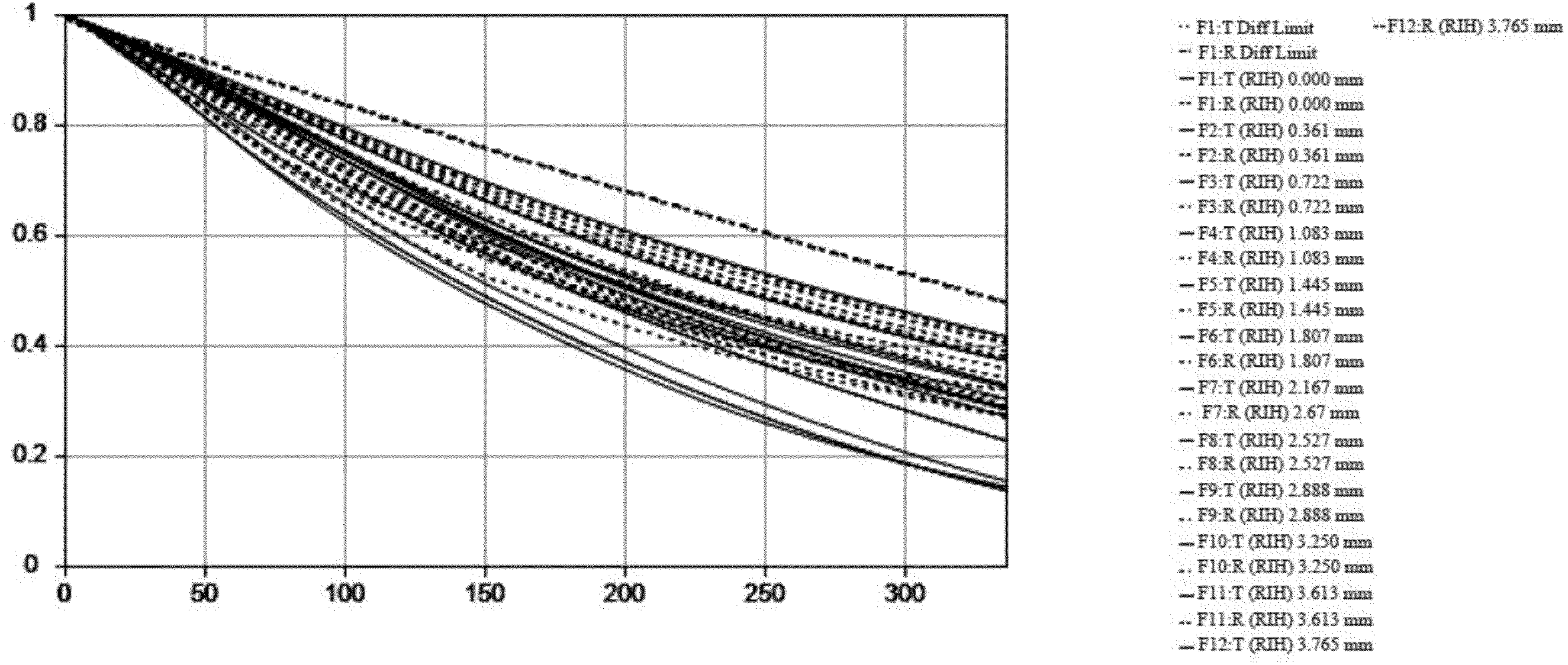
1
0.8
0.6
0.4
0.2
0
0
50
100
150
200
250
300
F1:T Diff Limit
F1:R Diff Limit
F1:T (RIH) 0.000 mm
F1:R (RIH) 0.000 mm
F2:T (RIH) 0.361 mm
F2:R (RIH) 0.361 mm
F3:T (RIH) 0.722 mm
F3:R (RIH) 0.722 mm
F4:T (RIH) 1.083 mm
F4:R (RIH) 1.083 mm
F5:T (RIH) 1.445 mm
F5:R (RIH) 1.445 mm
F6:T (RIH) 1.807 mm
F6:R (RIH) 1.807 mm
F7:T (RIH) 2.167 mm
F7:R (RIH) 2.67 mm
F8:T (RIH) 2.527 mm
F8:R (RIH) 2.527 mm
F9:T (RIH) 2.888 mm
F9:R (RIH) 2.888 mm
F10:T (RIH) 3.250 mm
F10:R (RIH) 3.250 mm
F11:T (RIH) 3.613 mm
F11:R (RIH) 3.613 mm
F12:T (RIH) 3.765 mm
F12:R (RIH) 3.765 mm

[FIG. 12]

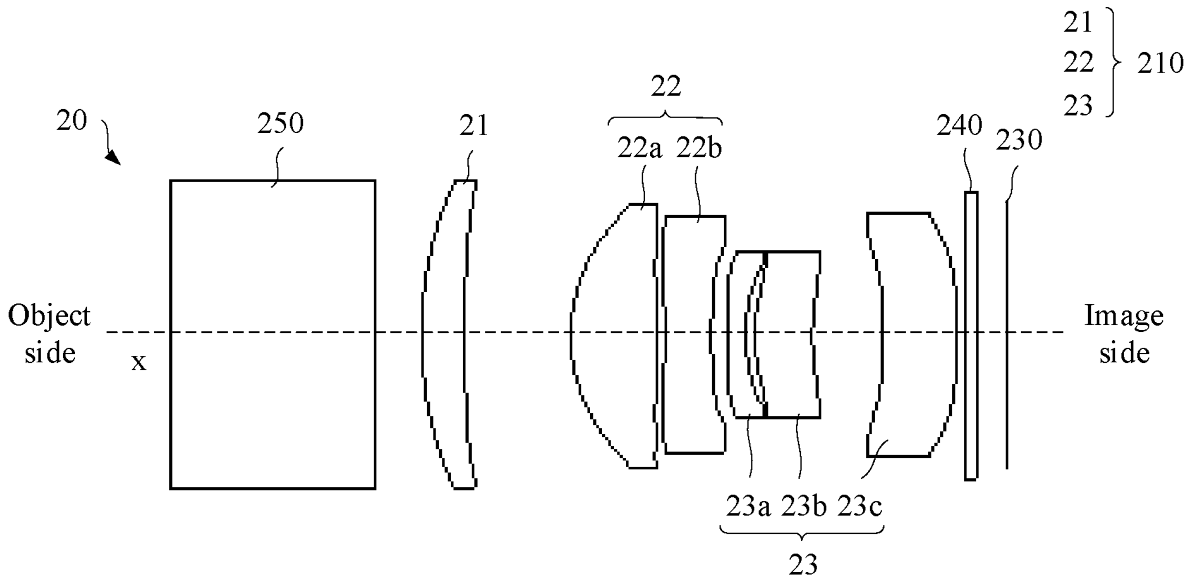
21
22
23
210
22
20
250
21
22a 22b
240
230
Object side
x
Image side
23a 23b 23c
23

[FIG. 13]

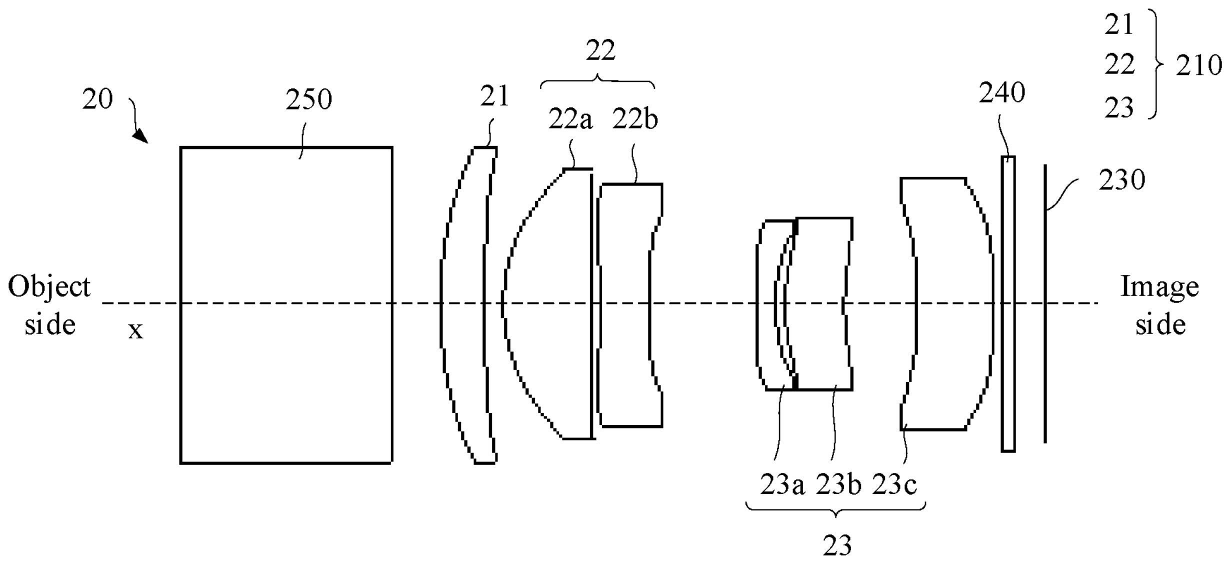
21
22
23
210
22
20
250
21
22a 22b
240
230
Object side
x
Image side
23a 23b 23c
23

[FIG. 14]

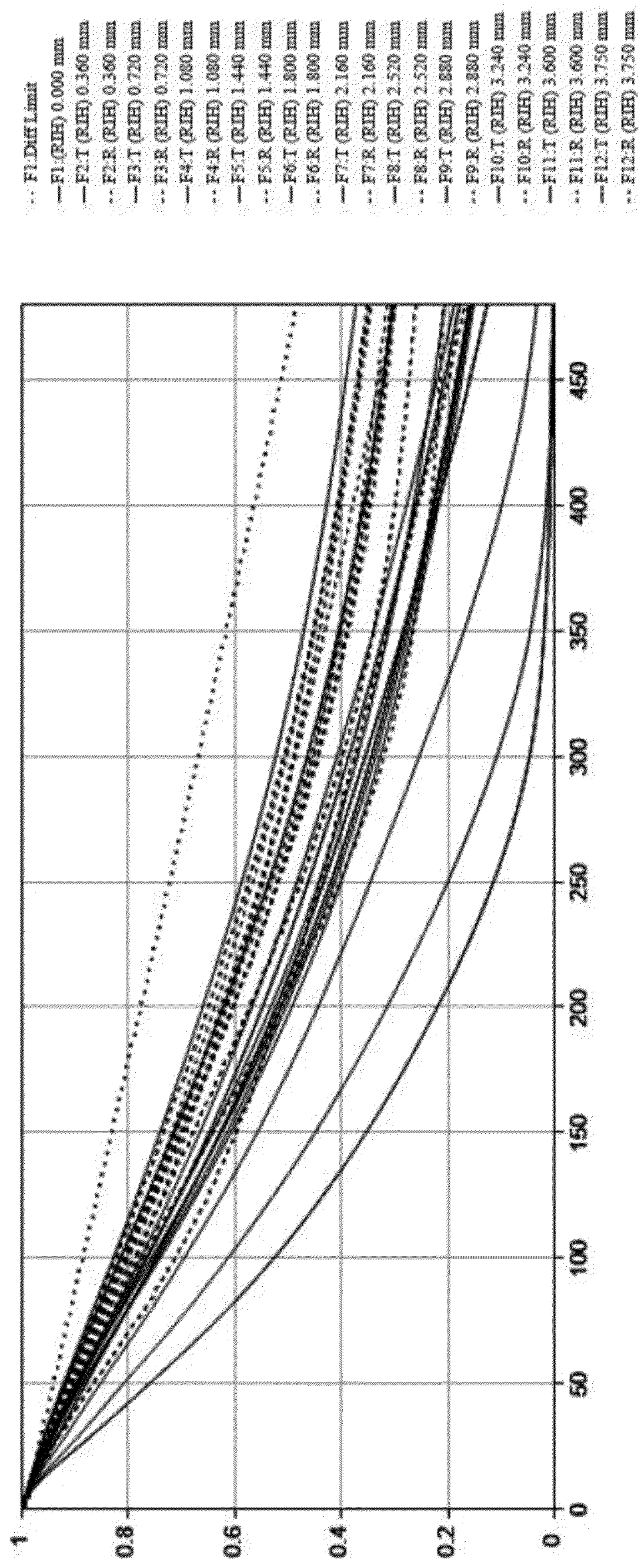
F1:Diff Limit
F1:(RIH) 0.000 mm
F2:T (RIH) 0.360 mm
F2:R (RIH) 0.360 mm
F3:T (RIH) 0.720 mm
F3:R (RIH) 0.720 mm
F4:T (RIH) 1.080 mm
F4:R (RIH) 1.080 mm
F5:T (RIH) 1.440 mm
F5:R (RIH) 1.440 mm
F6:T (RIH) 1.800 mm
F6:R (RIH) 1.800 mm
F7:T (RIH) 2.160 mm
F7:R (RIH) 2.160 mm
F8:T (RIH) 2.520 mm
F8:R (RIH) 2.520 mm
F9:T (RIH) 2.880 mm
F9:R (RIH) 2.880 mm
F10:T (RIH) 3.240 mm
F10:R (RIH) 3.240 mm
F11:T (RIH) 3.600 mm
F11:R (RIH) 3.600 mm
F12:T (RIH) 3.750 mm
F12:R (RIH) 3.750 mm
1
0.8
0.6
0.4
0.2
0
0
50
100
150
200
250
300
350
400
450

[FIG. 15]

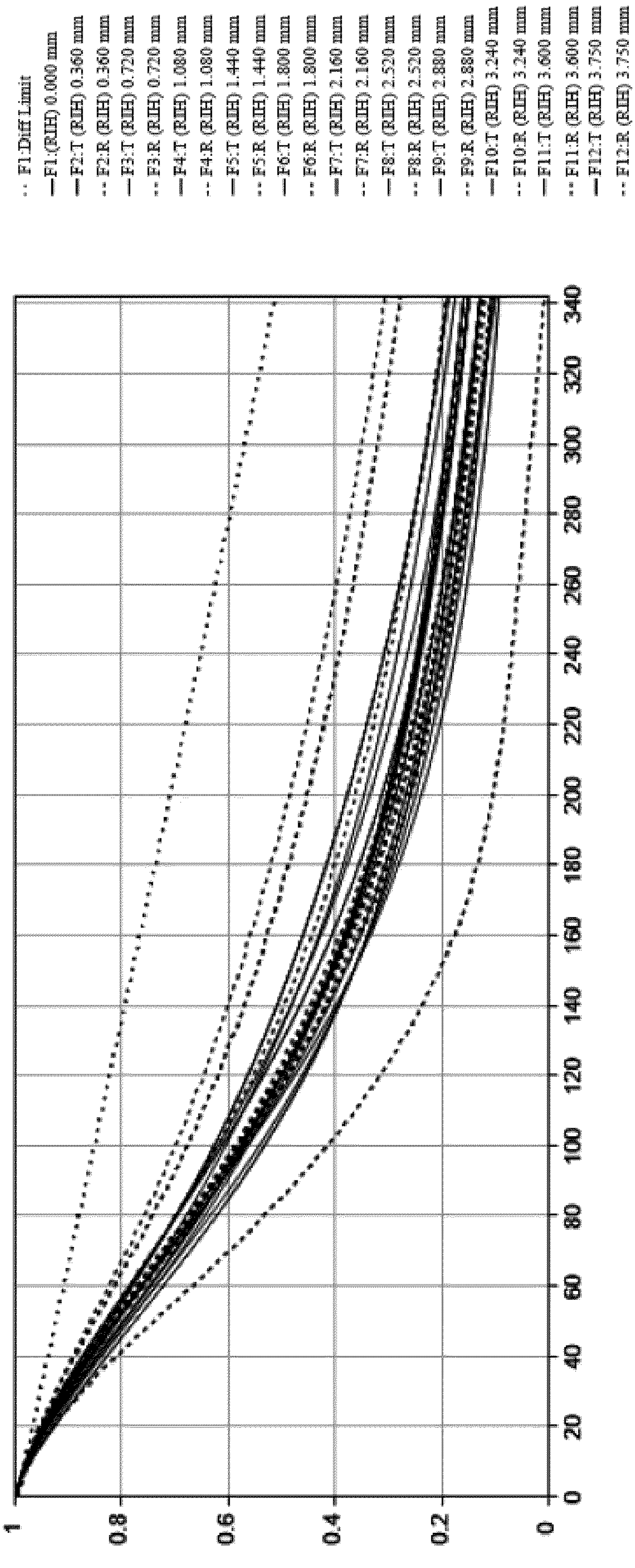
F1:Diff Limit
F1:(RIH) 0.000 mm
F2:T (RIH) 0.360 mm
F2:R (RIH) 0.360 mm
F3:T (RIH) 0.720 mm
F3:R (RIH) 0.720 mm
F4:T (RIH) 1.080 mm
F4:R (RIH) 1.080 mm
F5:T (RIH) 1.440 mm
F5:R (RIH) 1.440 mm
F6:T (RIH) 1.800 mm
F6:R (RIH) 1.800 mm
F7:T (RIH) 2.160 mm
F7:R (RIH) 2.160 mm
F8:T (RIH) 2.520 mm
F8:R (RIH) 2.520 mm
F9:T (RIH) 2.880 mm
F9:R (RIH) 2.880 mm
F10:T (RIH) 3.240 mm
F10:R (RIH) 3.240 mm
F11:T (RIH) 3.600 mm
F11:R (RIH) 3.600 mm
F12:T (RIH) 3.750 mm
F12:R (RIH) 3.750 mm
1
0.8
0.6
0.4
0.2
0
0
20
40
60
80
100
120
140
160
180
200
220
240
260
280
300
320
340

[FIG. 16]

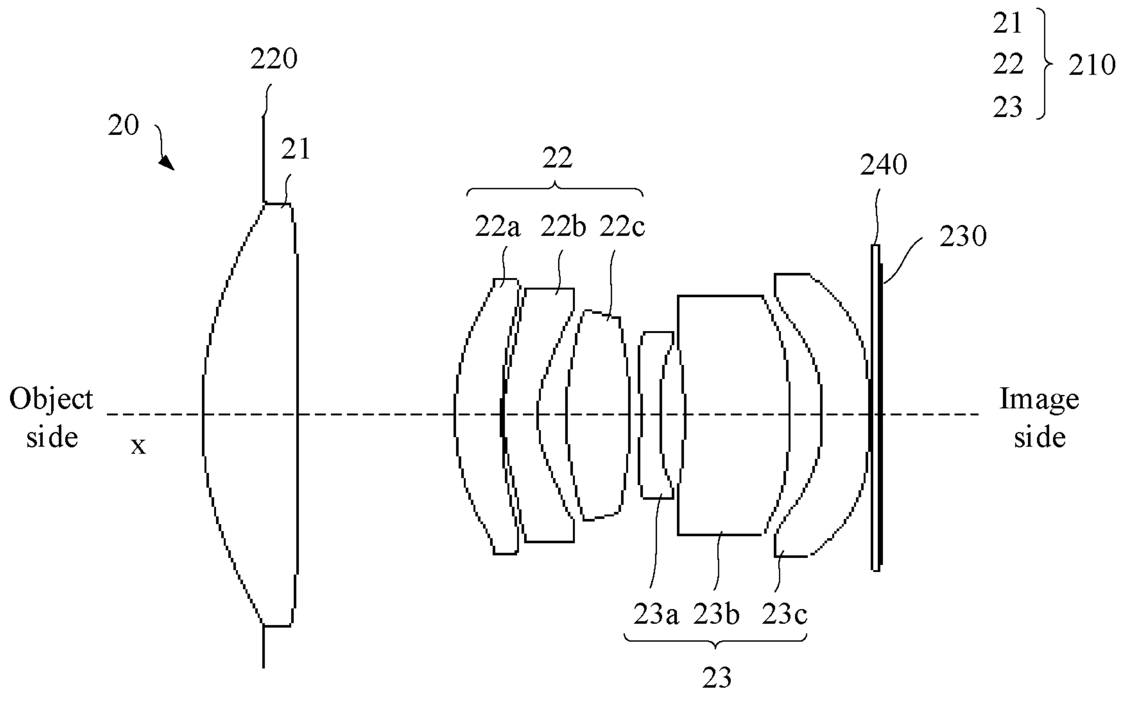
21
22
23
210
220
20
21
22
22a 22b 22c
240
230
Object side
x
Image side
23a 23b 23c
23

[FIG. 17]

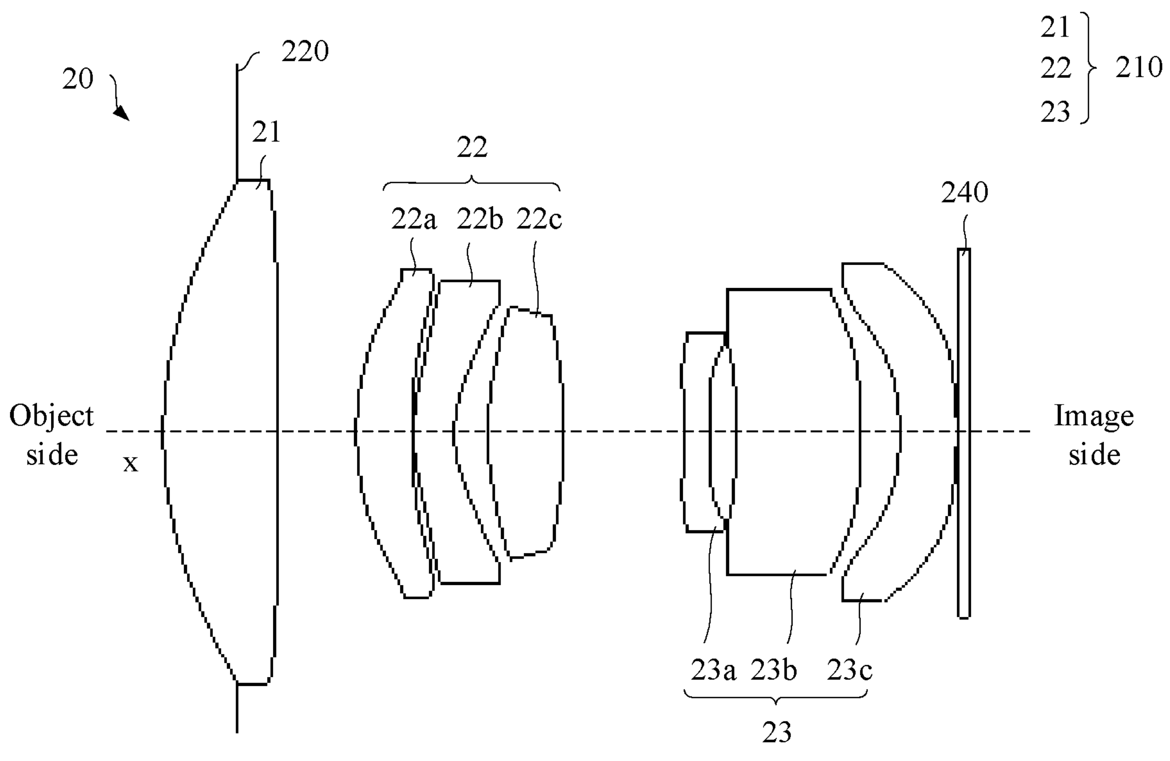
21
22
23
210
220
20
21
22
22a 22b 22c
240
Object side
x
Image side
23a 23b 23c
23

[FIG. 18]

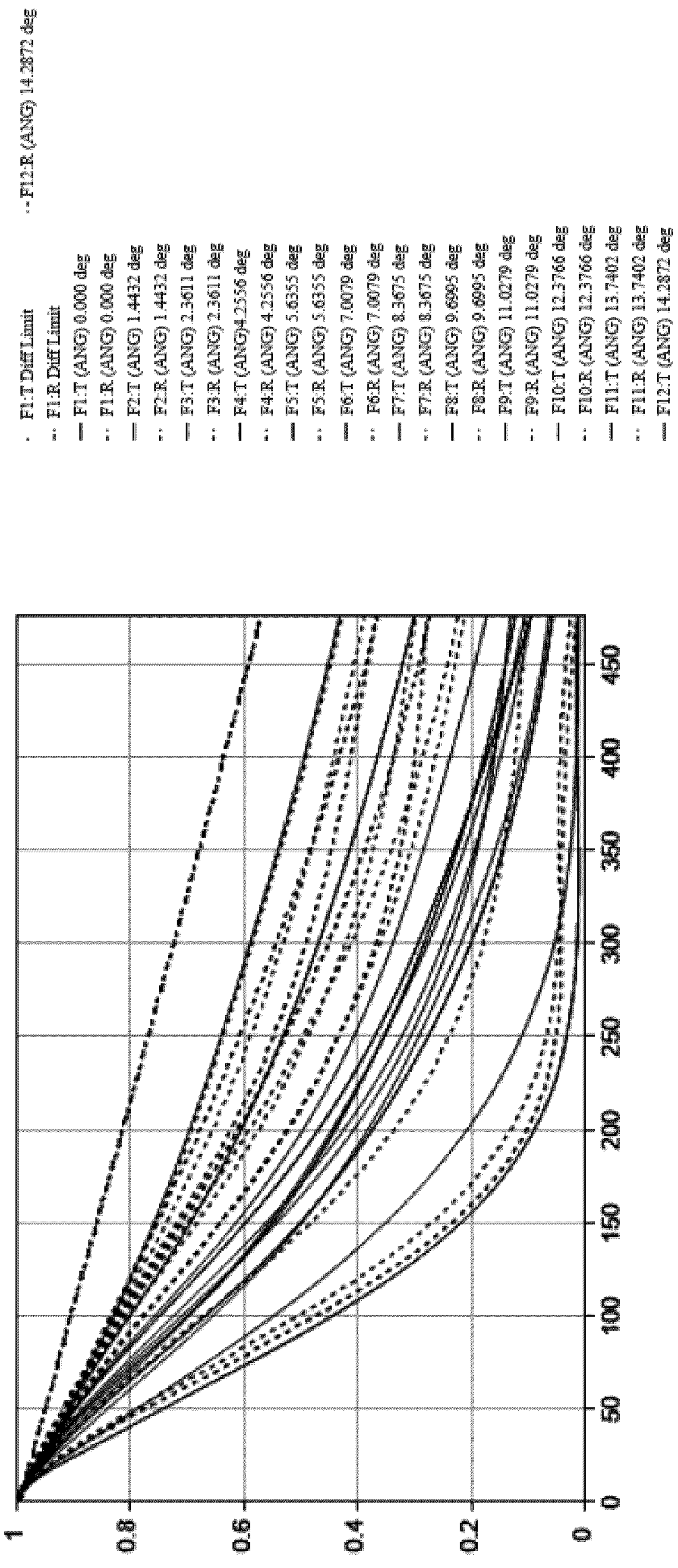
F1:T Diff Limit
F1:R Diff Limit
F1:T (ANG) 0.000 deg
F1:R (ANG) 0.000 deg
F2:T (ANG) 1.4432 deg
F2:R (ANG) 1.4432 deg
F3:T (ANG) 2.3611 deg
F3:R (ANG) 2.3611 deg
F4:T (ANG)4.2556 deg
F4:R (ANG) 4.2556 deg
F5:T (ANG) 5.6355 deg
F5:R (ANG) 5.6355 deg
F6:T (ANG) 7.0079 deg
F6:R (ANG) 7.0079 deg
F7:T (ANG) 8.3675 deg
F7:R (ANG) 8.3675 deg
F8:T (ANG) 9.6995 deg
F8:R (ANG) 9.6995 deg
F9:T (ANG) 11.0279 deg
F9:R (ANG) 11.0279 deg
F10:T (ANG) 12.3766 deg
F10:R (ANG) 12.3766 deg
F11:T (ANG) 13.7402 deg
F11:R (ANG) 13.7402 deg
F12:T (ANG) 14.2872 deg
F12:R (ANG) 14.2872 deg
1
0.8
0.6
0.4
0.2
0
0
50
100
150
200
250
300
350
400
450

[FIG. 19]

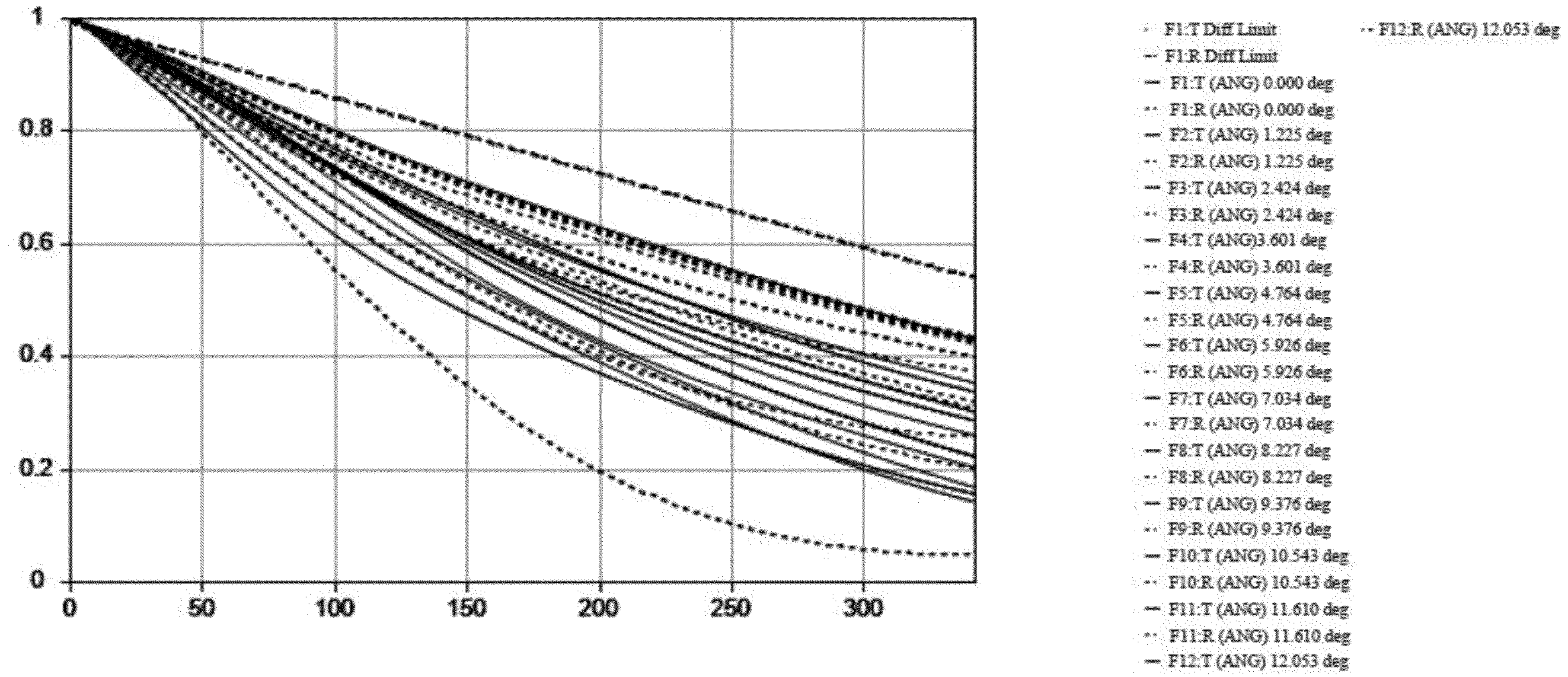

1
0.8
0.6
0.4
0.2
0
0
50
100
150
200
250
300
F1:T Diff Limit
F1:R Diff Limit
F1:T (ANG) 0.000 deg
F1:R (ANG) 0.000 deg
F2:T (ANG) 1.225 deg
F2:R (ANG) 1.225 deg
F3:T (ANG) 2.424 deg
F3:R (ANG) 2.424 deg
F4:T (ANG)3.601 deg
F4:R (ANG) 3.601 deg
F5:T (ANG) 4.764 deg
F5:R (ANG) 4.764 deg
F6:T (ANG) 5.926 deg
F6:R (ANG) 5.926 deg
F7:T (ANG) 7.034 deg
F7:R (ANG) 7.034 deg
F8:T (ANG) 8.227 deg
F8:R (ANG) 8.227 deg
F9:T (ANG) 9.376 deg
F9:R (ANG) 9.376 deg
F10:T (ANG) 10.543 deg
F10:R (ANG) 10.543 deg
F11:T (ANG) 11.610 deg
F11:R (ANG) 11.610 deg
F12:T (ANG) 12.053 deg
F12:R (ANG) 12.053 deg

[FIG. 20]

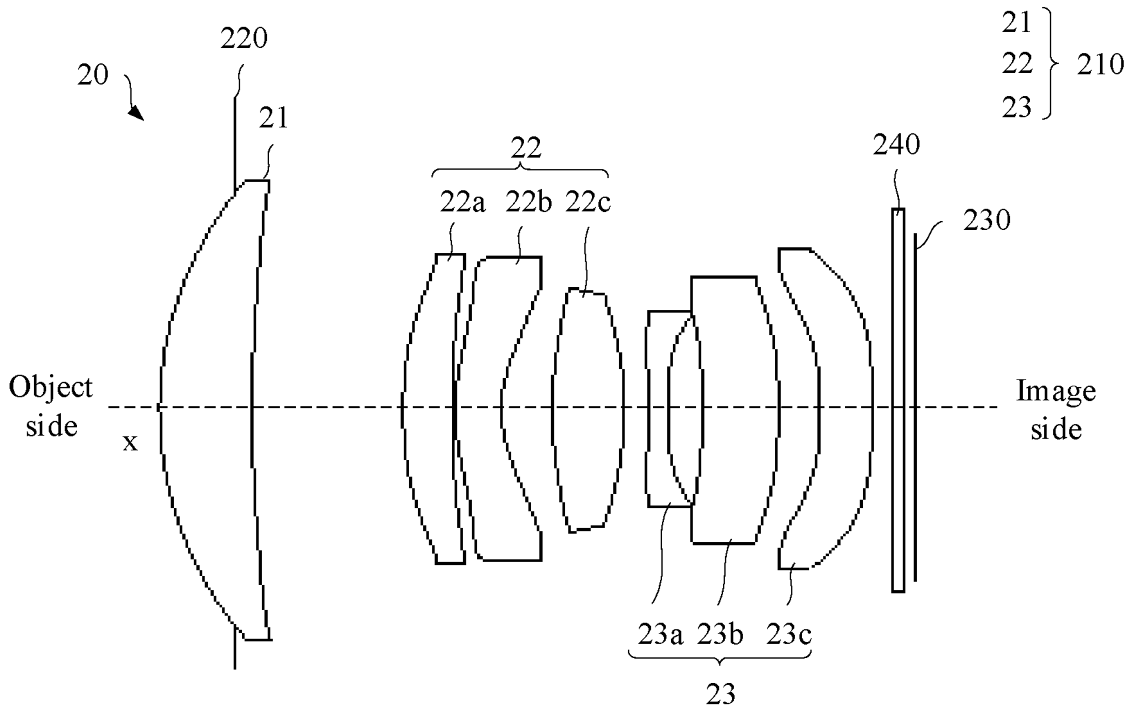
21
22
23
210
220
20
21
22
22a 22b 22c
240
230
Object side
x
Image side
23a 23b 23c
23

[FIG. 21]

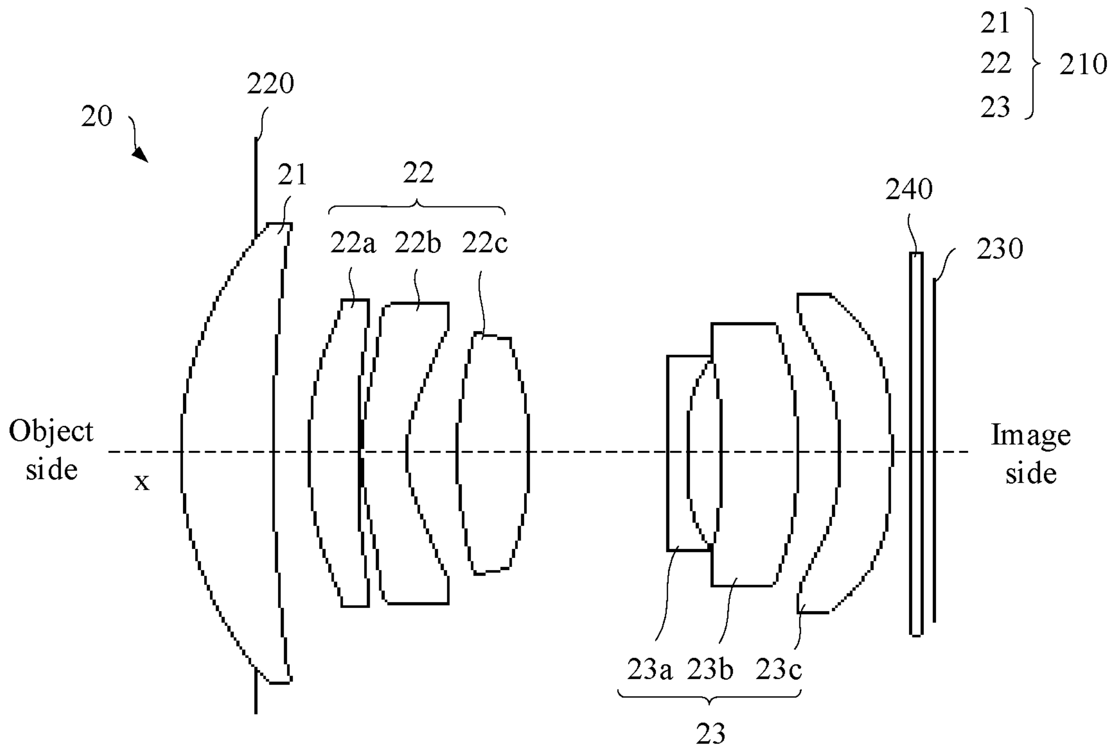
21
22
23
210
220
20
21
22
22a 22b 22c
240
230
Object side
x
Image side
23a 23b 23c
23

[FIG. 22]

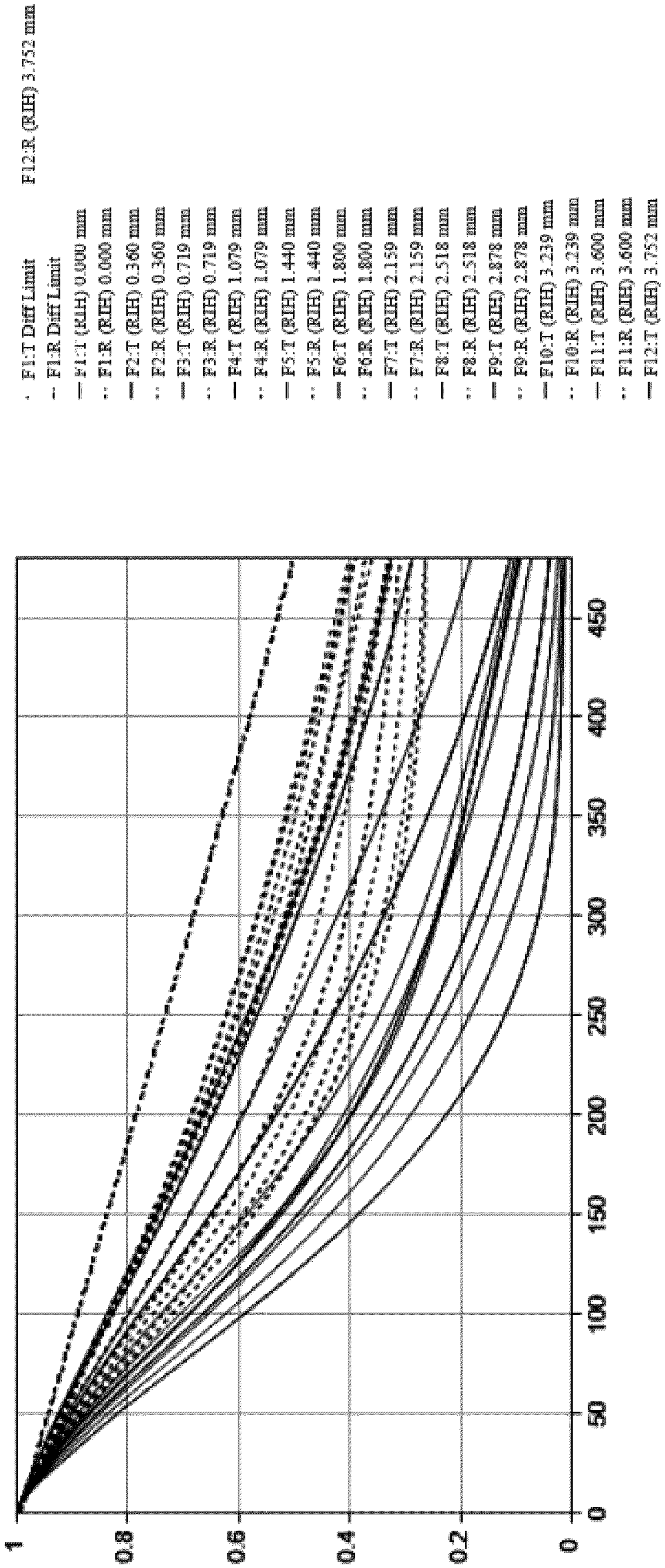
1
0.8
0.6
0.4
0.2
0
0
50
100
150
200
250
300
350
400
450
F1:T Diff Limit
F1:R Diff Limit
F1:T (RIH) 0.000 mm
F1:R (RIH) 0.000 mm
F2:T (RIH) 0.360 mm
F2:R (RIH) 0.360 mm
F3:T (RIH) 0.719 mm
F3:R (RIH) 0.719 mm
F4:T (RIH) 1.079 mm
F4:R (RIH) 1.079 mm
F5:T (RIH) 1.440 mm
F5:R (RIH) 1.440 mm
F6:T (RIH) 1.800 mm
F6:R (RIH) 1.800 mm
F7:T (RIH) 2.159 mm
F7:R (RIH) 2.159 mm
F8:T (RIH) 2.518 mm
F8:R (RIH) 2.518 mm
F9:T (RIH) 2.878 mm
F9:R (RIH) 2.878 mm
F10:T (RIH) 3.239 mm
F10:R (RIH) 3.239 mm
F11:T (RIH) 3.600 mm
F11:R (RIH) 3.600 mm
F12:T (RIH) 3.752 mm
F12:R (RIH) 3.752 mm

[FIG. 23]

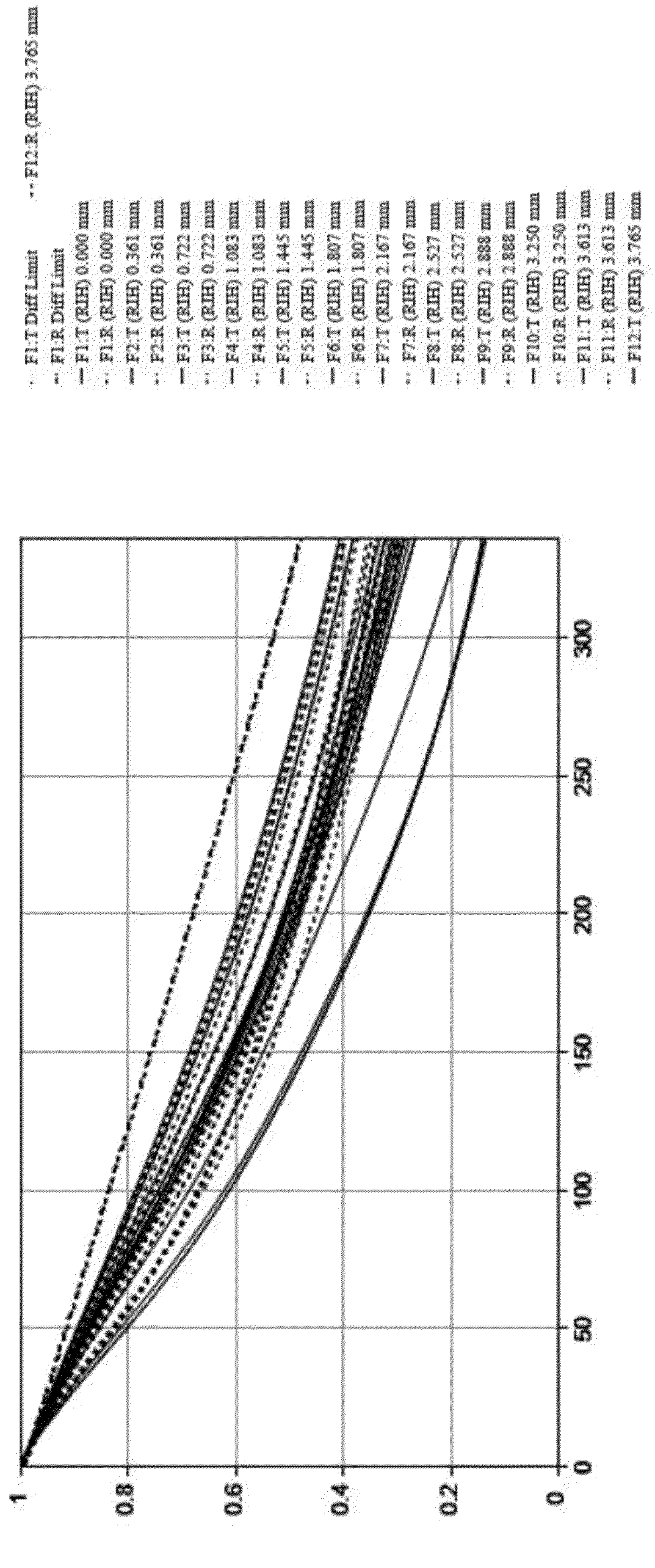
F1:T Diff Limit
F1:R Diff Limit
F1:T (RIH) 0.000 mm
F1:R (RIH) 0.000 mm
F2:T (RIH) 0.361 mm
F2:R (RIH) 0.361 mm
F3:T (RIH) 0.722 mm
F3:R (RIH) 0.722 mm
F4:T (RIH) 1.083 mm
F4:R (RIH) 1.083 mm
F5:T (RIH) 1.445 mm
F5:R (RIH) 1.445 mm
F6:T (RIH) 1.807 mm
F6:R (RIH) 1.807 mm
F7:T (RIH) 2.167 mm
F7:R (RIH) 2.167 mm
F8:T (RIH) 2.527 mm
F8:R (RIH) 2.527 mm
F9:T (RIH) 2.888 mm
F9:R (RIH) 2.888 mm
F10:T (RIH) 3.250 mm
F10:R (RIH) 3.250 mm
F11:T (RIH) 3.613 mm
F11:R (RIH) 3.613 mm
F12:T (RIH) 3.765 mm
F12:R (RIH) 3.765 mm
1
0.8
0.6
0.4
0.2
0
0
50
100
150
200
250
300

[FIG. 24]

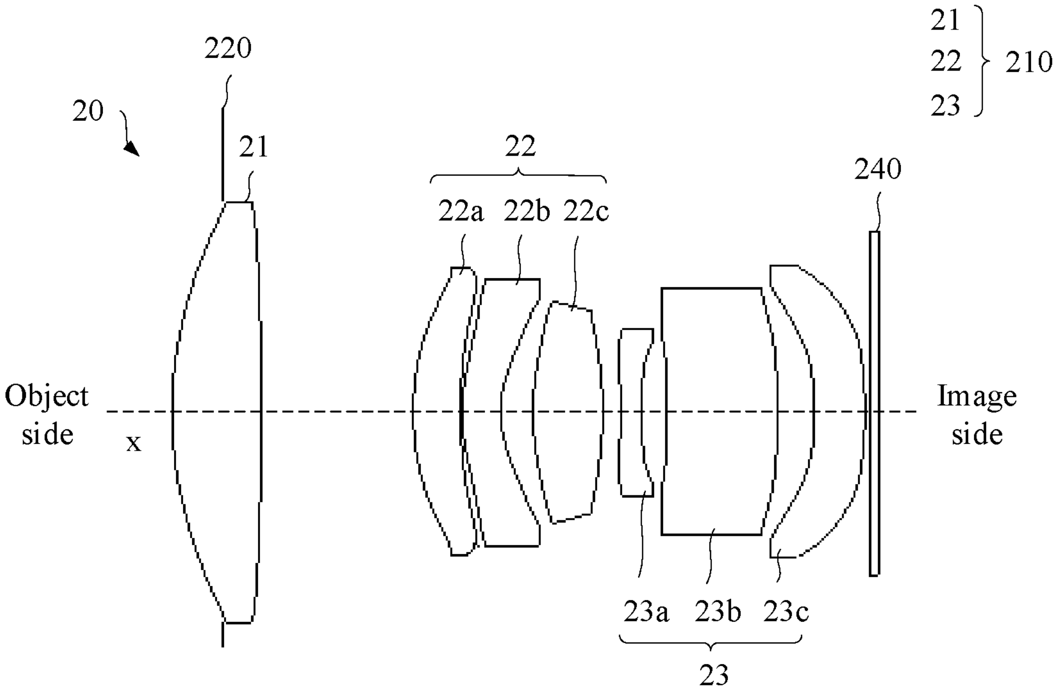
21
22
23
210
220
20
21
22
22a
22b
22c
240
Object side
x
Image side
23a
23b
23c
23

[FIG. 25]

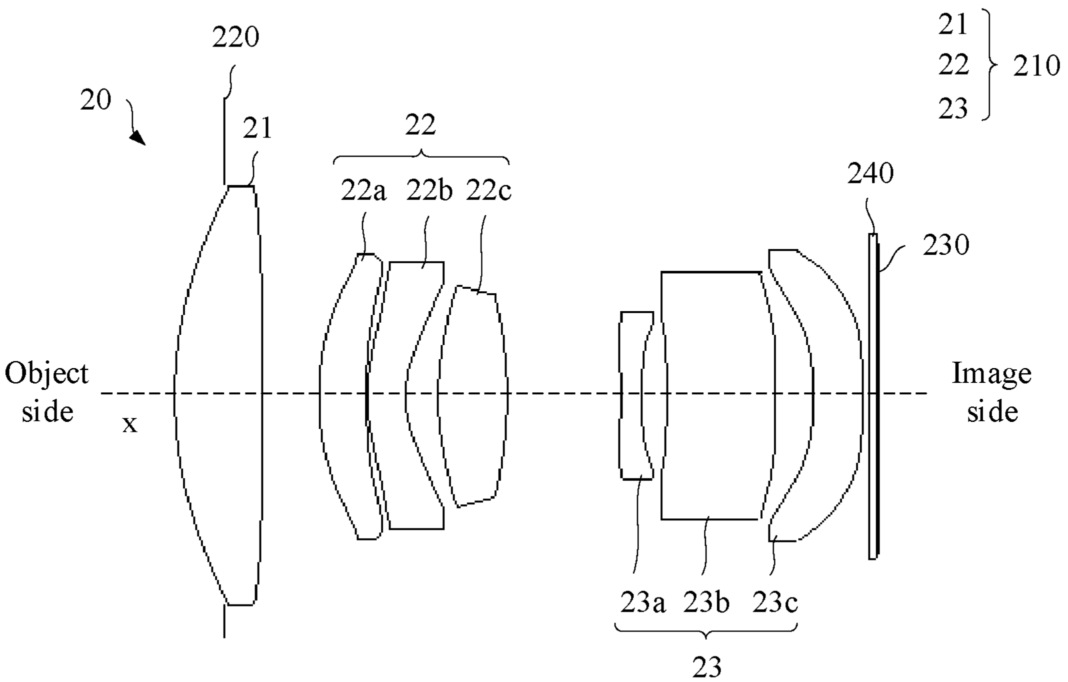
21
22
23
210
220
20
21
22
22a
22b
22c
240
230
Object side
x
Image side
23a
23b
23c
23

[FIG. 26]

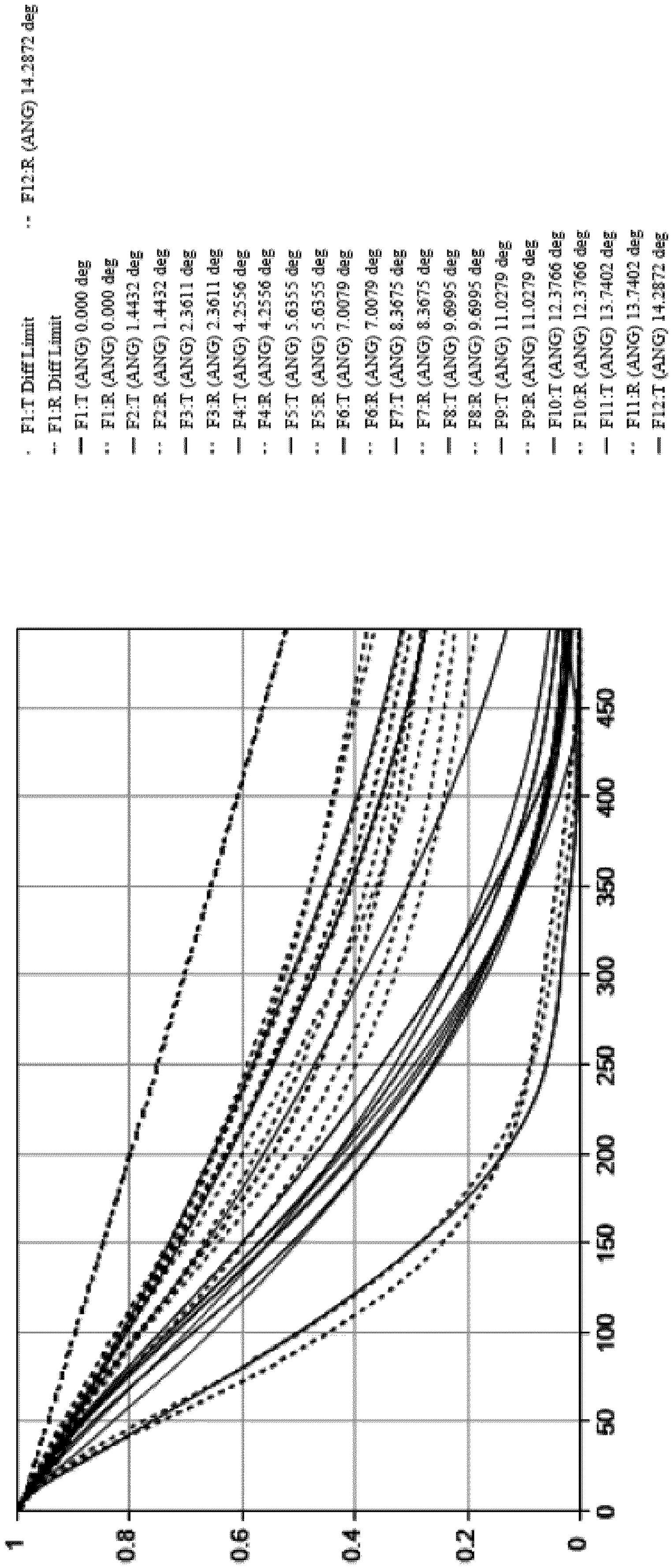

1
0.8
0.6
0.4
0.2
0
0
50
100
150
200
250
300
350
400
450
F1:T Diff Limit
F1:R Diff Limit
F1:T (ANG) 0.000 deg
F1:R (ANG) 0.000 deg
F2:T (ANG) 1.4432 deg
F2:R (ANG) 1.4432 deg
F3:T (ANG) 2.3611 deg
F3:R (ANG) 2.3611 deg
F4:T (ANG) 4.2556 deg
F4:R (ANG) 4.2556 deg
F5:T (ANG) 5.6355 deg
F5:R (ANG) 5.6355 deg
F6:T (ANG) 7.0079 deg
F6:R (ANG) 7.0079 deg
F7:T (ANG) 8.3675 deg
F7:R (ANG) 8.3675 deg
F8:T (ANG) 9.6995 deg
F8:R (ANG) 9.6995 deg
F9:T (ANG) 11.0279 deg
F9:R (ANG) 11.0279 deg
F10:T (ANG) 12.3766 deg
F10:R (ANG) 12.3766 deg
F11:T (ANG) 13.7402 deg
F11:R (ANG) 13.7402 deg
F12:T (ANG) 14.2872 deg
F12:R (ANG) 14.2872 deg

[FIG. 27]

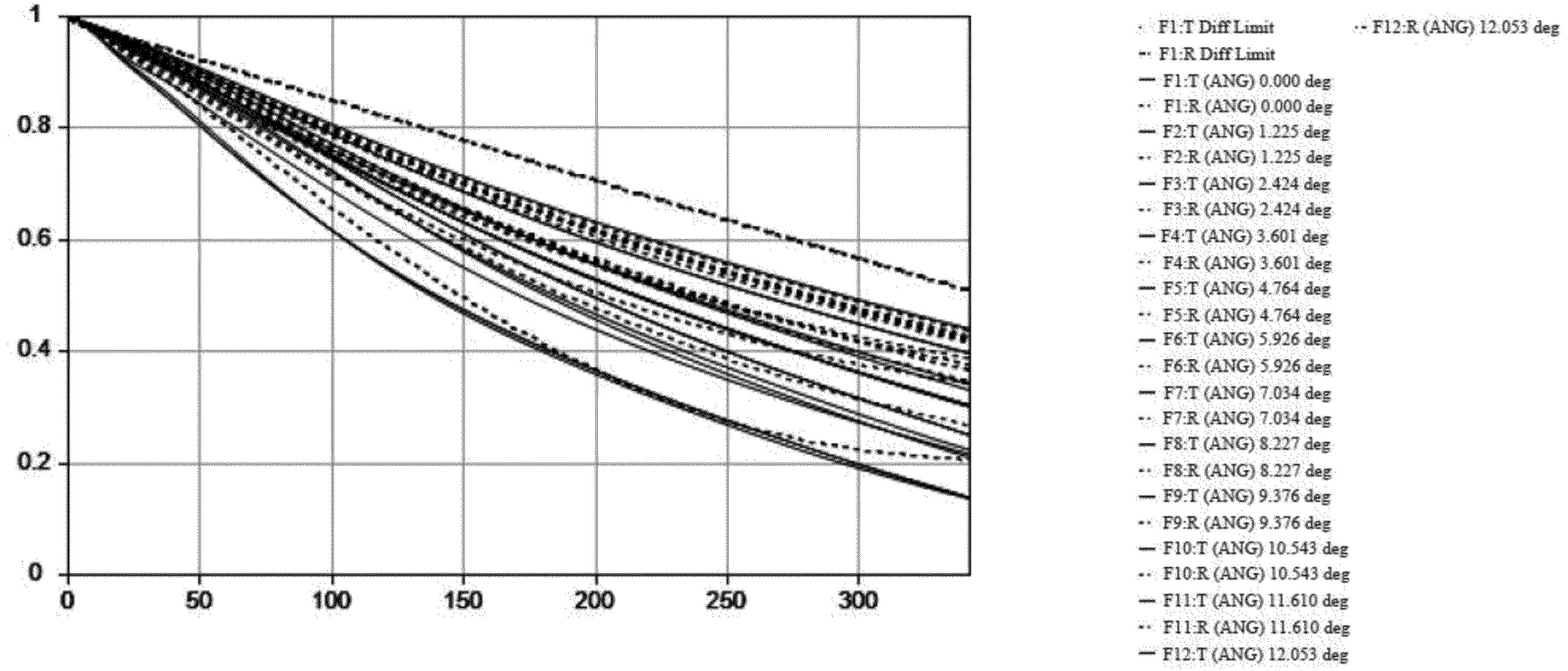
1
0.8
0.6
0.4
0.2
0
0
50
100
150
200
250
300
F1:T Diff Limit
F1:R Diff Limit
F1:T (ANG) 0.000 deg
F1:R (ANG) 0.000 deg
F2:T (ANG) 1.225 deg
F2:R (ANG) 1.225 deg
F3:T (ANG) 2.424 deg
F3:R (ANG) 2.424 deg
F4:T (ANG) 3.601 deg
F4:R (ANG) 3.601 deg
F5:T (ANG) 4.764 deg
F5:R (ANG) 4.764 deg
F6:T (ANG) 5.926 deg
F6:R (ANG) 5.926 deg
F7:T (ANG) 7.034 deg
F7:R (ANG) 7.034 deg
F8:T (ANG) 8.227 deg
F8:R (ANG) 8.227 deg
F9:T (ANG) 9.376 deg
F9:R (ANG) 9.376 deg
F10:T (ANG) 10.543 deg
F10:R (ANG) 10.543 deg
F11:T (ANG) 11.610 deg
F11:R (ANG) 11.610 deg
F12:T (ANG) 12.053 deg
F12:R (ANG) 12.053 deg

[FIG. 28]

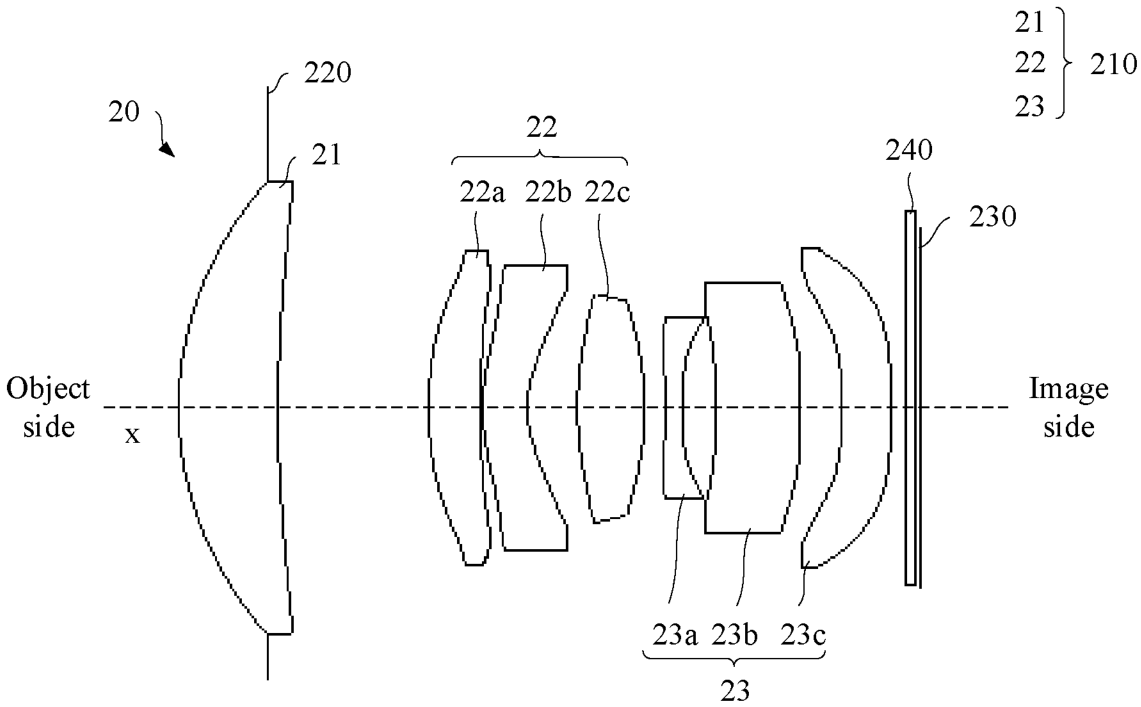
21
22
23
210
220
20
21
22
22a 22b 22c
240
230
Object side
x
Image side
23a 23b 23c
23

[FIG. 29]

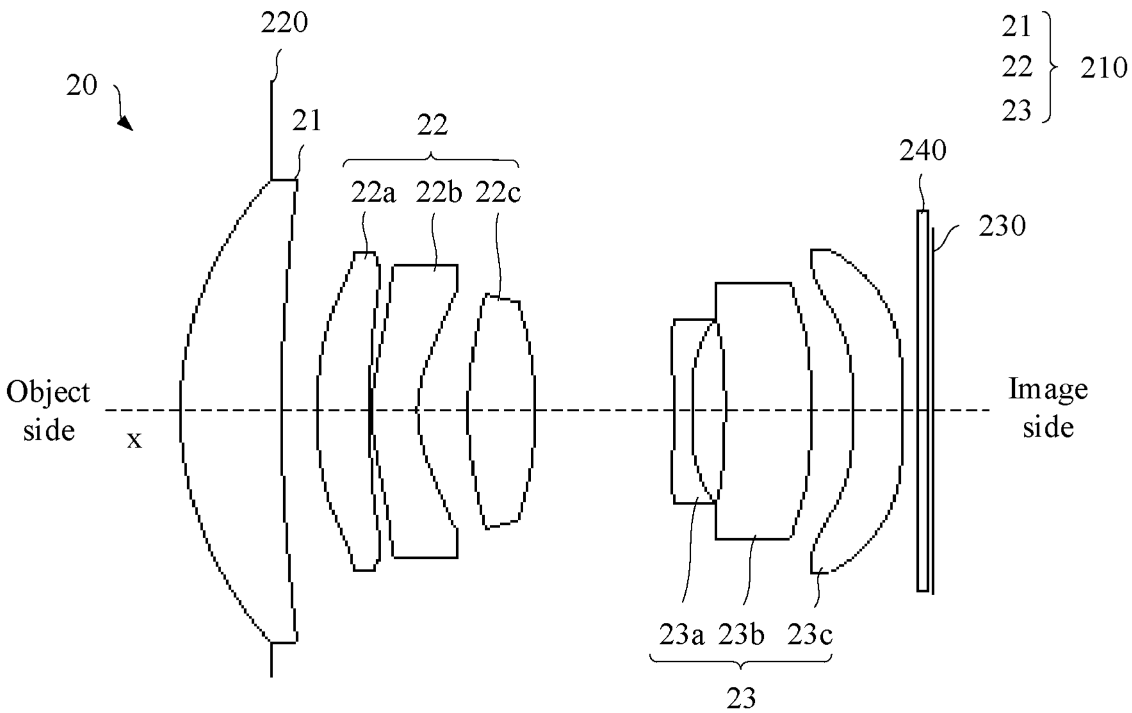
220
21
22
23
210
20
21
22
22a 22b 22c
240
230
Object side
x
Image side
23a 23b 23c
23

[FIG. 30]

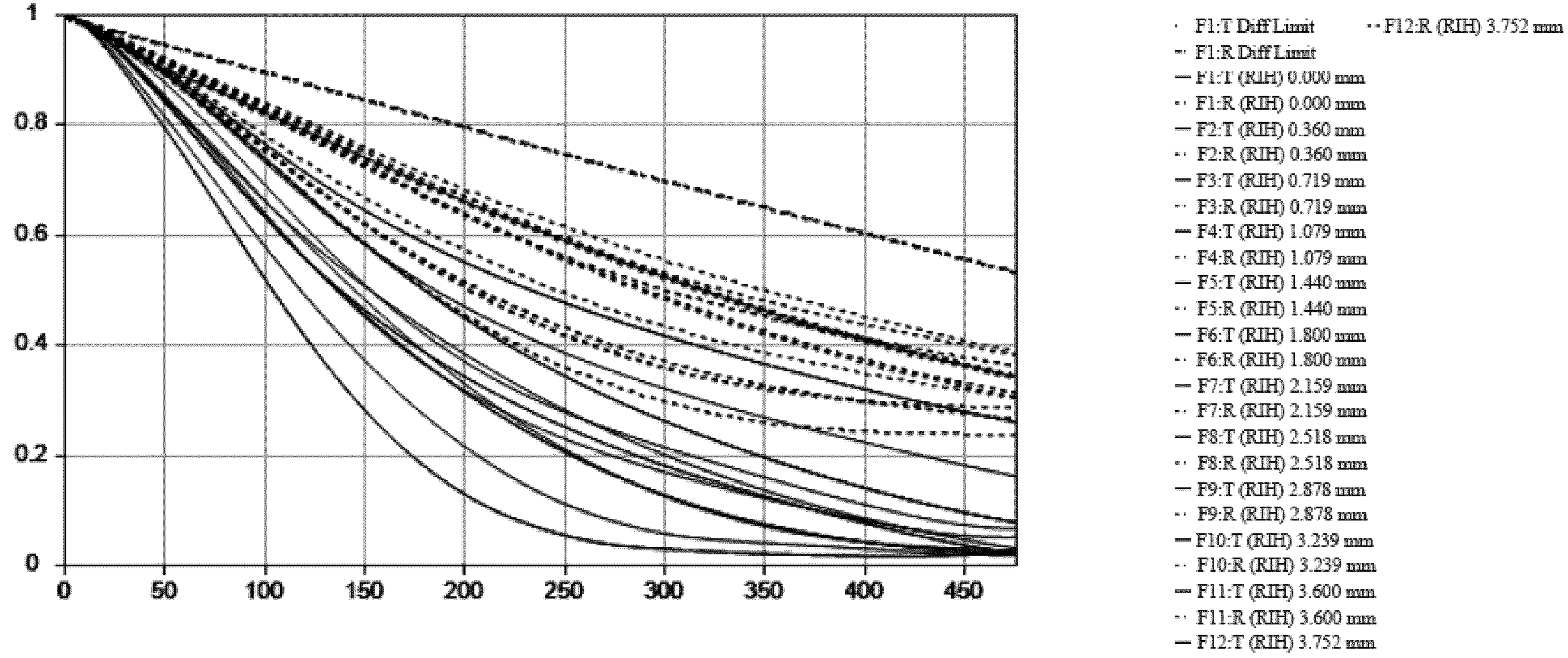
1
0.8
0.6
0.4
0.2
0
0
50
100
150
200
250
300
350
400
450
F1:T Diff Limit
F1:R Diff Limit
F1:T (RIH) 0.000 mm
F1:R (RIH) 0.000 mm
F2:T (RIH) 0.360 mm
F2:R (RIH) 0.360 mm
F3:T (RIH) 0.719 mm
F3:R (RIH) 0.719 mm
F4:T (RIH) 1.079 mm
F4:R (RIH) 1.079 mm
F5:T (RIH) 1.440 mm
F5:R (RIH) 1.440 mm
F6:T (RIH) 1.800 mm
F6:R (RIH) 1.800 mm
F7:T (RIH) 2.159 mm
F7:R (RIH) 2.159 mm
F8:T (RIH) 2.518 mm
F8:R (RIH) 2.518 mm
F9:T (RIH) 2.878 mm
F9:R (RIH) 2.878 mm
F10:T (RIH) 3.239 mm
F10:R (RIH) 3.239 mm
F11:T (RIH) 3.600 mm
F11:R (RIH) 3.600 mm
F12:T (RIH) 3.752 mm
F12:R (RIH) 3.752 mm

[FIG. 31]

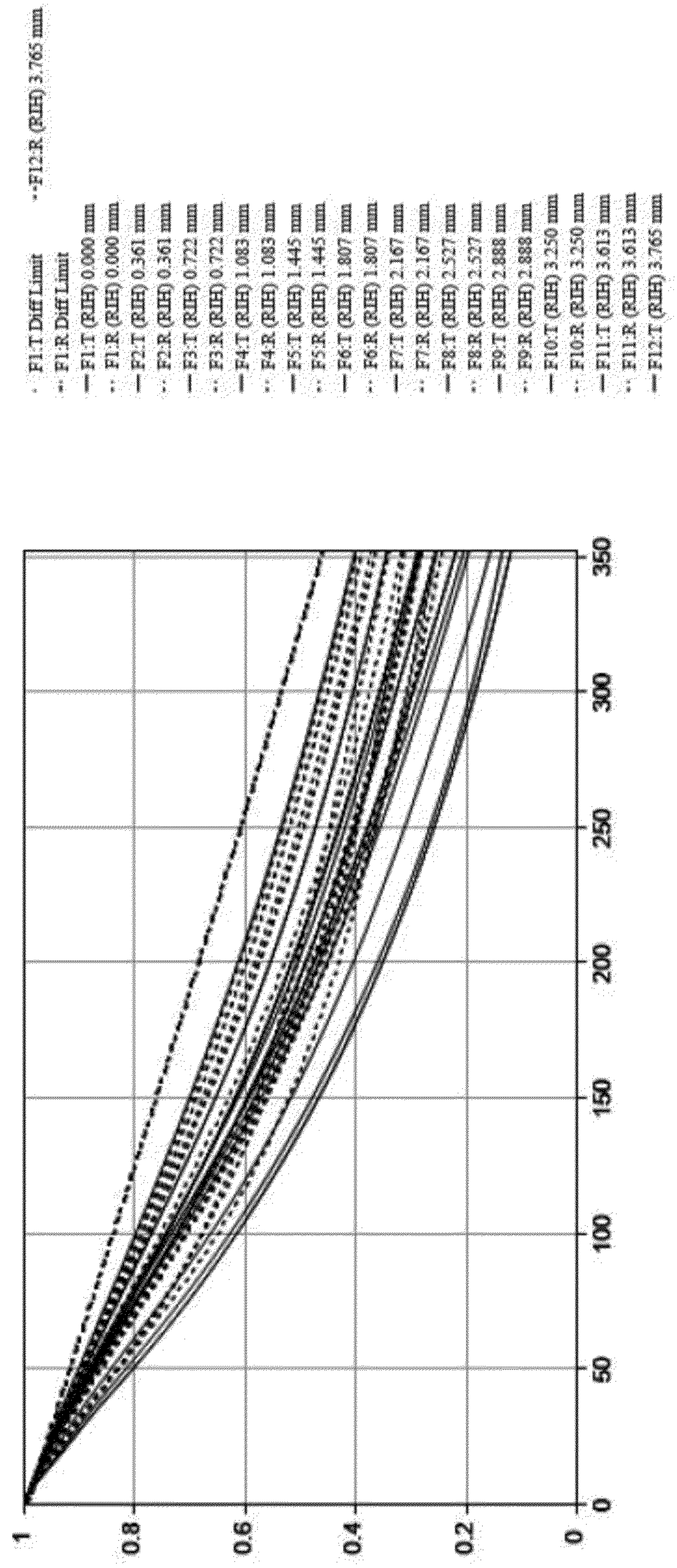

1
0.8
0.6
0.4
0.2
0
0
50
100
150
200
250
300
350
F1:T Diff Limit
F1:R Diff Limit
F1:T (RIH) 0.000 mm
F1:R (RIH) 0.000 mm
F2:T (RIH) 0.361 mm
F2:R (RIH) 0.361 mm
F3:T (RIH) 0.722 mm
F3:R (RIH) 0.722 mm
F4:T (RIH) 1.083 mm
F4:R (RIH) 1.083 mm
F5:T (RIH) 1.445 mm
F5:R (RIH) 1.445 mm
F6:T (RIH) 1.807 mm
F6:R (RIH) 1.807 mm
F7:T (RIH) 2.167 mm
F7:R (RIH) 2.167 mm
F8:T (RIH) 2.527 mm
F8:R (RIH) 2.527 mm
F9:T (RIH) 2.888 mm
F9:R (RIH) 2.888 mm
F10:T (RIH) 3.250 mm
F10:R (RIH) 3.250 mm
F11:T (RIH) 3.613 mm
F11:R (RIH) 3.613 mm
F12:T (RIH) 3.765 mm
F12:R (RIH) 3.765 mm

[FIG. 32]

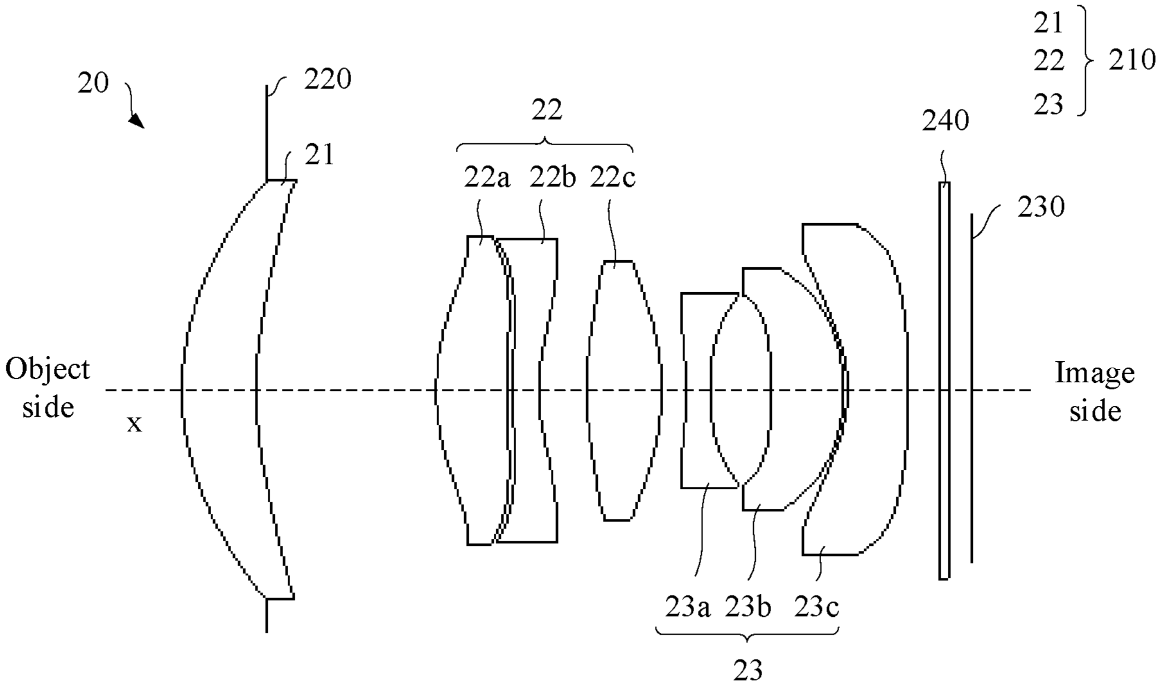
20
220
21
22
22a 22b 22c
21
22
23
210
240
230
Object side
x
Image side
23a 23b 23c
23

[FIG. 33]

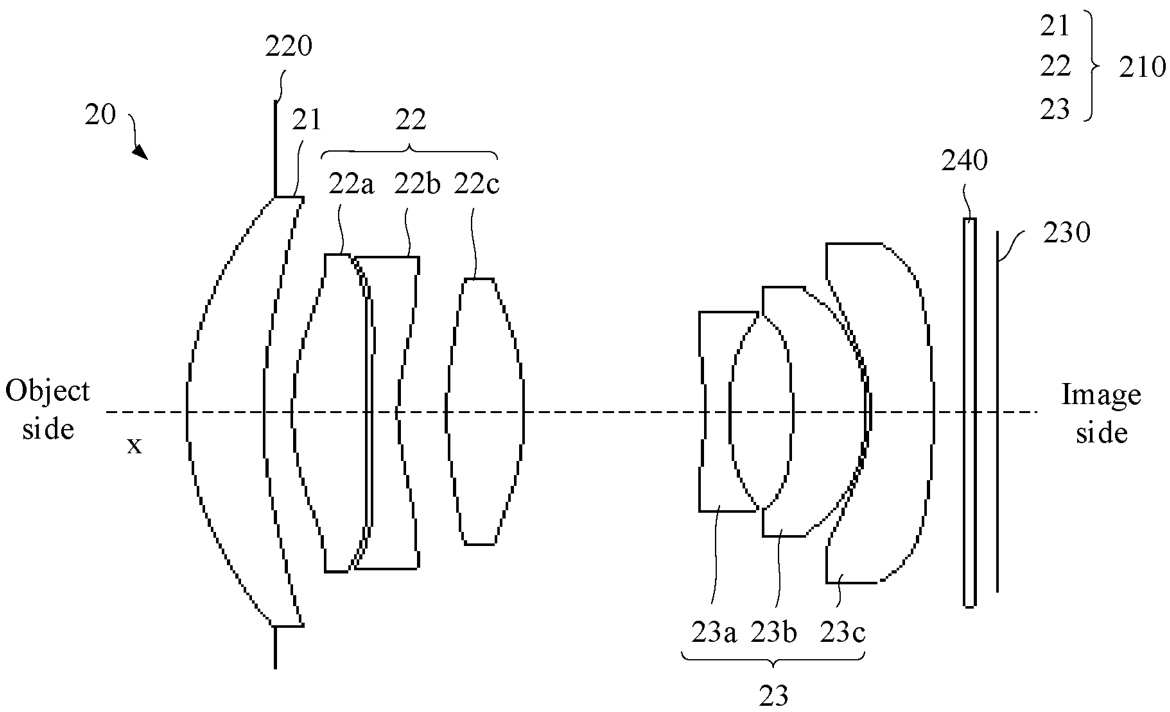
220
20
21
22
22a 22b 22c
21
22
23
210
240
230
Object side
x
Image side
23a 23b 23c
23

[FIG. 34]

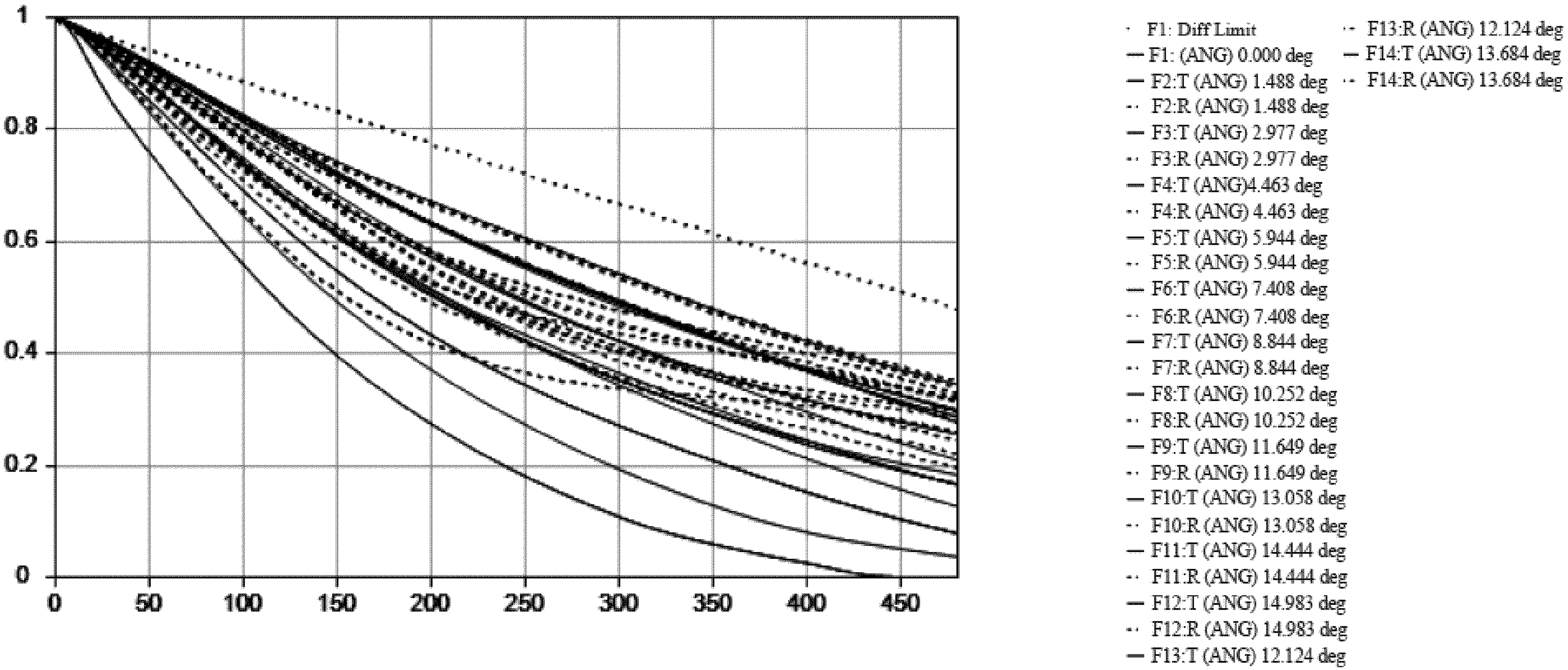
1
0.8
0.6
0.4
0.2
0
0
50
100
150
200
250
300
350
400
450
F1: Diff Limit
F1: (ANG) 0.000 deg
F2:T (ANG) 1.488 deg
F2:R (ANG) 1.488 deg
F3:T (ANG) 2.977 deg
F3:R (ANG) 2.977 deg
F4:T (ANG)4.463 deg
F4:R (ANG) 4.463 deg
F5:T (ANG) 5.944 deg
F5:R (ANG) 5.944 deg
F6:T (ANG) 7.408 deg
F6:R (ANG) 7.408 deg
F7:T (ANG) 8.844 deg
F7:R (ANG) 8.844 deg
F8:T (ANG) 10.252 deg
F8:R (ANG) 10.252 deg
F9:T (ANG) 11.649 deg
F9:R (ANG) 11.649 deg
F10:T (ANG) 13.058 deg
F10:R (ANG) 13.058 deg
F11:T (ANG) 14.444 deg
F11:R (ANG) 14.444 deg
F12:T (ANG) 14.983 deg
F12:R (ANG) 14.983 deg
F13:T (ANG) 12.124 deg
F13:R (ANG) 12.124 deg
F14:T (ANG) 13.684 deg
F14:R (ANG) 13.684 deg

[FIG. 35]

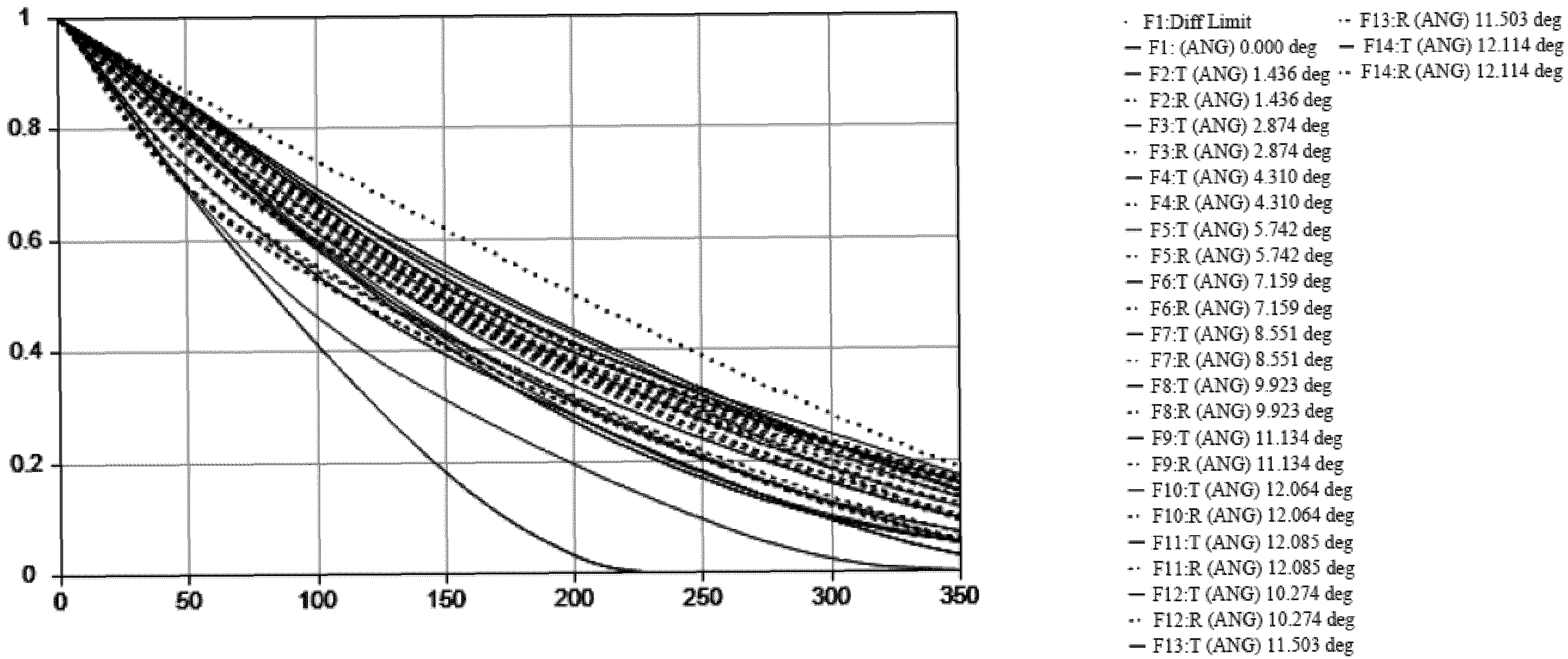
1
0.8
0.6
0.4
0.2
0
0
50
100
150
200
250
300
350
F1:Diff Limit
F1: (ANG) 0.000 deg
F2:T (ANG) 1.436 deg
F2:R (ANG) 1.436 deg
F3:T (ANG) 2.874 deg
F3:R (ANG) 2.874 deg
F4:T (ANG) 4.310 deg
F4:R (ANG) 4.310 deg
F5:T (ANG) 5.742 deg
F5:R (ANG) 5.742 deg
F6:T (ANG) 7.159 deg
F6:R (ANG) 7.159 deg
F7:T (ANG) 8.551 deg
F7:R (ANG) 8.551 deg
F8:T (ANG) 9.923 deg
F8:R (ANG) 9.923 deg
F9:T (ANG) 11.134 deg
F9:R (ANG) 11.134 deg
F10:T (ANG) 12.064 deg
F10:R (ANG) 12.064 deg
F11:T (ANG) 12.085 deg
F11:R (ANG) 12.085 deg
F12:T (ANG) 10.274 deg
F12:R (ANG) 10.274 deg
F13:T (ANG) 11.503 deg
F13:R (ANG) 11.503 deg
F14:T (ANG) 12.114 deg
F14:R (ANG) 12.114 deg

**INTERNATIONAL SEARCH REPORT**

International application No.
**PCT/CN2023/139655**

**A. CLASSIFICATION OF SUBJECT MATTER**

G02B13/00(2006.01)i

According to International Patent Classification (IPC) or to both national classification and IPC

**B. FIELDS SEARCHED**

Minimum documentation searched (classification system followed by classification symbols)

IPC:G02B

Documentation searched other than minimum documentation to the extent that such documents are included in the fields searched

Electronic data base consulted during the international search (name of data base and, where practicable, search terms used)

CNABS, CNTXT, VCN, DWPI, CNKI: (望远 or 长焦 or 无限远 or 远摄 or 无穷远) and (微距 or 微焦 or 近距离 or 近摄 or 近景), (第二透镜组 or 第2透镜组 or G2) 5d 移动, 变焦 or 变倍 or zoom+, 第三透镜组 or 第3透镜组 or G3, 焦距, infinity, close

**C. DOCUMENTS CONSIDERED TO BE RELEVANT**

| Category* | Citation of document, with indication, where appropriate, of the relevant passages | Relevant to claim No. |
|---|---|---|
| X | JP 2020052118 A (CANON K.K.) 02 April 2020 (2020-04-02)<br>description, paragraphs [0021]-[0058], and figure 9 | 1-5, 8, 12-16 |
| X | CN 111830692 A (TAMRON CO., LTD.) 27 October 2020 (2020-10-27)<br>description, paragraphs [0041]-[0143], and figure 1 | 1-5, 12-16 |
| A | CN 104199177 A (ANHUI CHANGGENG OPTICS TECHNOLOGY CO., LTD.) 10 December 2014 (2014-12-10)<br>entire document | 1-16 |
| A | CN 112532818 A (GUANGDONG OPPO MOBILE TELECOMMUNICATIONS CORP., LTD.) 19 March 2021 (2021-03-19)<br>entire document | 1-16 |
| A | JP 2008145584 A (CANON K.K.) 26 June 2008 (2008-06-26)<br>entire document | 1-16 |
| A | US 2007070523 A1 (FUJINON CORP.) 29 March 2007 (2007-03-29)<br>entire document | 1-16 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 January 2024** | **20 January 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**

International application No.
**PCT/CN2023/139655**

| C. | DOCUMENTS CONSIDERED TO BE RELEVANT | |
|---|---|---|
| Category* | Citation of document, with indication, where appropriate, of the relevant passages | Relevant to claim No. |
| A | US 2009009884 A1 (SONY CORP.) 08 January 2009 (2009-01-08)<br>entire document | 1-16 |
| A | US 2012314305 A1 (SONY CORP.) 13 December 2012 (2012-12-13)<br>entire document | 1-16 |
| A | US 2021191089 A1 (HON HAI PRECISION INDUSTRY CO., LTD.) 24 June 2021 (2021-06-24)<br>entire document | 1-16 |
| A | CN 114966919 A (HUAWEI TECHNOLOGIES CO., LTD.) 30 August 2022 (2022-08-30)<br>entire document | 1-16 |
| A | JP 2009244699 A (NIKON CORP.) 22 October 2009 (2009-10-22)<br>entire document | 1-16 |
| A | JP 2013007853 A (RICOH CO., LTD.) 10 January 2013 (2013-01-10)<br>entire document | 1-16 |

Form PCT/ISA/210 (second sheet) (July 2022)

**INTERNATIONAL SEARCH REPORT**
**Information on patent family members**

International application No.
**PCT/CN2023/139655**

| Patent document cited in search report | | | Publication date (day/month/year) | Patent family member(s) | | | Publication date (day/month/year) |
|---|---|---|---|---|---|---|---|
| JP | 2020052118 | A | 02 April 2020 | JP | 7218132 | B2 | 06 February 2023 |
| CN | 111830692 | A | 27 October 2020 | US | 2020341247 | A1 | 29 October 2020 |
| | | | | US | 11307391 | B2 | 19 April 2022 |
| | | | | JP | 2020181000 | A | 05 November 2020 |
| | | | | JP | 7246240 | B2 | 27 March 2023 |
| CN | 104199177 | A | 10 December 2014 | None | | | |
| CN | 112532818 | A | 19 March 2021 | None | | | |
| JP | 2008145584 | A | 26 June 2008 | JP | 4898408 | B2 | 14 March 2012 |
| US | 2007070523 | A1 | 29 March 2007 | JP | 2007093961 | A | 12 April 2007 |
| | | | | TW | 200714922 | A | 16 April 2007 |
| | | | | US | 7292395 | B2 | 06 November 2007 |
| | | | | KR | 20070036006 | A | 02 April 2007 |
| | | | | KR | 100821586 | B1 | 15 April 2008 |
| | | | | EP | 1770425 | A1 | 04 April 2007 |
| US | 2009009884 | A1 | 08 January 2009 | TW | 200907406 | A | 16 February 2009 |
| | | | | JP | 2008203449 | A | 04 September 2008 |
| US | 2012314305 | A1 | 13 December 2012 | JP | 2012255841 | A | 27 December 2012 |
| | | | | US | 8995065 | B2 | 31 March 2015 |
| US | 2021191089 | A1 | 24 June 2021 | TW | 202125031 | A | 01 July 2021 |
| | | | | TWI | 748354 | B | 01 December 2021 |
| CN | 114966919 | A | 30 August 2022 | None | | | |
| JP | 2009244699 | A | 22 October 2009 | JP | 5391565 | B2 | 15 January 2014 |
| JP | 2013007853 | A | 10 January 2013 | JP | 5716569 | B2 | 13 May 2015 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202211697922